# EUROPEAN PATENT APPLICATION

(11) **EP 4 769 281 A2**
(43) Date of publication of application: **01.07.2026**
(21) Application number: 26177295.8
(22) Date of filing: 17.08.2020
(51) Int. Cl.: G06Q 30/0283

(54) **MULTI-MODAL TRANSPORTATION SYSTEM**

(30) Priority: 07.10.2019 US 201916595387; 07.10.2019 US 201916595394; 07.10.2019 US 201916595399; 07.10.2019 US 201916595429
(62) Divisional of application: 20875579.3
(71) Applicant: Lyft, Inc., San Francisco, CA 94107 (US)
(72) Inventor: SPIELMAN, Charles Parker, San Francisco, 94107 (US); GULATI, Mayank, San Francisco, 94107 (US); GOOT, Karina, San Francisco, 94107 (US); PHATAK, Priyanka Madhav, San Francisco, 94107 (US); LODICK, Michael Francis, San Francisco, 94107 (US); CHOPRA, Jatin, San Francisco, 94107 (US); QUAID, David Louis Bergman, San Francisco, 94107 (US)
(74) Representative: Meissner Bolte Nürnberg

(57) **Abstract**

Methods and systems for generating, planning, presenting and/or updating multimodal transportation routes are provided.

## Description

### CROSS REFERENCE TO RELATED APPLICATIONS

The present application claims priority to (i) U.S. Application No. 16/595,394, filed October 7, 2019, and titled "TRANSPORTATION ROUTE PLANNING AND GENERATION,"(ii) U.S. Application No. 16/595,429, filed on October 7, 2019, and titled "TRANSPORTATION PROPOSAL FILTRATION, COMPARISON, AND INCONVENIENCE MEASUREMENT," (iii) U.S. Application No. 16/595,387, filed on October 7, 2019, and titled "MULTI-MODAL TRANSPORTATION ROUTE DEVIATION DETECTION AND CORRECTION," and (iv) U.S. Application No. 16/595,399, filed on October 7, 2019, and titled "MULTI-MODAL TRANSPORTATION PROPOSAL GENERATION". The disclosures of these applications are hereby incorporated by reference.

### BACKGROUND

Individuals desiring transportation (e.g., transportation by vehicle) between two locations can submit transportation requests to transportation providers. In particular, users may identify specific locations between which transportation is desired. In response, transportation providers may identify multiple modes of transportation that may be used to transport the user between the identified locations.

### SUMMARY

The present disclosure presents new and innovative systems and methods for generating, planning, presenting, and/or updating multi-modal transportation proposals. In a first aspect, a system is provided that includes a processor and a memory. The memory may store instructions which, when executed by the processor, cause the processor to determine a first route between a starting location of a request for transportation and an ending location of the request for transportation, the first route including a rideable modality and a transit modality. The instructions may further cause the processor to display, on a computing device, indicators of the first route and at least one additional route and provide, by the computing device, directions along the first route upon determining that an indicator of the first route has been selected.

In a second aspect according to the first aspect, the memory stores further instructions which, when executed by the processor, cause the processor to detect that a first dock associated with rideable modality has insufficient available spaces to deposit rideable vehicles.

In a second aspect according to any of the first through second aspects, the memory stores further instructions which, when executed by the processor, cause the processor to present an alert on the computing device indicating that the first dock has insufficient available spaces to deposit rideable vehicles.

In a fourth aspect according to any of the first through third aspects, the memory stores further instructions which, when executed by the processor, cause the processor to generate a second route that replaces at least one of a first segment associated with the rideable modality and a second segment associated with the transit modality and display, on the computing device, an indicator of the second route.

In a fifth aspect according to any of the first through fourth aspects, the second route replaces the first segment with a third segment that ends at a second dock different from the first dock.

In a sixth aspect according to any of the first through fifth aspects, the second segment begins at a first transit station. The second route may replace the second segment with a fourth segment that begins at a second transit station different from the first transit station.

In a seventh aspect according to any of the first through sixth aspects, the rideable modality is associated with a rideable vehicle selected from the group consisting of (i) a docked bicycle, (ii) a dockless bicycle, (iii) a docked scooter, and (iv) a dockless scooter.

In an eighth aspect according to any of the first through seventh aspects, the first route is associated with a first rideable vehicle. The memory may also store further instructions which, when executed by the processor, cause the processor to receive, from the computing device, a request to update the rideable modality to utilize a second rideable vehicle and generate a second route that utilizes the second rideable vehicle.

In a ninth aspect according to any of the first through eighth aspects, the indicator of the first route includes visual indicators of the rideable modality and the transit modality including at least a depiction of a rideable vehicle corresponding to the rideable modality and a depiction of a transit vehicle corresponding to the transit modality.

In a tenth aspect according to any of the first through ninth aspects, the indicator of the first route includes a map depicting the first route.

In an eleventh aspect according to any of the first through tenth aspects, the transit modality is associated with a transit vehicle selected from the group consisting of (i) a train, (ii) a bus, and (iii) a ferry.

In a twelfth aspect, a method is provided that includes determining a first route between a starting location of a request for transportation and an ending location of the request for transportation, the first route including a rideable modality and a transit modality. The method may further include displaying, on a computing device, indicators of the first route and at least one additional route and providing, by the computing device, directions along the first route upon determining that an indicator of the first route has been selected.

In a thirteenth aspect according to the twelfth aspect, the method further includes detecting that a first dock associated with rideable modality has insufficient available spaces to deposit rideable vehicles.

In a fourteenth aspect according to any of the twelfth and thirteenth aspects, the method further includes presenting an alert on the computing device indicating that the first dock has insufficient available spaces to deposit rideable vehicles.

In a fifteenth aspect according to any of the twelfth through fourteenth aspects, the method further includes generating a second route that replaces at least one of a first segment associated with the rideable modality and a second segment associated with the transit modality and displaying, on the computing device, an indicator of the second route.

In a sixteenth aspect according to any of the twelfth through fifteenth aspects, the second route replaces the first segment with a third segment that ends at a second dock different from the first dock.

In a seventeenth aspect according to any of the twelfth through sixteenth aspects, the second segment begins at a first transit station. The second route may replace the second segment with a fourth segment that begins at a second transit station different from the first transit station.

In an eighteenth aspect according to any of the twelfth through seventeenth aspects, the rideable modality is associated with a rideable vehicle selected from the group consisting of (i) a docked bicycle, (ii) a dockless bicycle, (iii) a docked scooter, and (iv) a dockless scooter.

In a nineteenth aspect according to any of the twelfth through eighteenth aspects, the first route is associated with a first rideable vehicle. The method may further include receiving, from the computing device, a request to update the rideable modality to utilize a second rideable vehicle and generating a second route that utilizes the second rideable vehicle.

In a twentieth aspect, non-transitory, computer-readable medium is provided storing instructions which, when executed by a processor, cause the processor to determine a first route between a starting location of a request for transportation and an ending location of the request for transportation, the first route including a rideable modality and a transit modality. The instructions may further cause the processor to display, on a computing device, indicators of the first route and at least one additional route and provide, by the computing device, directions along the first route upon determining that an indicator of the first route has been selected.

The features and advantages described herein are not all-inclusive and, in particular, many additional features and advantages will be apparent to one of ordinary skill in the art in view of the figures and description. Moreover, it should be noted that the language used in the specification has been principally selected for readability and instructional purposes, and not to limit the scope of the disclosed subject matter.

### BRIEF DESCRIPTION OF THE FIGURES

FIG. 1A illustrates a transportation matching system according to exemplary embodiments of the present disclosure.
FIG. IB illustrates a transportation scenario according to an exemplary embodiment of the present disclosure.
FIG. 2 illustrates a system according to an exemplary embodiment of the present disclosure.
FIGS. 3A-3B illustrate transportation proposals according to exemplary embodiments of the present disclosure.
FIGS. 4A-4B illustrate transportation proposals according to exemplary embodiments of the present disclosure.
FIGS. 5A-5C illustrate transportation proposals according to exemplary embodiments of the present disclosure.
FIG. 6 illustrates a method according to an exemplary embodiment of the present disclosure.
FIG. 7 illustrates a method according to an exemplary embodiment of the present disclosure.
FIGs. 8A-8B illustrate user interfaces according to exemplary embodiments of the present disclosure.
FIG. 9 illustrates a system according to an exemplary embodiment of the present disclosure.
FIG. 10 illustrates a method for ranking transportation proposals, according to an exemplary embodiment of the present disclosure.
FIG. 11 illustrates a method for calculating a proposal score, according to an exemplary embodiment of the present disclosure.
FIG. 12 illustrates a system according to an exemplary embodiment of the present disclosure.
FIGS. 13A-13I illustrate a transportation proposal generation procedure according to an exemplary embodiment of the present disclosure.
FIG. 14 illustrates a method according to an exemplary embodiment of the present disclosure.
FIG. 15 illustrates a method according to an exemplary embodiment of the present disclosure.
FIG. 16 illustrates a system according to an exemplary embodiment of the present disclosure.
FIG. 17 illustrates a method according to an exemplary embodiment of the present disclosure.
FIG. 18 illustrates a method according to an exemplary embodiment of the present disclosure.
FIG. 19 illustrates a computer system according to an exemplary embodiment of the present disclosure.

### DETAILED DESCRIPTION OF EXAMPLE EMBODIMENTS

### Introduction

Various processes and systems currently exist for determining transportation proposals that identify transportation routes between two locations, such as an origin location and a destination location. For example, many transportation providers use such processes and systems to provision vehicles for transporting users from a first, starting location, to a second, ending location. Transportation providers may include transportation networking companies (TNCs). TNCs may implement a transportation system that matches transportation requests with a dynamic transportation network of vehicles. In certain instances, the vehicles may include road-going vehicles and/or personal mobility vehicles. In some examples, some of the vehicles may be standard commercially available vehicles and some of the vehicles may be owned and/or operated by individuals. In some implementations, the vehicles may additionally or alternatively be autonomous (or partly autonomous). Accordingly, throughout the instant disclosure, references to a "vehicle operator" (or an "operator") may, where appropriate, refer to a human driving a vehicle, an autonomous vehicle control system, an autonomous vehicle, an owner of an autonomous vehicle, an operator of an autonomous vehicle, an attendant of an autonomous vehicle, a requesting user piloting a vehicle, and/or an autonomous system for piloting a vehicle. In one example, the TNC may implement multiple transportation systems, where each transportation system is responsible for coordinating transportation matching for a specific geographic region or set number of vehicles.

The transportation system may communicate with computing devices associated with the vehicles in the network, which may be separate computing devices and/or may be computing devices that are integrated into the respective vehicles. In some examples, one or more of the computing devices may be mobile devices, such as a smart phone. Additionally or alternatively, one or more of the computing devices may be tablet computers, personal digital assistants, or any other type or form of mobile computing device. Additionally, one or more of the computing devices may include wearable computing devices (e.g., a driver-wearable computing device), such as smart glasses, smart watches, etc. In some examples, one or more of the computing devices may be devices suitable for temporarily mounting in a vehicle (e.g., for use by a requestor and/or an operator for a transportation matching application, a navigation application, and/or any other application suited for use by requestors and/or operators). Additionally or alternatively, one or more of the computing devices may be devices suitable for installing in a vehicle and/or may be a vehicle's computer that has a transportation management system application installed on the computer to provide transportation services to transportation requestors and/or communicate with the transportation system.

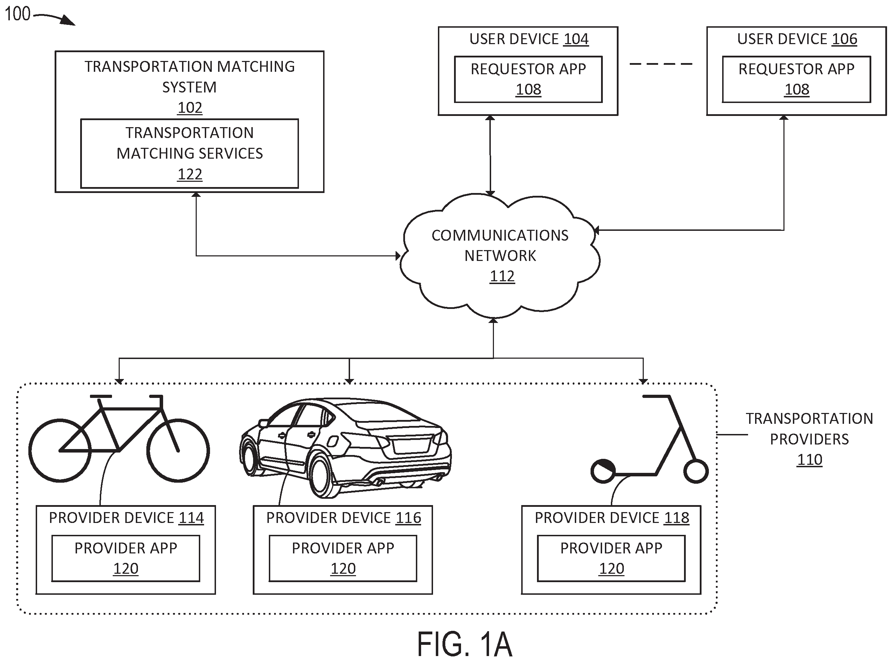

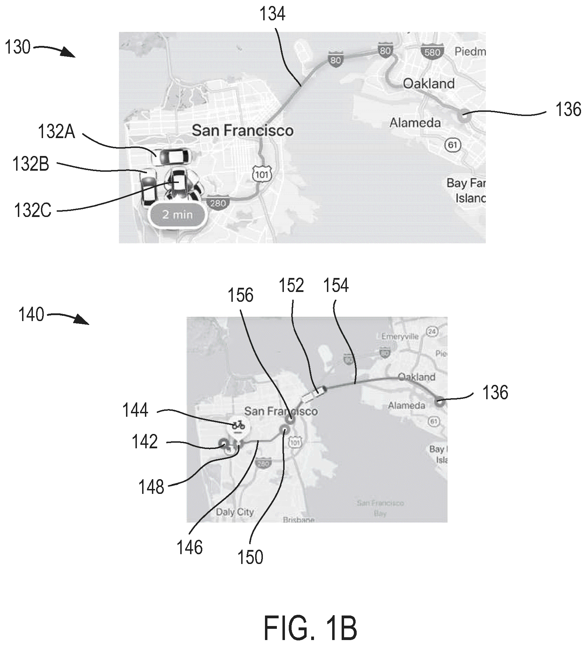

FIG. 1A illustrates an example system 100 for matching transportation requests to a network of transportation vehicles according to one embodiment of the present disclosure. As illustrated, a transportation matching system 102 may communicate with user devices 104-106 requesting transportation. In some examples, the user devices 104-106 requesting transportation may include a requestor app 108 implemented by the transportation provider. The requestor app 108 may represent any application, program, and/or module that may provide one or more services related to requesting transportation services. For example, the requestor app 108 may include a transportation matching application for requestors. In some examples, the requestor app may match the user of the requestor app 108 (e.g., a transportation requestor) with transportation providers 110 through communication with the transportation matching system 102 via the communications network 112. In addition, the requestor app 108 may provide the transportation matching system 102 with information about a requestor (including, e.g., the current location of the requestor) to enable the transportation matching system 102 to provide dynamic transportation matching services for the requestor and one or more transportation providers 110, each of which may include a provider device 114, 116, 118. Each provider device may include a provider app 120, which may be any application program and/or set of instructions that may provide one or more services related to operating a vehicle and/or providing transportation matching services in conjunction with the transportation matching system 102 and the requestor app 108.

In some examples, the requestor app 108 may coordinate communications and/or a payment between a requestor and a transportation provider 110. According to some embodiments, the requestor app 108 may provide a map service, a navigation service, a traffic notification service, and/or a geolocation service. The provider app 120 may provide similar functions. In other implementations, the requestor app 108 may allow users to request access to certain vehicles, such as personal mobility vehicles (e.g., bikes and/or scooters).

The transportation matching system 102 may arrange transportation on an on-demand and/or ad-hoc basis by, e.g., matching one or more transportation requestors with one or more transportation providers 110 For example, the transportation matching system 102 may provide one or more transportation matching services 122 for a networked transportation service, a ridesourcing service, a taxicab service, an automobile-booking service, an autonomous vehicle service, a personal mobility vehicle service, or some combination and/or derivative thereof. The transportation matching system 102 may include and/or interface with any of a variety of subsystems that may implement, support, and/or improve the transportation matching services 122. For example, the transportation matching services 122 may include or otherwise interface with a matching system (e.g., that matches requestors to ride opportunities and/or that arranges for requestors and/or providers to meet), a mapping system, a routing system (e.g., to help a provider reach a requestor, to help a requestor reach a provider, and/or to help a provider reach a destination), a rating system (e.g., to rate and/or gauge the trustworthiness of a requestor and/or a provider), a payment system, and/or an autonomous or semi-autonomous driving system. The transportation matching system 102 may be implemented on various platforms, including a requestor-owned mobile device, a computing system installed in a vehicle, a server computer system, or any other hardware platform capable of providing transportation matching services to one or more requestors and/or providers.

Existing transportation matching systems are typically configured to identify and provide a particular modality of transportation between starting and ending locations. For example, FIG. IB depicts a transportation route 130 identifying a particular modality of transportation between a starting location (not labelled) and an ending location 136. The transportation route 130 includes a single transportation segment 134 between the starting location and the ending location 136. The transportation segment 134, as generated, is to be serviced by one of the automobiles 132A-C. For example, a user requesting transportation from the starting location to the ending location 136 may be picked up by one of the automobiles 132A-C and driven along the route indicated by the transportation segment 134 to the ending location 136.

In certain implementations, the transportation matching system may analyze and/or recommend transportation routes using modalities other than automobiles. For example, where the starting location and ending location 136 are closer together (e.g., shorter rides), the transportation matching system may generate transportation routes that utilize a personal mobility vehicle (e.g., a bike or a scooter). As another example, the transportation matching system may determine that a given starting location and/or ending location 136 are near transit stops for public transportation systems. In such a scenario, the transportation matching system may generate a transportation route from the starting location that utilizes a public transportation modality (e.g., a bus or a train).

Typical transportation matching systems, however, may not be able to generate transportation routes that combine multiple modalities into a single transportation proposal. Therefore, such transportation matching systems cannot capture cost or time savings associated with combining multiple modalities into a single transportation proposal. For example, in certain instances (e.g., during rush hour traffic), automobile-based modalities may be comparatively slower than other modalities, such as bikes or scooters. As another example, during rush hour or periods of high road congestion, it may be faster to take the train (i.e., use a public transit modality) between the two locations rather than to drive (i.e., use an automobile modality) between the two locations. In such a scenario, existing transportation matching systems may recommend public transportation modalities between starting and ending locations for users located near transit stops. But such a recommendation may not be useful for all users. For instance, users that are not in close proximity to a transit stop may have to walk long distances over a significant amount of time to access the transit stop from their starting location. Alternatively, such users may have to walk long distances over a significant amount of time to leave a transit stop and arrive at their ending location. In either scenario, using public transportation may be slower than traveling by automobile. Such users may therefore be recommended transportation routes using automobiles, such as the automobiles 132A-C.

Nevertheless, even users located far away from public transportation may receive faster transportation if they were able to use other modalities for transportation to the transit stops. For example, FIG. IB also depicts a transportation route 140 for transportation between starting location 142, which corresponds to the starting location of the transportation route 130, and ending location 136. Rather than fulfilling the entire transportation route 140 with a single modality as in the transportation route 130, the transportation route 140 includes two transportation segments 146, 154 fulfilled by two different modalities (e.g., two different types of vehicles 144, 152). In particular, transportation segment 146 is fulfilled by bike 144 and transportation segment 154 is fulfilled by train 152. While following the transportation route 140, a user may walk from starting location 142 to location 148 at the beginning of the transportation segment 146 and pick up a bike 144 (e.g., a docked or dockless bike available for short term rental and/or use). The user can then ride the bike 144 from the location 148 to the location 150 at the end of the transportation segment 146 and drop off the bike 144 (e.g., at a bike dock or bike rack) before walking to location 156 at the start of segment 154. The location 156 may correspond to a transit station (e.g., a train station), and the user may board the train 152 for transportation to the ending location 136 at the end of the segment 154.

### Transportation Route Planning and Generation

By generating transportation routes with multiple modalities, the transportation matching system may combine the benefits of each type of modality. For example, bikes, scooters, and/or walking may be optimal for traveling short or medium distances (e.g., first-mile and last-mile legs of multi-modal transportation proposals), while automobiles and trains may be better for longer distances. Similarly, automobiles may be more flexible in scheduling and routing, but may be more expensive, while trains and buses may be less flexible but also less expensive. By combining any one of these modalities into a single transportation proposal, transportation routes such as the transportation route 140 may capitalize on the relative benefits of each type of modality. For example, during rush hour or periods of high road congestion, the transportation route 140 may be able to allow more users to quickly and conveniently access faster and less expensive transportation via trains 152 (in comparison to automobiles). In another example, transportation by automobile may be faster and easier if disparate passengers meet at a common pick-up location, or if new passengers travel to pick-up locations closer to an existing route for an operator. In such instances, transportation proposals can be generated that identify transportation routes that guide users to use personal mobility vehicles for transportation to such pick-up locations.

Therefore, there exists a need to generate transportation routes that utilize different modalities. Additionally, these transportation routes have to be generated quickly (e.g., in real time) to allow for subsequent processing after generation of the transportation routes (e.g., filtering and ranking) and before presentation of the transportation routes to a user. In particular, transportation routes that utilize different modalities may have to be generated and stored with enough information to enable users, interested in pursuing the transportation routes, to successfully follow the actions required to complete the route (e.g., use a specific modality along a specific route).

One solution to this problem is to automatically generate and store a transportation proposal for transportation between designated locations. The transportation proposal may include transportation segments, which may correspond to segments of a transportation route between the designated locations. The transportation segments may also correspond to different modalities for transportation. In certain instances, the transportation segments may also include transportation actions that specify actions required to follow the transportation proposal.

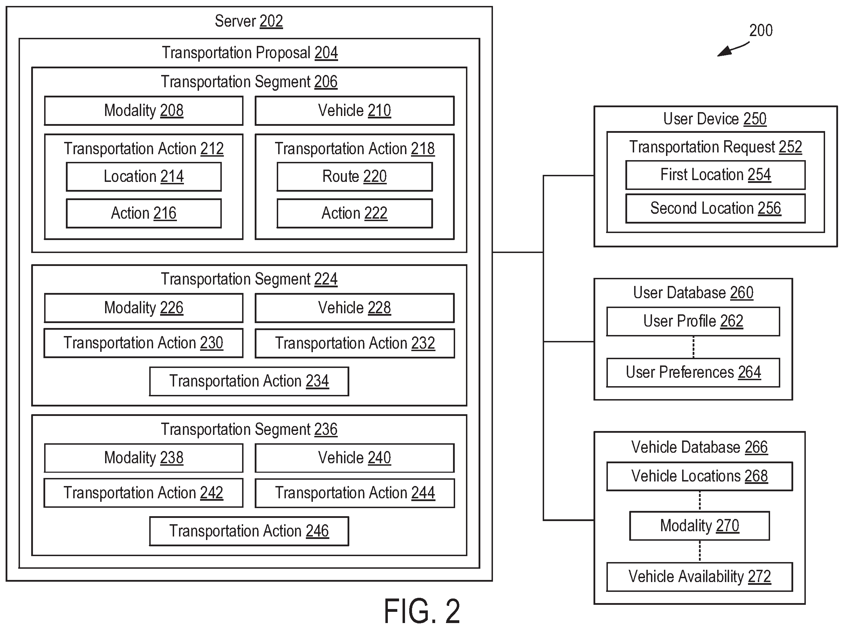

FIG. 2 depicts a system 200 according to an exemplary embodiment of the present disclosure. The system 200 may be configured to receive and process transportation requests and to generate transportation proposals for providing transportation according to the transportation requests. In particular, the system 200 may be configured to generate transportation proposals that utilize more than one modality to fulfill the transportation request. The system 200 includes a server 202, a user device 250, a user database 260, and a vehicle database 266.

The user device 250 may be configured to generate transportation requests 252 and to transmit the transportation requests to the server 202 (e.g., via a network connection). The user device 250 may include one or more computing devices, such as a smart phone, computer, tablet computer, and/or wearable computing device. The transportation requests 252 may specify a first location 254 and a second location 256. For example, the transportation request 252 may request transportation from the first location 254 (e.g., an origin location) to the second location 256 (e.g., a destination location).

The server 202 may be configured to receive the transportation requests 252 from the user device 250 and to generate a transportation proposal 204 that may specify one or more routes, options, plans, itineraries, and/or selections for transportation that fulfills the transportation request 252. In one example, the transportation proposal 204 may provision and/or provide details for transportation from the first location 254 to the second location 256, as specified in the transportation request 252.

In some instances, the transportation proposal 204 may include one or more transportation segments 206, 224, 236, which may correspond to different steps or subsets of transportation between the first location 254 and the second location 256. Each transportation segment 206, 224, 236 may have a corresponding modality 208, 226, 238 and/or vehicle 210, 228, 240. The modalities 208, 226, 238 may specify a type of transportation. For example, the modalities 208, 226, 238 may include one or more of transportation by automobile, transportation by bus, transportation by train, transportation by personal mobility vehicle, and transportation by walking. Transportation by a personal mobility vehicle may include transportation by vehicles capable of transporting individual users. Transportation by a personal mobility vehicle may include transportation by rideable vehicles, such as transportation by scooter and transportation by bike, may include transportation by a docked vehicle (e.g., a vehicle that has to be accessed from and returned to docks in fixed locations) and/or transportation by an undocked or dockless vehicle (e.g., a vehicle that does not have to be returned to docks).

Each of the transportation segments 206, 224, 236 includes a vehicle 210, 228, 240. The vehicles 210, 228, 240 may be associated with the modality 208, 226, 238 (e.g., may be vehicles 210, 228, 240 of the type specified by the modality 208, 226, 238) and may be selected to provide transportation to fulfill at least a portion of the transportation proposal 204 associated with the transportation segments 206, 224, 236. For example, the vehicles 210, 228, 240 may include one or more of an automobile (e.g., an autonomous automobile, a semi-autonomous automobile, and/or an automobile operated by a vehicle operator), a train, a bus, a boat, a ferry, a bike (e.g., a docked or dockless bike), and a scooter. In certain implementations, the vehicle 210, 228, 240 may identify a specific vehicle for use in fulfilling the transportation segments 206, 224, 236. In other implementations, the vehicles 210, 228, 240 may specify a location from which a vehicle may be accessed to fulfill the transportation segment (e.g., a dock from which a bike can be accessed, or a transit stop from which a train or bus can be accessed). In certain implementations, one or more transportation segments 206, 224, 236 may not include a vehicle 210, 228, 240. For example, where the modality 208, 226, 238 of a transportation segment 206, 224, 236 is transportation by walking, the transportation segment 206, 224, 236 may not specify a vehicle 210, 228, 240 because no vehicle 210, 228, 240 is necessary. As another example, if a transportation segment 206, 224, 236 occurs far enough in the future (e.g., more than 10, 20, or 30 minutes in the future), specific vehicles 210, 228, 240 may not be assigned to service the transportation segment 206, 224, 236 because the locations of any assigned vehicles 210, 228, 240 may change before the transportation segment 206, 224, 236 begins.

The server 202 may identify the vehicles 210, 228, 240 based on the vehicle database 266. In particular, the vehicle database 266 may track and store current (e.g. real time) vehicle locations 268 in association with a modality 270. The vehicle locations 268 may specify current locations for one or more vehicles associated with the modality 270. The vehicle database 266 may also store a vehicle availability 272 in association with the modality 270. The vehicle availability 272 may specify a current availability of vehicles associated with the modality 270. For example, for personal mobility vehicles, the vehicle availability 272 may specify whether the personal mobility vehicles are currently in use. Similarly, for transportation by automobile, the vehicle availability 272 may specify whether the automobile currently has a customer. As another example, for transportation by automobile, the vehicle availability 272 may specify how many passengers the automobile currently has (e.g., whether the automobile has room for additional passengers).

The server 202 may use the vehicle availability 272 and/or modality 270 to select the vehicles 210, 228, 240 for the transportation segments 206, 224, 236. For example, the server 202 may identify vehicles based on the vehicle locations 268 that are located near or between the first location 254 and the second location 256. The server 202 may also determine, based on the vehicle availability 272, which of the vehicles are available to provide transportation in association with the transportation request 252. For example, the server 202 may identify vehicles that are not in use, do not have passengers, and/or will be available to service a request before an anticipated time of a transportation segment 206, 224, 236 as potential vehicles for the transportation segment 206, 224, 236. The server 202 may then select between the potential vehicles to assign the vehicles 210, 228, 240 to the transportation segments 206, 224, 236.

For certain modalities 270, rather than storing locations of the vehicles themselves, the vehicle database 266 may store other types of locations associated with the modality 270. In certain implementations, the vehicle locations 268 may include locations from which vehicles may be accessed. For example, for transportation by bus and/or transportation by train, the vehicle locations 268 may indicate transit stops where a user can board or disembark buses or trains associated with the vehicle locations 268. As another example, for transportation by docked personal mobility vehicle, the vehicle locations 268 may indicate the predefined, fixed locations of docks from which the personal mobility vehicles can be accessed. In such implementations, the vehicle availability 272 may indicate the availability of vehicles at the locations associated with the modality. For example, for transportation by docked bike, the vehicle availability 272 may indicate an availability level (e.g., a number of available bikes or percentage of total bikes available) for the docks located at the vehicle locations 268. As another example, for transportation by dockless bike, the vehicle availability 272 may indicate whether specific bikes are available for user. In still further implementations, the vehicle availability 272 may indicate times at which vehicles are available at the vehicle locations 268. For example, for transportation by bus or transportation by train, the vehicle availability 272 may indicate the times at which buses or trains arrive at and/or depart from the transit locations identified by the vehicle locations 268.

In still further implementations, the vehicle database 266 may store predicted information regarding vehicles associated with modalities 270. For example, the vehicle locations 268 may store predicted future locations of vehicles associated with the modality 270 and the vehicle availability 272 may include predicted future availability of vehicles associated with the modality 270. The server may use this information to identify vehicles 210, 228, 240 or modalities 208, 226, 238 for transportation segments 206, 224, 236 that correspond to future actions. For example, the transportation segments 224, 236 may occur after the transportation segment 206. Accordingly, locations of vehicles associated with the modalities 226, 238 may change during performance of the transportation segment 206. The server 202 may accordingly utilize predicted locations and/or predicted availability to identify vehicles that are expected to be available at the start of transportation segment 224. In certain implementations, rather than identifying specific vehicles 228, 240 when generating the transportation proposal 204, the server 202 may include modalities 226, 238 identifying a type of transportation for certain transportation segments 224, 236 and may select associated vehicles 228, 240 later (e.g., closer to when transportation identified by the transportation segments 224, 236 begins).

Although depicted as storing vehicle locations 268 and vehicle availability 272 in association with a single modality 270, the vehicle database 266 may store such information regarding multiple modalities. For example, the vehicle database 266 may store information regarding each of the modalities discussed above.

The transportation segments 206, 224, 236 may include transportation actions 212, 218, 230, 232, 234, 242, 244, 246, each of which specify one or more actions to be performed by a user or other vehicle operator necessary to provide transportation according to the transportation segment 206, 224, 236. For example, the transportation actions 212, 218 include actions 216, 222. The actions 216, 222 may specify, e.g., actions required to initiate or perform the transportation associated with the transportation segment 206. For example, the transportation action 212 may specify that a user access a bike from a location 214 and the transportation action 218 may specify that the user ride the bike along a particular route 220. The transportation actions 230, 232, 234, 242, 244, 246 may include similar actions and/or information.

In certain embodiments, the transportation proposal 204 may specify transportation according to two or more modalities (i.e., two or more different types of transportation). For example, the modalities 208, 226, 238 of the transportation segments 206, 224, 236 may differ from one another. The server 202 may be configured to select the modalities 208, 226, 238 based on information stored in the vehicle database 266 and/or the user database 260. For example, the server 202 may compare the first location 254 and the second locations 256 to the vehicle location 268 and the vehicle availability 272 to determine whether vehicles are available to service all or part of a transportation route between the first location 254 and the second location 256. The server 202 may also use information stored in the user database 260 to identify modalities for servicing the transportation request 252. The user database 260 may store information regarding user profiles 262. The user profiles 262 may include information regarding users who submit transportation requests 252. For example, the user database 260 may store user preferences 264 in association with user profiles 262. The user preferences 264 may specify preferred or disliked transportation modalities for a user associated with the user profile 262. For example, the user preferences 264 may specify one or more preferred modalities and/or one or more disliked modalities of a user associated with the user profile. The user preferences 264 may also specify that a user has a route preference for routes that include certain locations (e.g., faster, slower, more scenic roads) or routes that avoid certain locations (e.g., dangerous, frequently-congested roads). The user preferences 264 may also specify that a user has preferences for certain types of routes, such as a cost preference for routes that are less expensive, a health preference for healthier routes (e.g., routes with a higher calorie expenditures), and/or an environmental preference for routes that are more environmentally friendly (e.g., have lower resulting greenhouse gas emissions). The user preferences 264 may be user specified (e.g., entered and/or configured by a user associated with the user profile 262) and/or may be derived from user behaviors (e.g., previous acceptance and/or rejection of previous transportation proposals). The server 202 may analyze user preferences 264 stored in association with a user profile 262 that submitted the transportation request 252. The server 202 may then select one or more of the modalities 208, 226, 238 based on the user preferences 264 (e.g., to include preferred modalities and/or to exclude disliked modalities).

In certain implementations, the server 202 may generate more than one transportation proposal 204. For example, the server 202 may generate multiple transportation proposals 204 in response to the received transportation request 252. The server 202 may then select from among the generated transportation proposals 204 one or more transportation proposals 204 for presentation to the user device 250.

One or more of the server 202, the user device 250, the user database 260, and the vehicle database 266 may be implemented by a computer system. For example, one or more of the server 202, the user device 250, the user database 260, and the vehicle database 266 may include a processor and/or memory configured to implement one or more operational features. In particular, the memory may store instructions which, when executed by the processor, cause the processor to implement the one or more operational features of the server 202, the user device 250, the user database 260, and/or the vehicle database 266.

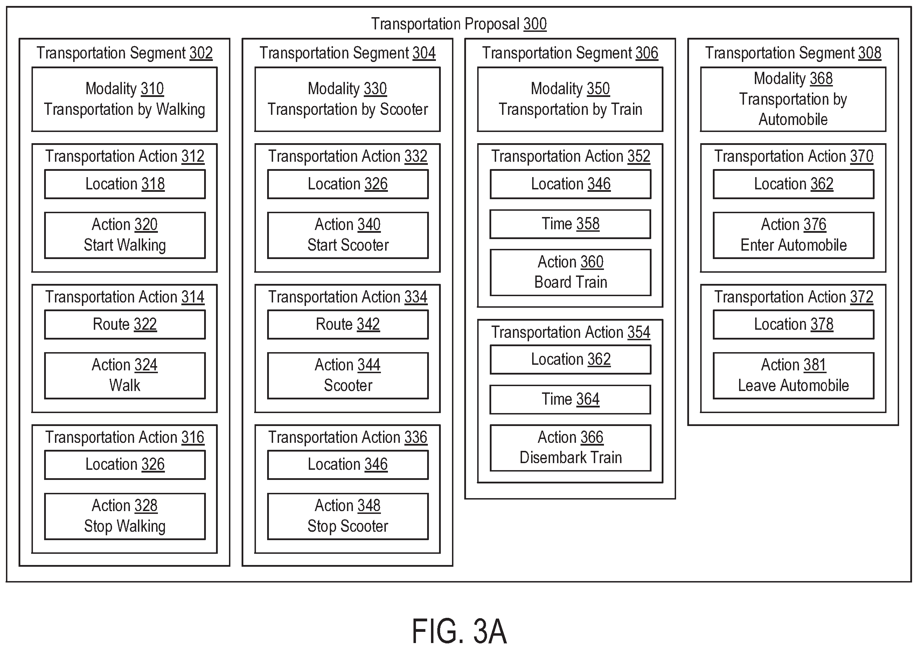

FIGS. 3A-3B illustrate transportation proposals 300, 396 according to exemplary embodiments of the present disclosure. The transportation proposals 300, 396 may depict exemplary implementations of the transportation proposals 204 generated by the server 202 in response to a transportation request 252. Referring initially to FIG. 3 A, the transportation proposal 300 includes four transportation segments 302, 304, 306, 308. Each of the transportation segments 302, 304, 306, 308 includes a single modality 310, 330, 350, 368. In particular, the transportation segment 302 corresponds to the modality 310 of transportation by walking, the transportation segment 304 corresponds to the modality 330 of transportation by scooter, the transportation segment 306 corresponds to the modality 350 of transportation by train, and the transportation segment 308 corresponds to the modality 368 of transportation by automobile. In combination, a user following the transportation segments 302, 304, 306, 308 may be transported between two desired locations (e.g., the first location 254 and the second location 256 of the transportation request 252).

The transportation segments 302, 304, 306, 308 each include multiple transportation actions 312, 314, 316, 332, 334, 336, 352, 354, 370, 372. The transportation actions 312, 314, 316, 332, 334, 336, 352, 354, 370, 372 may specify actions a user may take in order to receive or otherwise engage in transportation according to the transportation segments 302, 304, 306, 308 and the transportation proposal 300. For example, the transportation actions 312, 314, 316, 332, 334, 336, 352, 354, 370, 372 may specify how a user can access vehicles associated with certain modalities (e.g., accessing or unlocking bikes or scooters, being picked up in an automobile, boarding a train or bus). In some instances, the transportation actions 312, 314, 316, 332, 334, 336, 352, 354, 370, 372 may be associated with certain locations. These locations may specify where a user should perform or follow actions associated with the transportation actions 312, 314, 316, 332, 334, 336, 352, 354, 370, 372. For example, the transportation action 312 specifies with action 320 that the user should start walking at a location 318 (e.g., according to the modality 310 of transportation by walking). The location 318 may correspond to a starting location of the user (e.g., the first location 254 of a received transportation request 252). Transportation action 314 specifies with action 324 that a user should walk along the route 322. Also, transportation action 316 specifies with action 328 that the user should stop walking at location 326. Accordingly, by following the transportation actions 312, 314, 316, the user will walk from the location 318 to the location 326.

The transportation actions 332, 334, 336 of the transportation segment 304 similarly specify the actions a user should take to utilize a scooter for transportation. At transportation action 332, the user will start riding a scooter according to action 340 at location 326. The location 326 is the same for both transportation actions 316 and 332. The common location 326 may indicate that the user stops walking at the location of a scooter available for use and starts riding the scooter according to action 340. Transportation action 334 indicates that the user should ride the scooter along the route 342. At transportation action 336, the user may stop riding the scooter at the location 346 according to action 348.

According to transportation action 352 of the transportation segment 306, the user may then board a train according to action 360 at the location 346. As transportation actions 336 and 352 both include the same location 346, the user may stop riding the scooter at a transit station located at location 346 and board a train located at the location 346 (i.e., the same location). Transportation action 352 also includes a time 358, which may designate a time by which a user has to board the train according to action 360. For example, the time 358 may indicate when the train a user is supposed to board will depart from the transit station, or a time at which the train will arrive at the transit station. Transportation action 354 corresponds to the user disembarking the train at location 362 according to action 366 at a time 364.

At transportation action 370 of the transportation segment 308, the user may then enter an automobile according to action 376 at the location 362. For example, the user may enter an automobile operated by another person or operated by an autonomous or semi-autonomous vehicle system at a pickup location near the transit stop at location 362 where the user disembarked the train according to action 366. The automobile may been drive the user from location 362 to location 378 of the transportation action 372, at which point the user may leave the automobile according to action 381.

By following the transportation actions 312, 314, 316, 332, 334, 336, 352, 354, 370, 372 of the transportation segments 302, 304, 306, 308, the user may follow a multi-modal transportation route corresponding to the transportation proposal 300. In particular, the user may walk to a scooter, scooter to a transit stop associated with a train, ride the train to a second transit stop associated with the train, and ride in an automobile to their final destination.

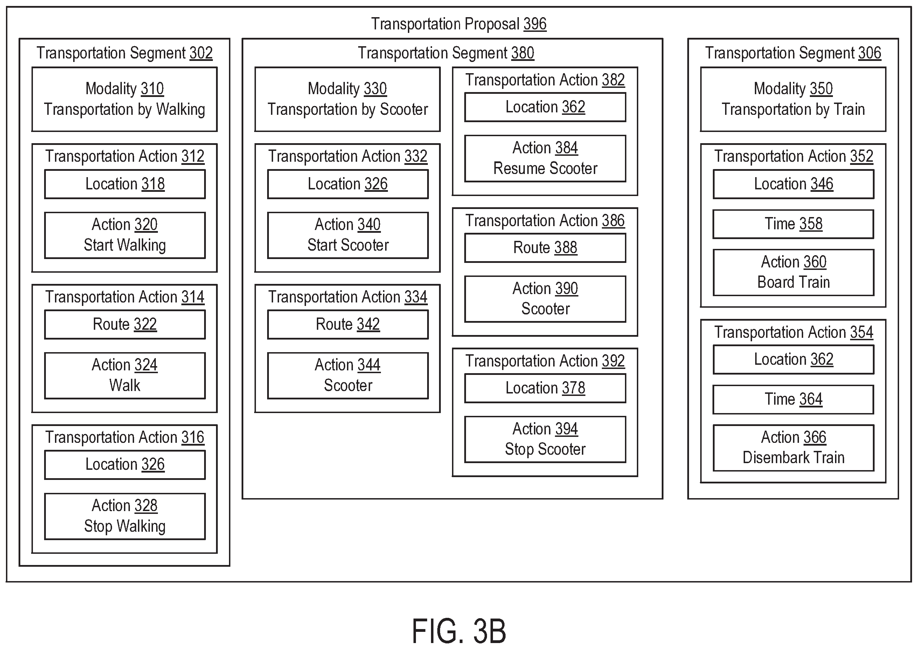

Other multi-modal routes may be generated for transportation between the same locations 318, 378. For example and with reference to FIG. 3B, the transportation proposal 396 provides an alternative multi-modal transportation route between the locations 318, 378. The transportation proposal 396 includes transportation segments 302, 306, identical to the transportation proposal 300. However, the transportation segment 380 corresponding to the modality 330 of transportation by scooter differs from the transportation segment 304 of the transportation proposal 300. Transportation segment 380 includes the transportation actions 332, 334 by which a user starts riding a scooter at location 326 and follows a route 342. The route 342 may lead the user to the location 346 of transportation action 352 (e.g., a transit stop associated with a train), at which the user may board the train according to action 360. However, the transportation segment 380 does not indicate that the user stops using the scooter at the location 346. Rather, after disembarking the train according to action 366 at location 362 of the transportation action 354, the user resumes scootering at location 362 according to action 384 of transportation action 382. The user then rides the scooter according to action 390 along route 388 of the transportation action 386 and stops riding the scooter at location 378 according to action 394 of the transportation action 392. Therefore, by following the transportation actions 312, 314, 316, 332, 334, 352, 354, 382, 386, 392, the user may walk to a scooter, which the user rides to the transit station at location 346 and brings the scooter with them onto the train when boarding according to action 360. Then, after disembarking the train (i.e., with the scooter) according to action 366 at location 362, the user may ride the scooter to their final destination at location 378. In the transportation proposal 396, the transportation segments 306, 380 may be considered parallel transportation segments because of the transportation segment 306 occurs while the transportation segment 380 is still in progress (e.g., after the transportation segment 380 begins and before completing the transportation segment 380), as the user will not complete their scooter ride until reaching their final destination at location 378.

Transportation proposals such as the transportation proposal 396 that include parallel transportation segments 306, 380 may assist with reallocating vehicles as needed according to marketplace conditions. For example, personal mobility vehicles such as bikes or scooters may typically be needed in different locations at different times (e.g., according to typical user traffic, ridership patterns, and/or the like). Typically, such personal mobility vehicles may be manually relocated (e.g., by service workers associated with or working on behalf of a TNC). Such relocation services may incur additional costs, for example, to pay the service workers who manually relocate the personal mobility vehicles. However, transportation proposals that instruct users to travel with personal mobility vehicles (e.g., bikes, scooter) using other modalities (e.g., trains, buses, automobiles) may allow for targeted reallocation of personal mobility vehicles with minimal additional cost. For example, if the server 202 determines that a user associated with a received transportation request 252 is traveling to a location at which personal mobility vehicles are likely to be in high demand in the future, the server 202 may generate a transportation proposal such as the transportation proposal 396 that instructs the user to travel with the personal mobility vehicle using another modality (i.e., using a train, a bus, and/or an automobile). In certain implementations, transportation proposals 396 that include such parallel transportation segments 306, 380 may be discounted at least in part to account for the defrayed cost of relocating the personal mobility vehicle. Parallel transportation segments may also be generated to transport vehicles other than personal mobility vehicles. For example, a transportation proposal may be generated to transport an automobile using a boat or ferry.

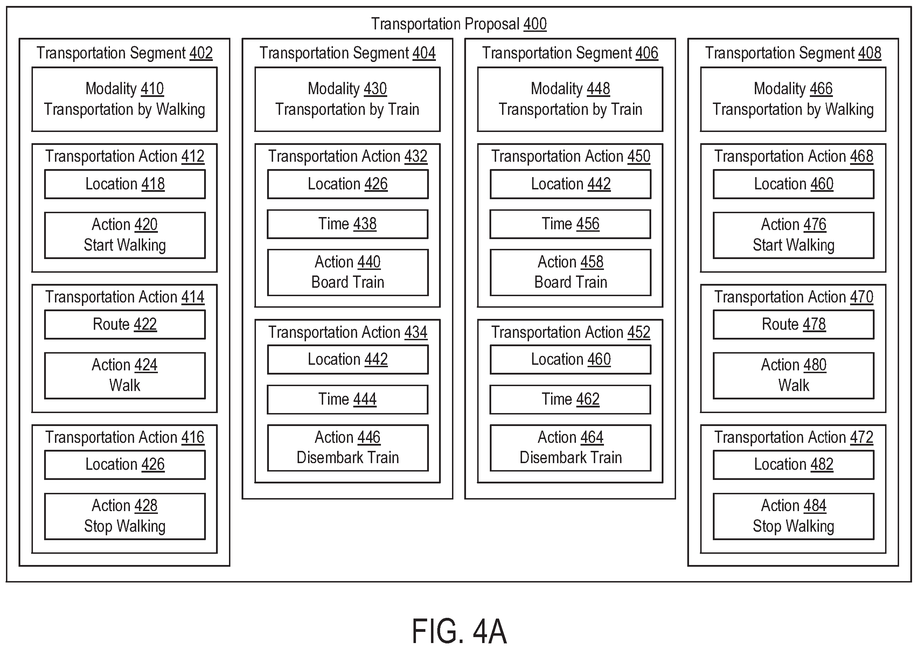

FIGS. 4A-4B illustrate transportation proposals 400, 486 according to exemplary embodiments of the present disclosure. The transportation proposals 400, 486 may depict exemplary implementations of the transportation proposals 204 generated by the server 202 in response to a transportation request 252. In particular, the transportation proposals 400, 486 may be example transportation proposals that include segments with modalities of the same type.

Referring initially to FIG. 4A, transportation proposal 400 includes four transportation segments 402, 404, 406, 408. Transportation segment 402 corresponds to the modality 410 of transportation by walking. In particular, transportation action 412 indicates that a user will start walking according to action 420 from a location 418. Transportation action 414 specifies that a user will walk along a route 422 according to action 424 until, according to transportation action 416, the user will stop walking at the location 426 according to action 428. For the transportation action 432 of the transportation segment 404, a user may then board a train at the location 426 at time 438. The user may ride the train until disembarking the train according to action 446 of the transportation action 434 at location 442 and at time 444. The user may then board a second train at location 442 and time 456 according to action 458 of the transportation action 450 of the transportation segment 406. For example, according to transportation segments 404, 406 the user may transfer trains in order to travel closer to the final destination. The user may then ride the second train to location 460 according to transportation action 452, at which point the user may disembark the train as specified in action 464 at the time 462. The user may then walk to their final destination as indicated in the transportation segment 408. In particular, according to transportation action 468, the user may start walking at location 460 as specified in action 476 after disembarking the second train. The user may then walk along the route 478 according to action 480 of the transportation action 470. The user may then arrive at their final destination at location 482 and may stop walking according to action 484 of the transportation action 472.

By following the transportation proposal 400, the user may walk to a first transit stop according to transportation segment 402 and board a first train at the first transit stop and ride the train to a second transit stop according to transportation segment 404. The user may then board a second train at the second transit stop and ride the second train to another location according to the transportation segment 406 and may walk to their final destination at location 482 according to the transportation segment 408. By combining transportation segments 404, 406 with same modality 430, 448 of transportation by train, the transportation proposal 400 may be better able to utilize existing public transportation or other transportation resources. For example, a user may initially be located closer to a transit station for the first train line, but the first train line may not run close to the user's final destination. However, the second train line may run closer to the user's final destination but may be located further from the user's starting location. By identifying a common location 442 for the first and second train lines, the transportation proposal 400 may allow the user to take two different trains instead of having to rely on different modalities, which may be more expensive and/or slower. The transportation proposal 400 also includes two transportation segments 402, 408 with the same modality 410, 466 of transportation by walking. Such common transportation segments 402, 408 may enable more simple transportation for the user (e.g., it may be easier to walk than to locate and access a personal mobility vehicle) and/or may reduce the overall cost of fulfilling the transportation proposal 400.

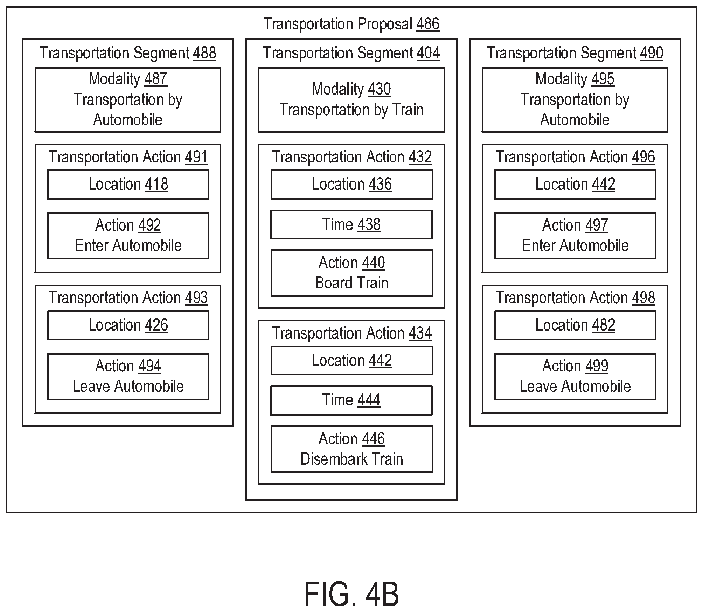

Transportation proposals with transportation segments having common modalities may also be generated according to user preferences. For example and with reference to FIG. 4B, the transportation proposal 486 includes transportation segments 488, 490 having modalities 487, 495 of transportation by automobile. Specifically, a user may enter the automobile at their starting location 418 according to action 492 of transportation action 491. The user may then ride the automobile to location 426, at which point the user may leave the automobile according to action 494 of the transportation action 493. The transportation segment 404 is the same for both transportation proposals 400, 486. Accordingly, the user may board the train at location 436 and ride the train to location 442 as discussed above. However, rather than boarding the second train as indicated in transportation segment 406, transportation segment 490 specifies that the user may ride in an automobile to their final destination. Specifically, the user may enter the automobile at location 442 according to action 497 of the transportation action 496. The user may then ride in the automobile to location 442, at which point the user may leave the automobile according to action 499 of transportation action 498.

The transportation proposal 486 may be generated to account for a user's preferences (e.g., user preferences 264 corresponding to a user profile 262 that is associated with a received transportation request 252). For example, the user preferences 264 may indicate that a user associated with the transportation proposal 486 dislikes transportation by walking. Accordingly, the transportation segments 488, 490 may be generated with modalities other than transportation by walking (e.g., transportation by automobile). The user preferences 264 may also indicate that the user does not like transfers between public transit modalities. Accordingly, the transportation segment 490 may be generated to provide transportation from the location 442 at which the user disembarks the train. In alternative implementations (e.g, implementations other than those depicted in FIG. 4B), a transportation segment may be generated such that the user takes a single train and does not disembark the train at location 442 (e.g., takes the train to a different transit stop). Additionally or alternatively, the user preferences 264 may specify that the user prefers transportation proposals 486 that are comparatively faster (e.g., time and/or distance) than other transportation proposals. Accordingly, the modalities 487, 495 may be assigned as transportation by automobile, which may be faster than other modalities such as transportation by walking, transportation by bus, transportation by train, and/or transportation by personal mobility vehicle.

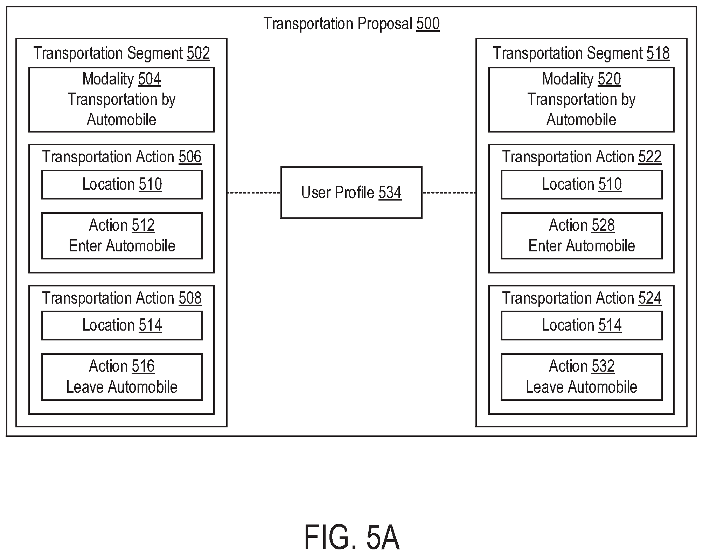

FIGS. 5A-5C illustrate transportation proposals 500, 536, 544, 546 according to exemplary embodiments of the present disclosure. The transportation proposals 500, 536, 544, 546 may be generated to account for one or more associated users. The associated users may be identified by user profiles, such as user profiles 262 stored in the user database 260. Referring initially to FIG. 5 A, transportation proposal 500 includes two transportation segments 502, 518 having the same modality 504, 520 transportation by automobile. The transportation segments 502, 518 also have similar transportation actions 506, 508, 522, 524. Both of the transportation actions 506, 522 include actions 512, 528 specifying that the user enter an automobile at location 510. Also, the transportation actions 508, 524 both have actions 516, 532 specifying that the user leave the automobile at location 514. Both transportation segments 502, 518 are associated with a single user profile 534 and may be executed at least partially in parallel (e.g., at least partially at the same time). For example, a user associated with the user profile 534 may request two automobiles for transportation between the same location (e.g., for a number of riders larger than a single automobile can transport). The user associated with the user profile 534 may then be able to centrally process, pay for, and monitor the performance of both transportation segments 502, 518.

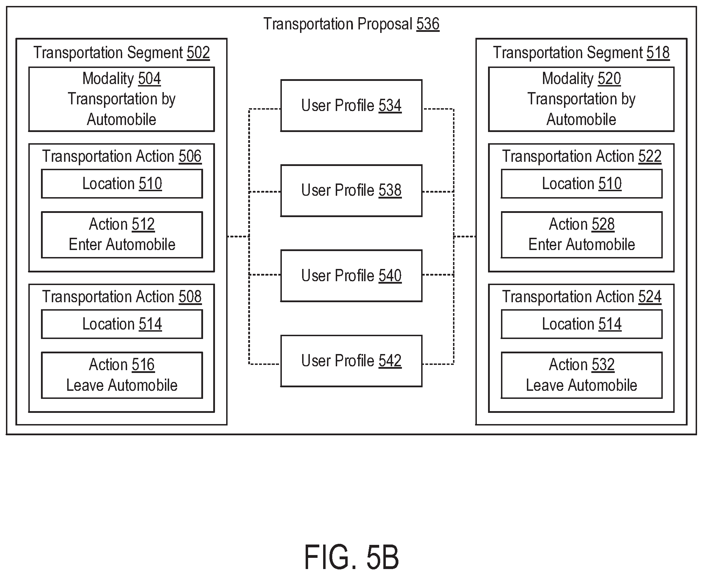

Referring to FIG. 5B, the transportation proposal 536 includes identical transportation segments 502, 518 to the transportation proposal 500, but with four corresponding user profiles 534, 538, 540, 542. Multiple user profiles 534, 538, 540, 542 associated with the transportation segments 502, 518 may allow multiple users to process, pay for (e.g., split payment of), and monitor the performance of the transportation segments 502, 518. In certain implementations, different user profiles may be associated with each transportation segments 502, 518. For example, user profiles associated with users riding in the automobiles associated with either the transportation segment 502 or the transportation segment 518 may be assigned to the corresponding transportation segment. In such instances, a user profile associated with the user who requested transportation may also be associated with both transportation segments 502, 518 so the user can process, pay for, and/or monitor performance of both transportation segments 502, 518.

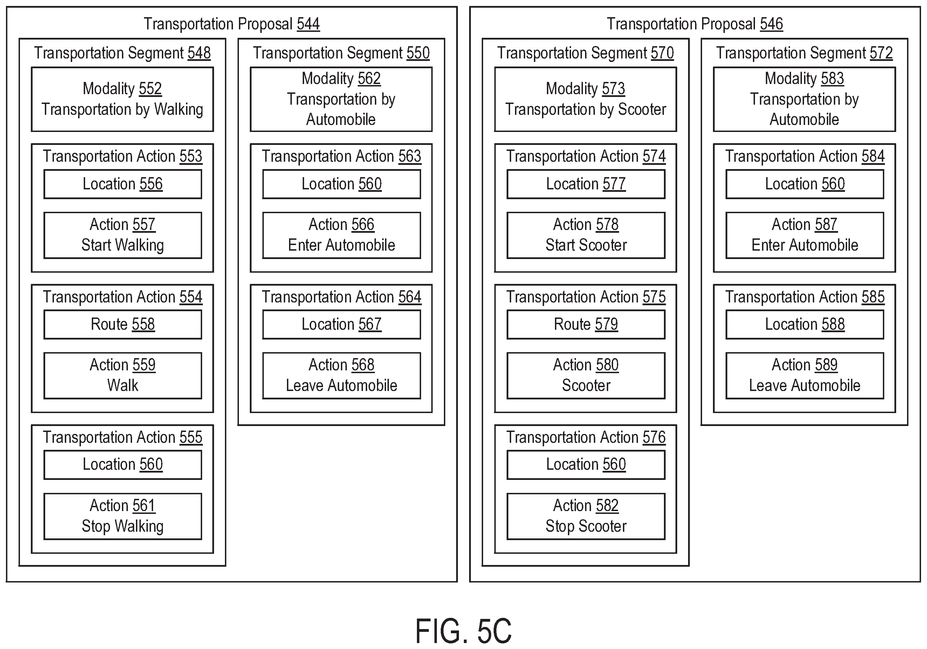

Referring to FIG. 5C, a transportation proposals for a first user may also be generated to include one or more transportation segments that overlap with one or more transportation segments of a different transportation proposal for a different user. For example, the transportation proposals 544, 546 respectively include transportation segments 550, 572 that partially overlap. Specifically, both transportation segments 550, 572 include transportation actions 563, 584 with actions 566, 587 specifying that users associated with the transportation proposals 544, 546 should enter an automobile at location 560. However, the transportation segments 550, 572 include different transportation actions 564, 585 at the end of the associated users' automobile rides. Specifically, the transportation action 564 includes an action 568 specifying that the user should leave the automobile at location 567, while the transportation action 585 includes an action 589 specifying that the user should leave the automobile at location 588. The different ending locations 567, 588 of the transportation segments 550, 572 may result from different destinations for users associated with the transportation proposals 544, 546. For example, the location 567 may correspond to a final destination of a first user associated with the transportation proposal 544, while the location 588 may correspond to a final destination of a second user associated with the transportation proposal 546. In this way, the users associated with the transportation proposals 544, 546 may be able to both utilize a single vehicle, e.g., if users destinations are near one another and/or are in similar directions relative to the users' starting locations. Such overlapping transportation segments 550, 572 may help increase system capacity for a TNC providing the transportation proposals 544, 546 by increasing the number of passengers serviced by each vehicle. Overlapping transportation segments 550, 572 may also reduce the cost to the users associated with the transportation proposals 544, 546 (e.g., because the users can at least partially split the cost of the automobile).

Overlapping transportation segments can also be combined with multi-modal transportation proposal generation. For example, transportation segments utilizing additional modalities may be added before or after one or both of the overlapping transportation segments 550, 572. In particular, transportation segment 548 occurs before transportation segment 550 and includes a modality 552 of transportation by walking. The transportation segment 570 also occurs before the transportation segment 572 and includes a modality 573 of transportation by scooter. Specifically, the transportation segment 548 includes the transportation action 553 with an action 557 specifying that a first user associated with the transportation proposal 544 start walking from the location 556. According to the transportation action 554, the first user may walk along the route 558 according to the action 559 until arriving at the location 560, at which point the user will stop walking as specified in the action 561 of the transportation action 555. The transportation segment 570 also includes a transportation action 574 with an action 578 specifying that a second user associated with the transportation proposal 546 start riding a scooter from their starting location 577. The second user may then ride the scooter along the route 579 according to the action 580 of the transportation action 575 until arriving at the location 560, at which point the action 582 of the transportation action 576 specifies that the user will stop riding the scooter.

By performing the transportation segments 548, 570 before their corresponding overlapping transportation segments 550, 572, the first and second users may be able to meet at the common pick-up location 560. By adding additional transportation segments of other modalities, the transportation proposals 544, 546 may extend the feasibility and benefits of sharing vehicles such as automobiles. For example, the first and second users may be too far apart to feasibly share an automobile to each of their destinations, but may be able to do so if they meet at the location 560 between their two respective starting locations 556, 577. The transportation proposals 544, 546 may also be generated to account for the first and second users' preferences, available transportation modalities, and relative distances to the location 560. For example, the first user may be located closer to the location 560 than the second user and may therefore be able to walk to the location 560 in the time it takes the second user to ride a scooter to the location 560. In another example, the second user may be located near an available scooter, while there may be no such personal mobility vehicles located near the first user, so the second user may be able to scooter while the first user walks. Transportation proposals generated to account for such contextual and preference information may increase the efficiency of utilized transportation resources while also reducing costs and time spent in transportation for users.

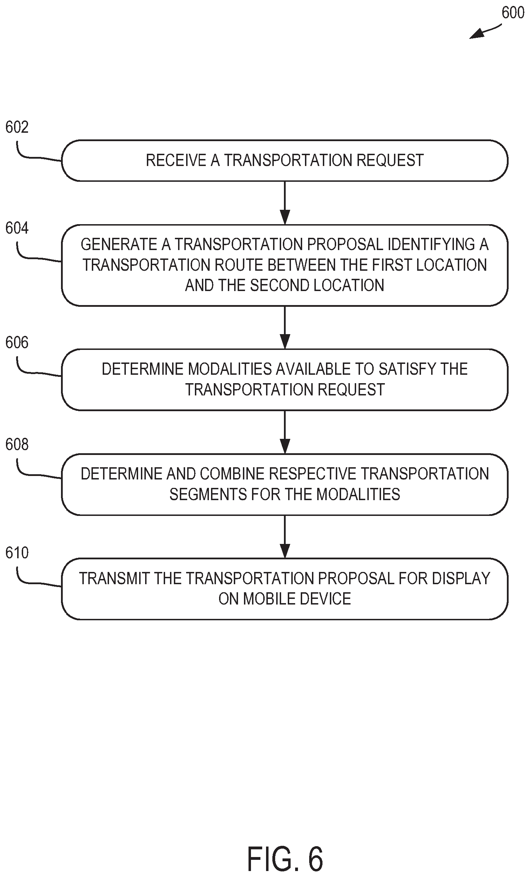

FIG. 6 illustrates a method 600 according to an exemplary embodiment of the present disclosure. The method 600 may be performed to generate transportation proposals in response to received transportation requests. The method 600 may be performed by a computer system, such as the system 200. For example, the method 600 may be performed by the server 202, the user device 250, the user database 260, and/or the vehicle database 266. The method 600 may also be implemented by a set of instructions stored on a computer readable medium that, when executed by a processor, cause the computer system to perform the method 600. For example, all or part of the method 600 may be implemented by a CPU and/or memory of the server 202, the user device 250, the user database 260, and/or the vehicle database 266. Although the examples below are described with reference to the flowchart illustrated in FIG. 6, many other methods of performing the acts associated with FIG. 6 may be used. For example, the order of some of the blocks may be changed, certain blocks may be combined with other blocks, one or more of the blocks may be repeated, and some of the blocks described may be optional.

The method 600 begins with receiving a transportation request (block 602). For example, and referring to FIG. 2, the server 202 may receive a transportation request 252 from a user device 250. The transportation request 252 may specify a second location 256 (e.g., a destination location to which transportation is desired). In certain implementations, the transportation request 252 may also specify a first location 254 (e.g., an origin location from which transportation is desired). In other implementations, the server 202 may determine a first location 254, for example based on a current location of the user device 250. In certain implementations, the server 202 may receive the transportation request 252 from the user device 250 over a network connection, such as the Internet.

Referring again to FIG. 6, a transportation proposal may be generated that identifies a transportation route between the first location and the second location (block 604). Returning to FIG. 2, the server 202 may generate a transportation proposal 204 in response to receiving the transportation request 252. The transportation proposal 204 may be generated to identify a transportation route between the first location 254 and the second location 256.

Referring again to FIG. 6, to generate the transportation proposal, modalities available to satisfy the transportation request may be determined (block 606). The modalities that are available may be determined according to modalities serviceable by the system. The modalities may include one or more of an automobile modality (e.g., transportation by automobile), an autonomous automobile modality (e.g., transportation by autonomous automobile), a bus modality (e.g., transportation by bus), a train modality (e.g., transportation by train), a boat modality (e.g., transportation by boat), a ferry modality (e.g., transportation by ferry), a bike modality (e.g., transportation by docked or dockless bikes), a scooter modality (e.g., transportation by scooter) and a walking modality (e.g., transportation by walking). In certain implementations, the modalities that are available may be identified as modalities with corresponding vehicles located near the first and/or second locations 254, 256 and/or located between the first and/or second locations 254, 256.

Transportation segments may be determined for the determine modalities and may be combined to form the transportation proposal (block 606). The transportation segments may correspond to a portion of a transportation route between the first location 254 and the second location 256. In particular, transportation segments may identify a portion of a transportation route between the first location 254 and the second location 256 that complies with one or more operational requirements of a corresponding modality. For example, scooters may have shorter range (e.g., may be capable of travelling shorter distances) than other types of vehicles (e.g., trains, buses, automobiles). Accordingly, a transportation segment corresponding to a scooter modality may be generated to cover a shorter portion of the route between the first location 254 and the second location 256. In certain implementations, transportation segments corresponding to rideable modalities (e.g., a bike modality and/or a scooter modality) may be generated to be shorter than for other modalities. For example, the server 202 may determine a battery level of a rideable vehicle (e.g., an electrically powered and/or electrically assisted scooter and/or bike) and may generate a segment corresponding to the rideable modality based on the battery level of the rideable vehicle (e.g., to have a distance less than or equal to a range of the rideable vehicle determined based on the battery level).

The transportation segments for the modalities may be combined to form the transportation proposal. For example, the transportation segments may be combined to form a transportation route between the first location 254 and the second location 256. The combined transportation segments may include transportation segments that specify more than one type of modality. For example, the combined transportation segments may include a first transportation segment corresponding to a rideable modality and a second transportation segment corresponding to a walking modality. In still further examples, the transportation segments may be assigned such that two or more of the transportation segments occur at least partially in parallel. For example, and referring to FIG. 3B, the transportation segments 380, 306 include modalities 330, 350 assigned so that the transportation segments 380, 306 occur at least partially in parallel. Transportation segments that occur at least partially in parallel may include an earlier transportation segment that begins before a later transportation segment and ends after the later transportation segment begins. For example, the transportation segment 380 begins with the user accessing the scooter before the transportation segment 306 begins and ends after the transportation segment 306 ends with the user stopping scootering at their final destination. In still further examples, as discussed in connection with FIGS. 4A-4B, two or more of the combined transportation segments may include modalities specifying the same type of transportation. In particular, in certain instances, two or more adjacent transportation segments may include corresponding modalities specifying the same type of transportation.

In still further implementations, transportation proposals may be generated to include modalities that involve operation of an automobile by a user. For example, a transportation proposal may include a transportation segment corresponding to a user driving their personal vehicle or a rented vehicle to a designated parking location. Upon arriving at the parking location, and paying for parking as necessary, the user may proceed to a subsequent transportation segment corresponding to transportation by personal mobility vehicle. For example, after parking, the user may ride a scooter from the designated parking location to their final destination. The subsequent transportation segment may also involve transportation by automobile. For example, after parking, the user may be picked up in a different vehicle for transportation to their final destination.

In further implementations, when determining the modalities at block 606 and/or when determining the transportation segments at block 608, one or more user profiles may be associated with at least one of the transportation segments, as discussed above in connection with a FIGS. 5 A and 5B. In still further implementations, the transportation proposal may be generated to include at least one transportation segment that at least partially overlaps a transportation segment of another transportation proposal (e.g., a transportation proposal associated with a different user), as discussed above in connection with FIG. 5C. For example, the server 202 may receive transportation requests from multiple users with at least partially overlapping routes (e.g., origin and/or destination locations near one another, destinations in similar directions from the origin locations). The server 202 may then identify a modality (e.g., transportation by shared automobile) that can service at least a portion of the overlapping routes. The server 202 may then generate a segment based on the modality that services the portion of the overlapping routes and may combine the transportation segment with other transportation segments to form transportation proposals for the multiple users.

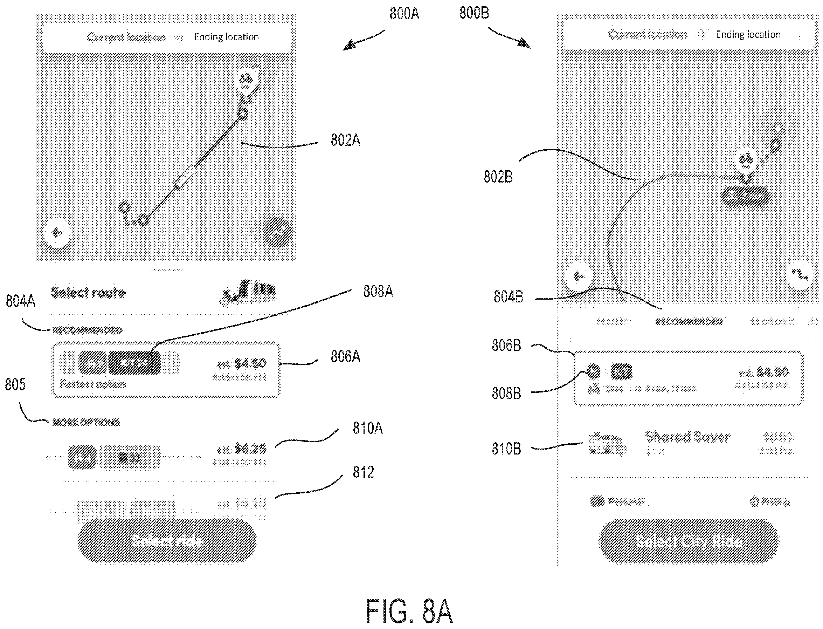

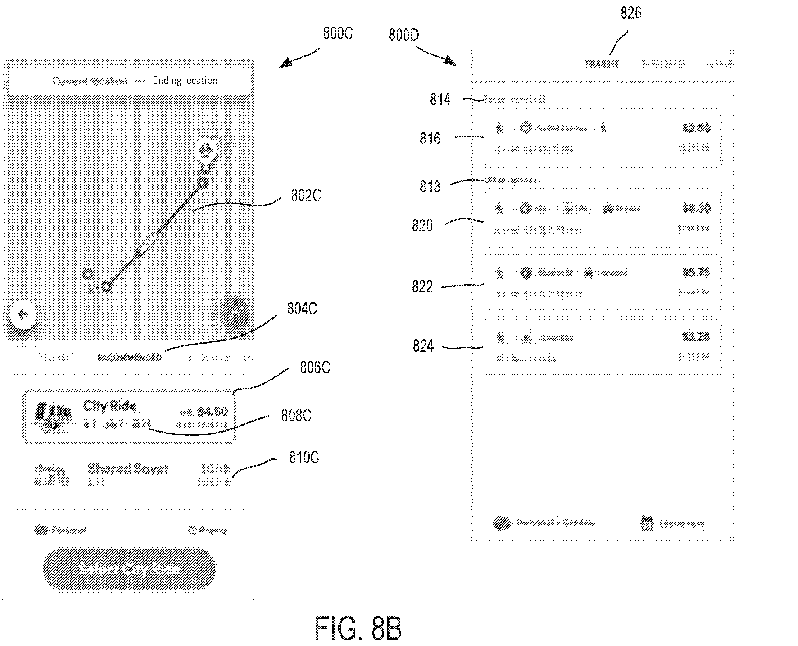

Returning to FIG. 6, the transportation proposal may be transmitted for display on a mobile device (block 610). Referring to FIG. 2, the server 202 may transmit the transportation proposal 204 to the user device 250. The user device 250 may then receive and display the transportation proposal for selection by user. Upon selection, the user may be able to receive transportation as indicated by the transportation proposal 204. In certain implementations, the server 202 may generate multiple transportation proposals in response to a received transportation request 252. In such implementations, the transportation proposal 204 may be transmitted with additional transportation proposals to the user device 250. Additional details regarding display of one or more transportation proposals by the mobile device are discussed further below in connection with FIGs. 8A-8B.

In certain implementations, when transmitting the transportation proposal to the mobile device, the server may consider user preferences. For example, where the transportation proposal is one of multiple transportation proposals, the transportation proposal may be recommended more highly if it complies with one or more user preferences associated with a user profile associated with the mobile device. In other implementations, a price or cost associated with the transportation proposal may be adjusted to account for one or more marketplace conditions. For example, where completion of the transportation proposal would result in a vehicle of a particular modality being relocated from a location of low demand to a location of high demand for the modality associated with the vehicle, a price or cost associated with the transportation proposal may be reduced to encourage acceptance and/or performance of that transportation proposal.

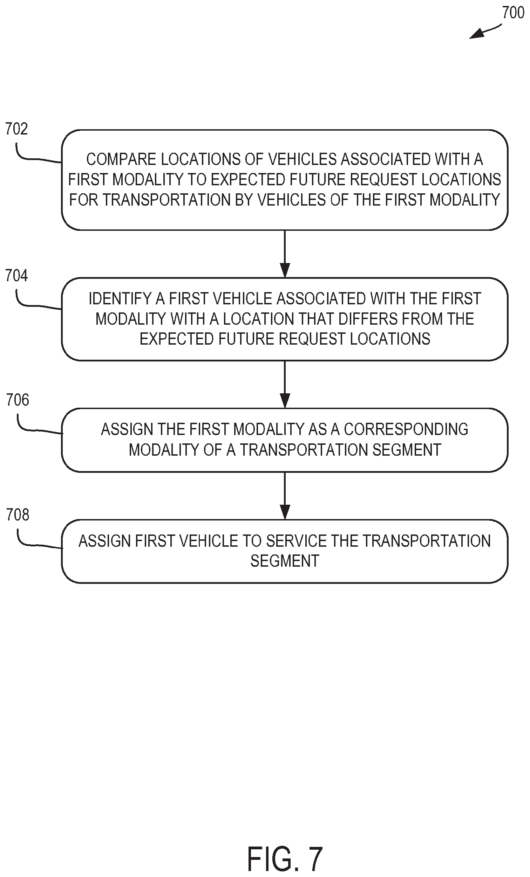

FIG. 7 illustrates a method according to an exemplary embodiment of the present disclosure. The method 700 may be performed to determine modalities and/or transportation segments according to marketplace conditions. For example, all or part of the method 700 may be performed in order to at least partially implement blocks 606 and 608 of the method 600. The method 700 may be performed by a computer system, such as the system 200. For example, the method 700 may be performed by the server 202, the user device 250, the user database 260, and/or the vehicle database 266. The method 700 may also be implemented by a set of instructions stored on a computer-readable medium that, when executed by a processor, cause the computer system to perform the method 700. For example, all or part of the method 700 may be implemented by a CPU and/or memory of the server 202, the user device 250, the user database 260, and/or the vehicle database 266. Although the examples below are described with reference to the flowchart illustrated in FIG. 7, many other methods of performing the acts associated with FIG. 7 may be used. For example, the order of some of the blocks may be changed, certain blocks may be combined with other blocks, one or more of the blocks may be repeated, and some of the blocks described may be optional.

The method 700 begins with comparing locations of vehicles associated with a first modality to expected future request locations for transportation by vehicles of the first modality (block 702). The comparison may be performed to determine whether a distribution of vehicles associated with the first modality differs from a distribution of expected requests for vehicles of the first modality. In particular, the comparison may determine whether there is a misalignment in locations of the vehicles with the distribution of expected requests for the vehicles. Referring to FIG. 2, the locations of the vehicles may be identified using the vehicle database 266. For example, the server 202 may compare vehicle locations 268 associated with the first modality in the vehicle database 266. The locations of the vehicles may include current locations of the vehicles. For example, the current locations of vehicles associated with the first modality may be compared with expected future request locations for vehicles associated with the first modality in the near future (e.g., 10 minutes, 30 minutes). The locations of vehicles may also include predicted future locations of the vehicle. For example, predicted future locations of the vehicle may be compared to expected future request locations further into the future (e.g., 45 minutes, 1 hour). Certain implementations may compare both current and predicted future locations of vehicles.

The first modality may be selected from among a list of potential modalities. For examples, the first modality may be selected from among transportation by automobile, transportation by scooter, transportation by bike, transportation by train, and transportation by bus. In certain implementations, the first modality may be selected according to user preferences. For example, the first modality may be selected as a modality preferred by a user associated with a received transportation request. In certain implementations, the method 700 may be repeated for more than one modality (e.g., may be repeated for each of the list of modalities and/or for each of the modalities preferred by a user associated with the received transportation request).

Returning to FIG. 7, a first vehicle associated with the first modality may then be identified that has a location that differs from expected future request locations (block 704). The first vehicle may be identified based on a misalignment between the locations of vehicles associated with the first modality and expected requests for transportation by vehicles associated with the first modality. For example, the first vehicle may be identified as a vehicle currently located in an area of low demand for the first modality. In another example, the comparison may identify a vehicle that is expected to be located in an area of low demand for the first modality in the future (e.g., after fulfilling a transportation proposal). In a still further example, the comparison may identify a surplus of vehicles associated with the first modality in an area of comparatively low demand for the first modality. For example, there may be 20 scooters in an area that is only expected to receive requests for 10 scooters in the near future (e.g., in the next 30 minutes, one hour, two hours, four hours).

Returning to FIG. 7, the first modality may be assigned as a corresponding modality of a transportation segment (block 706). For example, the first modality may be identified as a modality for which a transportation segment is to be determined at block 608. In certain instances, the transportation segment determined for the first modality may depend on whether the first vehicle was identified based on a current location of the first vehicle or a predicted location of the first vehicle. For example, the first modality may be assigned to an earlier transportation segment if the first modality is identified based on the current location of the first vehicle. As another example, the first modality may be assigned to a later transportation segment if the first modality is identified based on a predicted future location of the first vehicle. In this way, the server 202 may be better able to account for current marketplace conditions while also taking into consideration and preemptively resolving future marketplace conditions.

The first vehicle may also be assigned to service the transportation segment (block 708). For example, and referring to FIG. 2, the transportation segments 206, 224, 236 may store an indication of a vehicle 210, 228, 240 assigned to service the transportation segments 206, 224, 236. In such examples, to assign the first vehicle to the transportation segment 206, 224, 236, an indication of the first vehicle may be stored with the transportation segment. By assigning the vehicle, the method 700 may enable generated transportation proposals to directly address misalignments of vehicle locations with marketplace conditions. In particular, where the transportation segment to which the first vehicle is assigned occurs in the near future, fulfillment of the transportation segment may leave the first vehicle in an area of high demand, at least partially remedying the vehicle location misalignment.

In certain implementations, however, the block 708 may be optional. For example, where the transportation segment to which the first modality is assigned occurs too far in the future (e.g., 10 minutes in the future, 30 minutes in the future), it may not be practicable to assign specific vehicles to transportation segments when initially generating the transportation proposal. Accordingly, for such transportation segments, the method 700 may stop processing after assigning the first modality to the transportation segment at block 706.

FIGs. 8A-8B illustrate user interfaces 800A-D according to exemplary embodiments of the present disclosure. The user interfaces 800 A-D may be implemented by a mobile device and/or a user device to display one or more transportation proposals received by the mobile device and/or user devices (e.g., transportation proposals from a current location to an ending location). For example, the user interfaces 800 A-D may be used to at least partially implement block 610 of the method 600. User interfaces 800A-C include maps 802A-C that depict at least a part of a transportation route between two locations (e.g., an origin location and a destination location). For example, the maps 802A-C may depict a transportation route corresponding to a selected transportation proposal (e.g., the transportation proposal 806A-C). After receiving one or more transportation proposals, the user device may split the transportation proposals into one or more groups. For example, the user interface 800A depicts multiple transportation proposals 806A, 810A, 812. These proposals are separated into two groups: recommended proposals 804A and alternative options 805. The user interface 800A splits these groups into a vertical list, but other implementations may also be utilized. For example, the user interfaces 800B-C separate transportation proposals 806B-C, 810B-C into groups 804B-C selected above the transportation proposals 806B-C, 810B-C. In either instance, further transportation proposals may be viewable by scrolling down using the user interfaces 800 A-C. For example, the user interface 800 D depicts multiple transportation proposals 816, 820, 822, 824. These transportation proposals 816, 820, 822, 824 are organized into further categories 814, 818 similar to the categories 804A, 805 of the user interface 800 A. The transportation proposals 816, 820, 822, 824 may be viewable by scrolling down from a main screen, such as one of the interfaces depicted by user interfaces 800 A-C. The user interface 800 D further includes additional categories 826 selectable at the top of the interface.

Displaying the transportation proposals 806A-C, 810A-C, 812, 816, 820, 822, 824 may cause the mobile device to display one or more of the modalities included within the transportation proposal. For example, for depicted proposals, the mobile device may depict a visual indication of the modalities included in the proposal (e.g., a textual, pictorial depiction). The mobile device may also depict further details regarding the modalities, such as a time spent using each modality, a distance covered by each modality, and/or a vehicle (e.g., a train or bus line) used in connection with each modality. For example, the user interfaces 800A-C depict indicators 808A-C for the transportation proposals 806A-C. The indicators 808A-C take different forms. For example, the indicators 808A include pictorial and textual representations of the included modalities and the time spent with each modality. In particular, the indicators 808A depicts a bicycle pictorial along with the number "7", indicating that the transportation proposal 806 a includes a bike modality that is expected to last seven minutes. The indicators 808A also depict a vehicle identifier "K/T" identifying the K/T train line along with the number "24", indicating that the transportation proposal 806 a includes a train modality that is expected to last 24 minutes. The indicators 808A also includes two walking pictorials, indicating that the transportation proposal 806A includes two walking modalities. As depicted, the pictorials are arranged in the order they will occur in the transportation proposal. The user interface 800B similarly includes textual identifiers of the "N" and "K/T" train lines, along with a visual bike identifier beneath the textual identifiers of the train lines. The indicators 808C of the user interface 800 C include walking, biking, and train pictorials beneath a summary title of the transportation proposal 806 C. Further, in addition to pictorial identifiers of the modalities, the depicted transportation proposals 816, 820, 822, 824 of the user interface 800D include more complete textual identifiers of certain modalities (e.g., modalities other than walking modalities). The additional information may include complete train line names, transit stop identifiers, and/or may identify a type of automobile transportation received (e.g., shared transportation with other users and/or standard transportation not associated with other users requesting transportation). In certain implementations, the indicators 808A-C may be selectable. For instance, the indicators 808 A-C may be selectable to enable a user to change one of the modalities for the transportation proposal 806A-C. In such instances, when a user selects an indicator 808A-C, a menu (e.g., a drop-down or other selectable menu) may appear, enabling the user to select between alternative modalities for use with a particular segment (e.g., based on other transportation proposals or segments identified or generated in response to a received transportation request. In one example, a user may select an indicator 808A-C corresponding to a scooter modality and select, via the menu, to replace the scooter modality with a bike modality for the segment. In another example, a user may select an indicator corresponding to a train modality and may select, via the menu, to replace the train modality with an automobile modality. In still further examples, the user may select an indicator 808A-C corresponding to a modality to remove the modality from the transportation proposal 806 A-C. For example, the user may select an indicator corresponding to a scooter modality that is followed by an automobile modality in the transportation proposal 806A-C and may, via the menu, remove the scooter modality from the transportation proposal 806 A-C. In such examples, the other modalities of the transportation proposal 806A-C may be adjusted to compensate for the removed modality (e.g., the automobile modality may be lengthened to replace the scooter modality).

In each instance, the user interfaces 800A-D depict the modalities of the transportation proposals 806A-C, 810A-C, 812, 816, 820, 822, 824 in a compact and concise manner without unduly restricting the amount of visible information. Such a system for display can enable greater selection and visibility of potential transportation proposal options by reducing the total screen space required to display each transportation proposal. Further, such compact and concise depictions may allow a user to more quickly review and evaluate the potential transportation options, including transportation proposals that utilize different types of transportation.

### Transportation Proposal Filtration, Comparison, and Inconvenience Measurement

Referring again to FIGs. 1A-1B, transportation routes that utilize multiple modalities may also come with drawbacks. For example, users may find transportation routes with too many changes in modality inconvenient. As another example, the availability of certain modalities may change over time and alterations or updates to transportation routes as a result of such changes may also inconvenience users. In a yet another example, certain modalities may vary in transportation time between locations, which may cause users to miss pick-up times for public transportation modalities (e.g., trains and buses), necessitating changes to the transportation route which may inconvenience such users. These complexities, combined with other considerations such as the price a user must pay for the various modalities, may greatly increase the difficulty of comparing between different transportation routes, including both single-modality and multi modality transportation routes. Accordingly, there exists a need to take these complexities into account and to compare transportation routes including different numbers of modalities and different types of modalities.

One solution to this problem is to generate a list of multi-modality transportation proposals that are ranked based on the complexities described above. More specifically, the disclosed system may calculate a proposal score for each multi-modality transportation proposal. For example, the proposal score may be calculated based on a disutility to a user utilizing a transportation proposal, on a cost to a user of the transportation proposal, and/or a cost to provide transportation according to the transportation proposal (e.g., a cost to a transportation network). Based on the proposal score of each multi-modality transportation proposal, the system may rank the multi-modality transportation proposals (e.g., from best to worst) and transmit the rankings for display (e.g., for display at a graphical user-interface) on a mobile device. In an example, the system may continuously rank and/or re-rank the multi-modality transportation proposals in response to real-time feedback from the transportation matching system indicating real-time changes in marketplace conditions have occurred. For example, when supply and/or demand for a specific modality (e.g., a bike, scooter, or car) increases or decreases, the transportation matching system may automatically adjust an existing transportation proposal or create an additional transportation proposal, which may cause the system to re-rank the multi-modality transportation proposals.

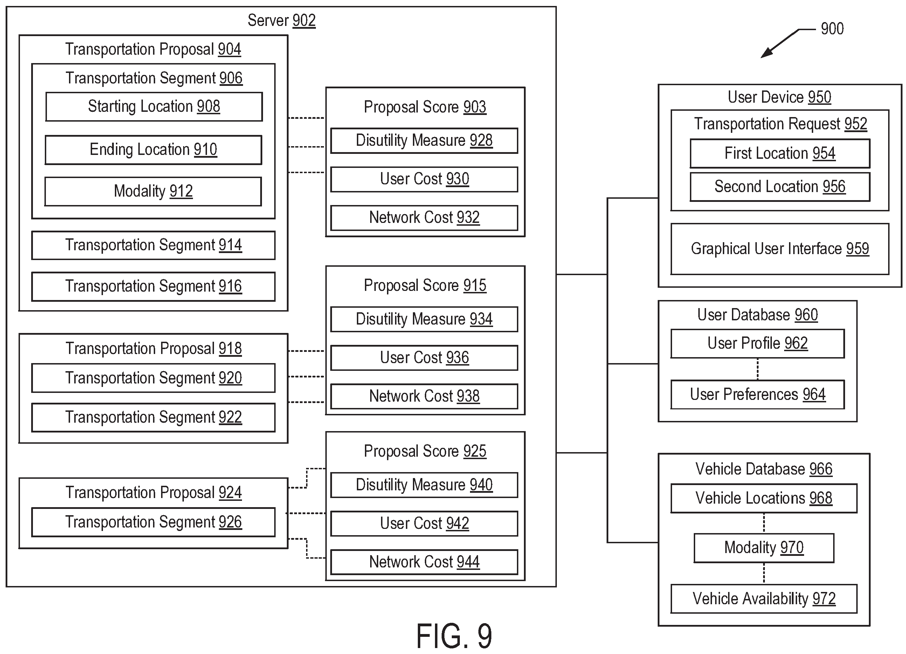

FIG. 9 depicts a system 900 for ranking multi-modality transportation proposals according to an exemplary embodiment of the present disclosure. As illustrated, the system 900 includes a server 902, a user device 950 (e.g., a mobile device), a user database 960, and a vehicle database 966. The server 902 may receive or otherwise obtain one or more transportation proposals 904, 918, and 924. In certain implementations, the server 902 may be configured to generate transportation proposals 904, 918, and 924 in response to transportation requests. For example, the server 902 may receive transportation requests 952 from user devices 950 requesting transportation from a first location 954 to a second location 956 (e.g., in connection with implementing a transportation network and/or transportation matching system). In response to receiving the transportation request 952, the server 902 may generate the transportation proposals 904, 918, and 924. In generating the transportation proposals 904, 918, and 924, the server 902 may create one or more transportation segments 906, 914, 916, 920, 922, and 926. The transportation segment 906 includes a modality 912 identifying a modality, or type of transportation, for the transportation segment 906. The transportation segment 906 also includes a starting location 908 and an ending location 910. In connection with the transportation segment 906, transportation may be provided from the starting location 908 to the ending location 910 according to the modality 912. Although not depicted, transportation segments 914, 916, 920, 922, and 926 may include similar information. The transportation segments 906, 914, 916, 920, 922, and 926 of the same transportation proposal 904, 918, and 924 may be serviced by two or more different modalities 912. For example, the transportation segment 906 may correspond to transportation by car, the transportation segment 914 may correspond to transportation by train, and the transportation segment 916 may correspond to transportation by personal mobility vehicle (e.g., bike and/or scooter). Although FIG. 9 only includes three transportation proposals 904, 918, and 924, it is contemplated that the server 902 may obtain and/or generate any number of transportation proposals, any of which may contain one or more transportation segments.

For each transportation proposal 904, 914, 924, the server 902 may calculate a proposal score 903, 915, 925 that may be used to rank the transportation proposals 904, 918, 924. For example, based on the proposal scores 903, 915, and 925, the transportation proposal 904 may be ranked higher (i.e., considered superior) to the transportation proposal 914. Alternatively, based on the proposal scores 903, 915, and 925, the transportation proposal 924 may be ranked higher (i.e., considered superior) to the transportation proposal 914.

To calculate the proposal scores 903, 915, 925, the system may calculate a series of features that may impact the desirability of a transportation proposal (e.g., to a user receiving transportation according to the transportation proposal). In some implementations, the proposal score 903, 915, 925 may be calculated to determine an overall value of the ride, such as an overall combined value of the transportation proposal to the user and to a TNC providing the transportation. To calculate the proposal score, the system may consider multiple features, including features regarding the price of the transportation proposal, a cost of providing transportation according to the transportation proposal, an inconvenience or disutility to a user receiving transportation according to the transportation proposal, and a total travel time associated with the transportation proposal.

For example, in one embodiment, the system may calculate or otherwise generate a disutility measure 928, 934, 940 that quantifies a level of inconvenience a user may experience while attempting to travel along a route identified by a transportation proposal. In one example, the disutility measure may be calculated based on one or more of a total backtracking distance of the route, a total walking distance of the route, and/or a total distance traveled by personal mobility vehicle for the route. In other implementations, the disutility measure may additionally or alternatively be calculated based on one or more of a total route completion time of the route, a total travel distance of the route, a total waiting time of the route, a number of transportation segments of the route, a total walking time to pick-up location(s) along the route, and/or a complexity of the route. The complexity of the route may incorporate how many transportation segments are involved in a transportation proposal, how many transfers the transportation proposal requires, a likelihood of being delayed for one or more transportation segments of the transportation proposal, a likelihood of missing a transfer for one or more transportation segments of the transportation proposal, a level of physical activity required for one or more transportation segments of the transportation proposal, and/or a level of coordination required for one or more transportation segments of the transportation proposal. In still further implementations, the disutility measure 934 may be calculated based at least in part on a safety measure for one or more of the transportation segments (e.g., for a modality identified by at least one of the transportation segments of the transportation proposal). For example, the safety measure may be calculated based on safety conditions including road traffic levels, speed limits, weather, visibility, and inclines/declines along a route identified by the transportation segments. In the illustrated embodiment, a disutility measure 928 is generated for the transportation proposal 904. Additionally, a disutility measure 934 is generated for the transportation proposal 918. Finally, a disutility measure 940 is generated for the transportation proposal 924.

In some embodiments, when calculating the proposal scores 903, 915, 925, the server 902 may calculate or otherwise generate a user cost 930, 936, 942 that predicts a route fare or other cost to a user for the transportation proposal based on a cost of completing each transportation segment of the transportation proposal. Fixed fare transportation segments of a transportation proposal (e.g. train and/or bus segments) may be known and variable fare transportation segments may be predicted based on an estimated time and distance associated with completing the transportation segment. Thus, in the illustrated embodiment, a user cost score 930 is generated for the transportation proposal 904. Additionally, a user cost score 936 is generated for the transportation proposal 918. Finally, a user cost score 942 is generated for the transportation proposal 924.

In other embodiments, to calculate the proposal scores 903, 915, 925, the server 902 may calculate or otherwise generate a network cost 932, 938, 944 that quantifies a cost to a transportation network (e.g., a TNC) of providing transportation according to the transportation proposal. For example, the network cost 932, 938, 944 may be calculated to measure or otherwise quantify a benefit of having certain modality assets (i.e., bikes, scooters, cars) available in a specific location at a specific time. For example, in the event a transportation segment requires the use of a scooter (i.e., the modality is scooter), a value quantifying the demand (e.g., user demand) for the scooter at a specific location and/or quantifying a value (e.g., in dollars) of having the scooter at the specific location may be calculated. If relocation of the scooter is desired within the transportation network (e.g., to locate the scooter at a final destination that is in high demand), a cost to move the scooter may be calculated (e.g., the deferred cost of having to pay another party to move the scooter instead of having the user take the scooter). In yet another embodiment, the network cost score may be calculated to quantify the likelihood that another user will utilize a different modality (e.g., a bike, scooter, or vehicle). In such a scenario, a higher likelihood represents a higher balancing "cost," as a different modality will have to be determined for subsequent requestors. Thus, in the illustrated embodiment, a network cost score 932 is generated for the transportation proposal 904. Additionally, a network cost score 938 is generated for the transportation proposal 918. Finally, a network cost score 944 is generated for the transportation proposal 924. Any one of the disutility measure, the user cost score, and/or the network cost score may be combined to generate or otherwise calculate a proposal score for a transportation proposal.

In some instances, the transportation proposals 904, 918, and 924 may be further ranked or filtered according to user preferences regarding the use of certain modalities. For example, the user preferences may specify one or more preferred modalities and/or one or more disliked modalities of a user associated with the user profile. The user preferences may also specify that a user has a route preference for routes that include certain locations (e.g., faster, slower, more scenic roads) or routes that avoid certain locations (e.g., dangerous, frequently-congested roads). The user preferences may also specify that a user has preferences for certain types of routes, such as a cost preference for routes that are less expensive, a health preference for healthier routes (e.g., routes with a higher calorie expenditures), and/or an environmental preference for routes that are more environmentally friendly (e.g., have lower resulting greenhouse gas emissions). The user preferences may be user specified (e.g., may be entered and/or configured by a user associated with the user profile) and/or may be derived from user behaviors (e.g., previous acceptance and/or rejection of previous transportation proposals, previous rating of completed transportation proposals, previous). In still further implementations, the user preferences may be determined based on users other than the user associated with a particular user profile. For example, the user preferences may be determined (e.g., predicted) based on other, similar user (e.g., users with similar location, age, preferences, transportation behaviors). In such a scenario, the server 902 may access user preferences 964 associated with a user profile 962 of a user database 960 (e.g., a user profile associated with the transportation request 952) to generate the ranked list and/or ranking of the transportation proposals. For example, the user preferences may indicate that a user may be most interested in routes that involve the use of scooters, while routes that involve transit (i.e., trains) are of lesser interest. The server 902 may therefore rank transportation proposals higher that include scooters and/or that predominantly include transportation by scooter (e.g., by generating a higher and/or more preferable proposal score for such transportation proposals) As another example, the user preferences may indicate that a user prefers routes that are the fastest, and dislikes routes that involve multiple transfers. Based on any of such preferences, the server 902 may therefore rank the transportation proposal based at least in part on a total travel time (e.g., transportation proposals with shorter travel time may have higher and/or more preferable proposal scores) and whether the transportation proposal includes transportation by train (e.g., transportation proposals with transportation by train may have lower and/or less preferable proposal scores)..

In some instances, the top rankings may be presented (e.g., via a graphical user interface 159) in certain organizing categories, such as: "Suggested Routes", "Fast", "Affordable", "Healthiest", "Greenest" and the like, as will be described in further detail below. To identify the transportation proposals for each of the organizing categories, one or more components of the proposal scores may be analyzed. For example, the server 902 may identify "Fast" transportation proposals as transportation proposals with the shortest overall travel times. As another example, the server 902 may identify the "Affordable" transportation proposals as transportation proposals with the lowest overall user cost. As a further example, the "Healthiest" transportation proposals may be identified based on one or more healthiness measures including at least one of calories expended following the route identified by the proposal, steps taken following the route identified by the proposal, distance walked following the route identified by the proposal, and distance traveled by bike following the route identified by the proposal. For example, healthiest transportation proposals may be identified as the transportation proposals with the highest or most preferable healthiness measures. In another example, the "Greenest" transportation proposals may be identified as the transportation proposals with the lowest resulting greenhouse gas emissions. In a still further example, the "Suggested Routes" may be identified as the transportation proposals that most closely comply with user preferences associated with the transportation request, that most closely comply with typical proposal acceptance practices, and/or that have low network costs.

The server 902 may generate the transportation rankings in real-time and transmit (e.g., in real-time or near real-time) the rankings to a graphical user-interface 959 of the user device 950. Real-time generation and transmission of the transportation proposal rankings ensures users can make accurate transportation decisions. Without real-time transportation proposal rankings being generated and transmitted by the system, users may pursue transportation proposals that are outdated and therefore do not reflect the actual marketplace conditions for corresponding modalities a user may engage when attempting to travel between the starting location and ending location identified in the transportation proposal.

The server 902 may use information stored in a vehicle database 966 when generating and/or ranking transportation proposals 904, 918, 924. In particular, the vehicle database 966 may store vehicle locations 968 in association with modalities 970. The vehicle locations 968 may specify current locations for one or more vehicles associated with the modality 970. The vehicle database 966 may also store vehicle availability 972 in association with the modality 970 and/or vehicle locations 968. The vehicle availability 972 may specify a current availability of vehicles associated with the modality 970. The vehicle database 966 may also store predicted information regarding vehicles associated with modalities. For example, the vehicle locations 968 may store predicted future locations of vehicles associated with the modality 970 and the vehicle availability 972 may include predicted future availability of vehicles associated with the modality 970.

The server 902 may utilize this information when generating transportation proposals 904. For example, the server 902 may utilize the vehicle locations 968 and vehicle availability 972 to generate transportation proposals 904, 918, 924 that utilize vehicles located in close proximity to one or more locations of interest, such as a current location of a user requesting transportation or a location from which a user will need transportation in the future (e.g., to ride in a automobile to their destination after exiting a train at a transit stop). The server 902 may also utilize the information stored by the vehicle database 966 to calculate the proposal scores 903, 915, 923. For example, the server 902 may determine, using the vehicle locations 968 and the vehicle availability 972, how many vehicles are located in a certain area when calculating the network cost scores 932, 938, 944 (e.g., to identify vehicles that should be relocated). As another example, the server 902 may utilize the vehicle locations 968 and the vehicle availability 972 to calculate the disutility measure 928 (e.g., to determine how far a user may have to walk to access a personal mobility vehicle and/or to access transit modalities such as transportation by bus and/or train). In particular, predicted vehicle locations and availability may be used to predict a likelihood that a user will be unable to use a particular modality (e.g., bikes or scooters) in the future because no further vehicles are available in that modality.

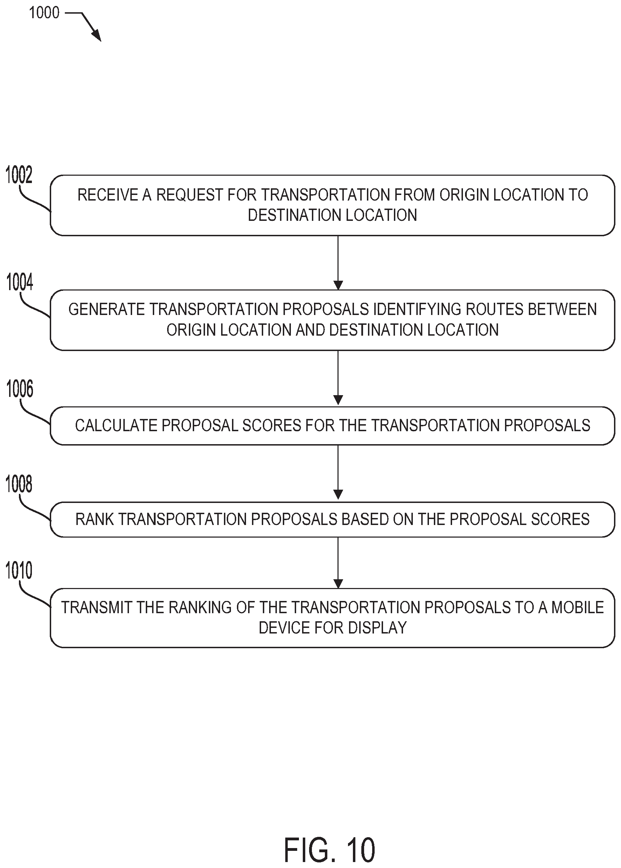

FIG. 10 depicts an exemplary method 1000 for generating a ranking of multi-modal transportation proposals for real-time presentation to a computing device, such as a mobile device. The method 1000 may be implemented on a computer system, such as the system 900. For example, the method 1000 may be implemented by the server 902 to generate the ranking of multi-modal transportation proposals for real-time presentation to a computing device. The method 1000 may also be implemented by a set of instructions stored on a computer readable medium that, when executed by a processor, cause the computer system to perform the method 1000.

The method 1000 may begin with receiving a request for transportation from an origin location to a destination location (block 1002). For example, a server may receive a transportation request from a user device. The transportation request may include a first location (e.g., an origin location) and a second location (e.g., a destination location).

The server may then generate transportation proposals that identify routes between the origin location and the destination location (block 1004). For example and with reference to FIG. 9, the server 902 may generate one or more transportation proposals 904, 918, 924 that identify routes between the origin location and the destination location. In certain implementations, the transportation proposals may include transportation segments that combine to form a route between the origin location and the destination location. For example, the transportation segments 906, 914, 916 may combine to form a route for transportation between the first location 954 and the second location 956. The transportation segments may each include a specific transportation modality that identifies a particular mode of transportation. For example, a transportation proposal may include a transportation segment that identifies a specific route between a first location and a second location, wherein a user is instructed to use a bike to travel along the specific route between the first and second location. Additionally and/or alternatively, the transportation proposal may include a transportation segment that identifies a specific route between a first location and a second location, wherein a user is instructed to travel within a automobile along the specific route between the first and second location. Additionally and/or alternatively, the transportation proposal may include a transportation segment that identifies a specific route between a first location and a second location, wherein a user is instructed to travel within a train along the specific route between the first and second location. Additionally and/or alternatively, the transportation proposal may include a transportation segment that identifies a specific route between a first location and a second location, wherein a user is instructed to walk along the specific route between the first and second location, before engaging or otherwise using a different type of mode of transportation. Accordingly, a generated transportation proposal may include any number of transportation segments, each of which may identify any type of transportation modality. In certain implementations, the transportation proposals may be obtained from a transportation proposal generation process, such as a process configured to generate transportation proposals in response to receiving transportation requests that specify locations between which transportation is desired (e.g., the first location and the second location).

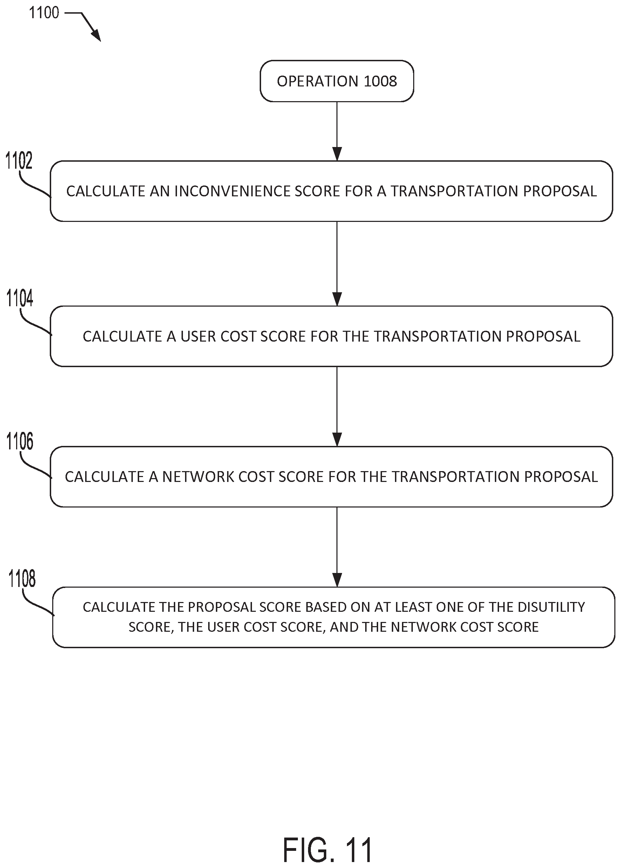

Referring again to FIG. 10, proposal scores may be generated for the transportation proposals (block 1006). For example, the server may generate proposal scores 903, 915, 925 for each of the transportation proposals 904, 918, 924 generated at block 1004. The proposal scores may be generated at least in part based on a total travel time, a disutility measure, a user cost, and/or a network cost. As explained further above, the proposal scores may be generated based on further measures. Calculating the proposal scores is discussed in further detail below in connection with the method 1100 and FIG. 11.

The transportation proposals may be ranked based on the proposal scores (block 1008). For example, the server may rank the transportation proposal with a higher proposal score (e.g., a proposal score indicating a more desirable transportation proposal) higher than a transportation proposal with a lower proposal score (e.g., a proposal score indicating a less desirable transportation proposal). In implementations where lower proposal scores indicate more desirable transportation proposals, the server may rank transportation proposals with lower proposal scores higher than transportation proposals with higher proposal scores.

In some scenarios, the proposal scores corresponding to transportation proposals may be equivalent. In such a scenario, the system may analyze each independent feature (i.e., the disutility measure, user cost, network cost) used to calculate the proposal score to establish the ranking of the transportation proposals. For example, assume a transportation proposal A has a high proposal score and a transportation proposal B has an equally high proposal score. To determine which transportation proposal (A or B) should be ranked higher, the system may analyze the disutility measure, user cost, and/or network cost features of the proposal score of both transportation proposal A and transportation proposal B. For example, even when the overall proposal score of transportation proposal A and transportation proposal B are the same, the disutility measure of the proposal score corresponding to transportation proposal A may be higher than the disutility measure of the proposal score corresponding to transportation proposal B. Thus, transportation proposal A may receive a relatively higher rank when compared to a transportation proposal B. Stated differently, even though the complexity scores of transportation proposal A and B are the same, transportation proposal A may be more desirable to a user and may therefore deserve a higher rank.

In some embodiments, the transportation proposals may be further ranked according to user preferences. More specifically, such rankings may account for user preferences regarding certain modalities (e.g., prefers bikes to scooters, does not like buses). Such preferences may involve preferred modality, number of ride segments completed, ride service ratings, ride history, waiting time preferences, pick-up/drop-off location preferences, and the like. For example, a user may be most interested in routes that involve the use of private cars, while routes that involve public transit (i.e., trains) are of lesser importance. Based on any of such preferences, the server 902 may further rank (or re-rank) the transportation proposals.

In certain embodiments, ranking according to user preferences may be performed to identify optimal transportation proposals according to optimality criteria (e.g., Pareto optimality criteria). The optimality criteria may be determined based on the user's preferences (e.g., the user's highest, strongest, or most important preferences). For example, if a user's two highest preferences are travel time and user cost, the transportation proposals may be analyzed to identify optimal transportation proposals according to the user's highest preferences. In particular, the transportation proposals may be analyzed to identify routes that most efficiently balance travel time and user cost. The most efficient transportation proposals may include transportation proposals for which there are no other transportation proposals that both (i) have a shorter travel time and (ii) have a lower user cost.

In such implementations, optimal transportation proposals may be identified for each of multiple modalities. For example, optimal transportation proposals for each modality, such as for each transportation proposal that include a longest transportation segment (e.g., longest distance travelled and/or longest travel time) of particular modalities. For example, the analysis described in the preceding examples may be repeated to identify the optimal transportation proposals for modalities including, e.g., transportation by train, transportation by car, transportation by bus, transportation by scooter, transportation by bike, transportation by walking. In still further implementations, optimality conditions may be used to analyze multiple modalities. For instance, the optimality conditions may specify minimizing the time and/or cost of multiple modalities. As an example, a first transportation proposal may include a 5 minute walk and a 10 minute scooter ride and a second transportation proposal may include a 3 minute walk and a 7 minute scooter ride. In such an instance, the second transportation proposal may be ranked higher than the first transportation proposal because the second transportation proposal has both a shorter walk and a shorter scooter ride. As another example, a third transportation proposal may include a 7.5 minute walk and a 7.5 minute scooter ride. The third transportation proposal may therefore be comparably optimal to the first transportation proposal according to the optimality criteria because the walking time for the third transportation proposal is longer than for the first transportation proposal, while the scooter ride time is shorter than for the first transportation proposal. Also, the total travel time for the first and third transportation proposals is the same. Such comparably optimal transportation proposals may be ranked between one another according to all or part of their respective proposal scores (e.g., one or more of the disutility measure, the user cost, the network cost, etc.).

In certain implementations, ranking the transportation proposal may include removing one or more of the transportation proposals from consideration. For example, a transportation proposal may be removed from consideration if the transportation proposal includes transportation segment(s) that do not comply with a user preference. As another example, a transportation proposal may be removed based on previous selections of transportation proposals associated with a user profile. For example, if a user never selects transportation proposals that include transportation by scooter, any such transportation proposals may be removed from consideration. As a further example, transportation proposals may be removed based on operating conditions, such as locations and/or availability of vehicles. For example, a transportation proposal may be removed if the transportation proposal includes a transportation segment associated with a modality that is unlikely to be available when needed by a user. As a further example, options may be removed from consideration based on the previously-discussed optimality conditions. For example, all non-optimal transportation proposals (e.g., transportation proposal that are not optimal or comparably optimal) may be removed from consideration. As a still further example, transportation proposals may be removed from consideration if all or part of their corresponding proposal scores do not comply with certain predetermined thresholds. In particular, transportation proposals may be removed from consideration if their proposal score does not exceed a predetermined threshold and/or if their corresponding disutility measure exceeds a predetermined threshold (e.g., indicating a transportation proposal that is too inconvenient).

The ranking of the transportation proposals may be transmitted to a mobile device for display on the mobile devices (block 1010). For example, the server may transmit the ranking of the transportation proposals to the user device from which the transportation request was received. The mobile device may display at least a portion of the ranking of the transportation proposals, e.g., via a graphical user interface of the mobile device. For example, the mobile device may display higher-ranked transportation proposals above lower-ranked transportation proposals. As another example, displaying a transportation proposal may include displaying an indication of the modalities (or a subset of the modalities) identified by the transportation proposal. Exemplary interfaces for displaying the ranking of the transportation proposals are discussed above in connection with FIGs. 8A-8B.

In other embodiments, the client device may display the ranked transportation proposals according to one or more categories. For example, the top transportation proposal rankings may be presented in organizing categories (e.g., Suggested, Fast, Affordable, Healthiest) that cause the rankings to be displayed in a manner that is easy to read while traveling. As another example, the rankings may be color-coded or symbolically indicated according to rank (e.g., highest ranked transportation proposal is highlighted green, lowest ranked transportation proposal is highlighted red). In other instances, the user interface may present nutritional information, calorie expenditures, and/or the environmental impact (e.g., carbon footprint) corresponding to the transportation proposals.

FIG. 11 represents a method 1100 for calculating a proposal score that indicates a difficulty of following a transportation proposal. The method 1100 may be implemented on a computer system, such as the system 900. For example, the methods 1100 may be implemented by the server 902 to automatically calculate proposal scores. The method 1100 may also be implemented by a set of instructions stored on a computer readable medium that, when executed by a processor, cause the computer system to perform the method.

The method 1100 begins with calculating a disutility measure for a transportation proposal (block 1102). As explained above, the disutility measure may be calculated to quantify a level of inconvenience that may be experienced by a user while receiving transportation according to the transportation proposal. For example, the inconvenience may include excessive walking, excessively short transportation segments, transportation segments that backtrack relative to previous transportation segments, and/or long travel times for the transportation proposal. In particular, the disutility measure 928, 934, 940 may be calculated based on one or more of a total backtracking distance of the route, a total walking distance of the route, and/or a total distance traveled by personal mobility vehicle for the route.

For example, the backtracking distanced of the route may be calculated by utilizing vector projections of transportation segments or portions thereof to determine an amount by which the distance to the destination location increases by virtue of completing the transportation segment or portions thereof. The vector projections may be repeated for at least a subset of the transportation segments or portions thereof and may be added together to determine the total backtracking distance. For example, a transportation proposal may have three transportation segments that backtrack 0.2 miles, 0.5 miles, and 0.4 miles. These backtracking distances may be added together to determine that the transportation proposal has a total backtracking distance of 1.1 miles. The disutility measure may additionally or alternatively be calculated based on a quantity of transportation segments that result in backtracking (e.g., three backtracking transportation segments in the preceding example).

As another example, the total walking distance of the route may be determined by adding together the total distance identified by transportation segments corresponding to walking modalities. For example, a transportation proposal may have three transportation segments with walking modalities: a first transportation segment where a user walks 0.3 miles to the train, a second transportation segment where the user walks 0.1 miles from the train to a scooter, and a third transportation segment where the user walks 0.1 miles from the scooter to their final destination. The walking distances for these transportation segments may then be added together to determine a 0.5 mile total walking distance for the transportation proposal. Transportation proposals with longer total walking distances may be ranked higher. For example, the total walking distance may be compared to a distance threshold (e.g., 0.5 miles, 1 mile or the like) and may be ranked higher if the total walking distance exceeds the distance threshold. In certain implementations, the disutility measure may be calculated based on a number of transportation segments with walking (e.g., three transportation segments in the preceding example). The total distance traveled by personal mobility vehicle may be determined by adding together the total distance identified by transportation segments corresponding to transportation by personal mobility vehicle (e.g., bike, scooter, skateboard). In certain implementations, the total distance traveled by personal mobility vehicle may be compared to the total walking distance. For example, if the total distance traveled by personal mobility vehicle is less than the total walking distance, it may be determined that the transportation segments corresponding to transportation by personal mobility vehicles cover too short a distance, which may inconvenience the user with excessive modality switching. In such instances, the disutility score may be ranked higher. In another example, if a ratio of the total distance traveled by personal mobility vehicle to the total walking distance is below a certain threshold, the disutility score may be ranked higher.

A user cost may also be calculated for the transportation proposal (block 1104). As explained above, the user cost predicts a route fare based on a cost of completing each transportation segment of a transportation proposal.

A network cost may be calculated for the transportation proposal (block 1106). As explained above, the network cost score quantifies the systematic and network cost or benefit of having certain modality assets (i.e., bikes, scooters, cars) located in a specific location or region at a specific time. For example, the server may determine that it is worth $5 to have a scooter relocated from a location with low demand to a location with high demand for the scooter. The server may also determine that it would cost $3 to have a third party relocate the scooter to the location with high demand. However, if a transportation proposal includes a transportation segment that would relocate the scooter to the location of high demand, the server may determine that the transportation segment has a network cost of -$3 (e.g., a network benefit of $3) in avoided relocation costs. In alternative implementations, the network cost in the preceding example may be determined to be -$5, indicative of the benefit to the network rather than the avoided relocation costs. In another example, the server may determine that it is worth -$5 to have a scooter relocated from an area of high demand to an area of low demand and that it will cost $3 to have a third party relocate the scooter to the area of high demand. If a transportation proposal has a transportation segment that results in the scooter relocating from the areas of high demand to the area of low demand, the server may determine that the transportation segment has a network cost of $3 and/or $5.

Any of the calculated disutility measure, user cost, and network cost may be combined or otherwise processed to calculate a proposal score for the transportation proposal (block 1108). In one embodiment, the proposal score may be calculated under the assumption that all of the features (i.e., the disutility measure, user cost, and network cost) are of equal value and/or weight. In such a scenario, the proposal score may be a summation of such values. In other embodiments, some features may influence the desirability of a transportation proposal more than other features (e.g., at a specific period of time, according to a specific user, etc.) and therefore should be weighted higher in the proposal score calculation. In such a scenario, features that more greatly influence the desirability are attributed a high weight value (e.g., a higher weighing coefficient), whereas features that provide a lower influence on the desirability may be given a lower weighted value, thereby causing the proposal score calculation may be more heavily impacted by the features of with a greater impact. In certain such scenarios, the weight values associated with features may be determined based at least in part by a predictive model (e.g., a machine learning model, a regression model). The predictive model may be trained based on transportation proposals for transportation between similar locations, or for transportation proposals accepted or rejected by users similar to a currently requesting user. In still further implementations, the higher-weighted features may be determined at least in part based on user preferences. For example, as discussed above, the user preferences may indicate types of routes (e.g., faster routes, less expensive routes, healthier routes) and/or types of modalities (e.g., preferred or disliked modalities) that a user prefers or dislikes. The higher-weighted features may then be selected to correspond to the features identified in the user preferences as significant to the desirability of transportation proposals to the user. In additional implementations, the level of higher-weighted features may include total travel time and/or travel time for particular, potentially inconvenient modalities (e.g., transportation by personal modality vehicle, transportation by bus, transportation by train), which may also be identified based on user preferences. Such higher-weighted features may cause the system to rank higher shorter transportation routes and/or transportation routes that include no inconvenient modalities and/or short uses of inconvenient modalities. Multi-Modal Transportation Proposal Generation

Referring again to FIGs. 1A-1B, by generating transportation routes with multiple modalities, the transportation matching system may combine the benefits of each type of modality. For example, bikes, scooters, and/or walking may be optimal for traveling short or medium distances (e.g., first-mile and last-mile legs of multi-modal transportation proposals), while automobiles and trains may be better for longer distances. Similarly, automobiles may be more flexible in scheduling and routing, but may be more expensive, while trains and buses may be less flexible but also less expensive. By combining any one of these modalities into a single transportation proposal, transportation routes such as the transportation route 140 may capitalize on the relative benefits of each type of modality. For example, during rush hour or periods of high road congestion, the transportation route 140 may be able to allow more users to quickly and conveniently access faster and less expensive transportation via trains 152 (in comparison to automobiles). In another example, transportation by automobile may be faster and easier if disparate passengers meet at a common pick-up location, or if new passengers travel to pick-up locations closer to an existing route for an operator. In such instances, transportation proposals can be generated that identify transportation routes that guide users to use personal mobility vehicles for transportation to such pick-up locations.

Therefore, there exists a need to generate transportation routes that utilize different modalities. Additionally, these transportation routes have to be generated quickly (e.g., in real time) to allow for subsequent processing after generation of the transportation routes (e.g., filtering and ranking of the generated transportation routes) and before presentation of the transportation routes to a user. One way to solve these technical problems, among others, is to automatically divide a transportation route into multiple transportation segments and simultaneously identify modalities for each of the transportation segments. For example, one of the transportation segments of the transportation route may include a primary modality and cover a longer portion of the transportation route than the other transportation segments. The remaining transportation segments may include modalities that provide transportation from: 1) a starting location of the transportation route to an origin location of the primary modality; and 2) a destination location of the primary modality to an ending location of the transportation route. To enable faster generation of transportation routes with multiple modalities, the transportation route may be divided into transportation segments and the modalities for the transportation segments may be selected in parallel using recursive techniques.

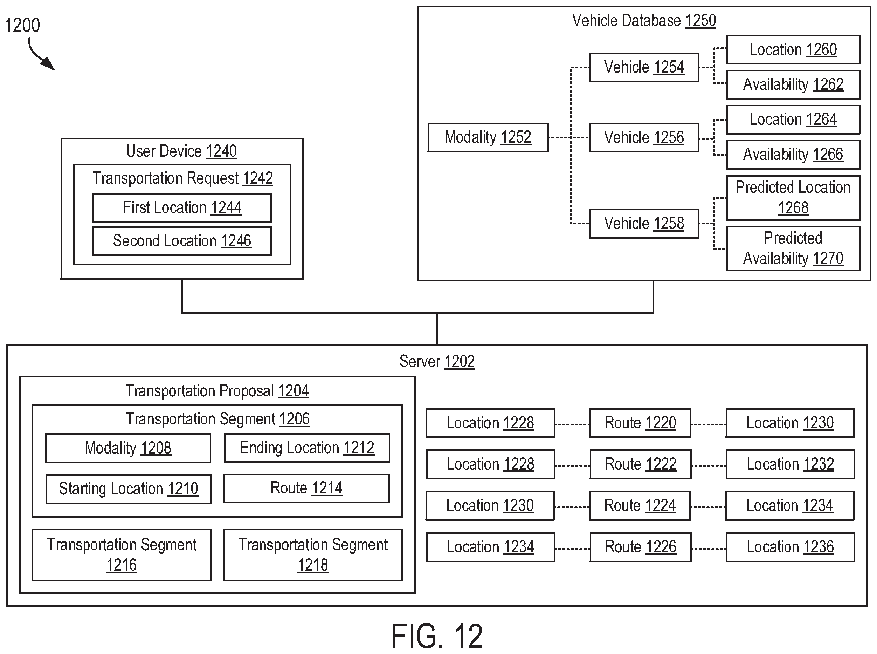

FIG. 12 illustrates a system 1200 according to an exemplary embodiment of the present disclosure. The system 1200 includes a server 1202, a user device 1240, and a vehicle database 1250. The server 1202 may be configured to generate a transportation proposal 1204 in response to transportation requests. For example, the server 1202 may receive transportation requests 1242 from user devices 1240 requesting transportation from a first location 1244 to a second location 1246 (e.g., in connection with implementing a transportation network and/or transportation matching system). In response to receiving the transportation request 1242, the server 1202 may generate the transportation proposal 1204 that identifies a route for transportation between the first and second locations 1244, 1246. In generating the transportation proposal 1204, the server 1202 may create one or more transportation segments 1206, 1216, 1218 that, in combination, identify the route for transportation between the first and second locations 1244, 1246. In the illustrated example, the transportation segment 1206 includes a modality 1208 identifying a type of transportation for the transportation segment 1206. The transportation segment 1206 also includes a starting location 1210 and an ending location 1212. In connection with the transportation segments 1206, transportation may be provided from the starting location 1210 to the ending location 1212 according to the modality 1208. The transportation segment 1206 also includes a route 1214, which may indicate the path followed from the starting location 1210 to the ending location 1212. Although not depicted, transportation segments 1216, 1218 may include similar information (i.e., a modality, starting location, ending location, and route). The transportation segments 1206, 1216, 1218 may be serviced by two or more different modalities 1208. For example, the transportation segment 1206 may correspond to transportation by automobile, the transportation segment 1216 may correspond to transportation by train, and the transportation segment 1218 may correspond to transportation by personal mobility vehicle (e.g., bike, skate-board, and/or scooter).

To generate the transportation proposal 1204, the server 1202 may identify locations 1228, 1230, 1232, 1234, 1236 between the first location 1244 and the second location 1246 (locations depicted multiple times indicate that the location may be associated with multiple routes, as will be explained in further detail below). The locations 1228, 1230, 1232, 1234, 1236 may correspond to one or more modalities 1208 (e.g., locations associated with vehicles capable of providing transportation according to one or more modalities 1208).

The server 1202 may generate routes 1220, 1222, 1224, 1226 between the locations 1228, 1230, 1232, 1234, 1236. Two or more of the generated routes 1220, 1222, 1224, 1226 may have one or more locations in common. For example, routes 1220, 1222 both include location 1228, routes 1220, 1224 both include location 1230, and routes 1224, 1226 both include location 1234. The server 1202 may combine the generated routes 1220, 1222, 1224, 1226 to form a transportation proposal 1204. For example, the server 1202 may identify combinations of routes 1220, 1222, 1224, 1226 that combine to provide transportation from the first location 1244 to the second location 1246. In particular, the location 1228 may correspond to the first location 1244 and the location 1236 may correspond to the second location 1246. The server 1202 may identify combination of routes 1220, 1224, 1226 that combine to form a complete transportation route from the location 1228 to the location 1236. For example, route 1220 provides transportation from location 1228 to location 1230, route 1224 provides transportation from location 1230 to location 1234, and route 1226 provides transportation from location 1234 to location 1236.

Each route 1220, 1224, 1226 of an identified combination of routes may correspond to a separate transportation segment 1206, 1216, 1218. For example, the route 1220 may correspond to route 1214 of the transportation segment 1206, the location 1228 may correspond to the starting location 1210, and the location 1230 may correspond to the ending location 1212. In this way, the server 1202 may generate transportation proposals. In particular, and as explained further below, the server 1202 may identify many routes 1220, 1222, 1224, 1226 between locations associated with different modalities 1208 and may combine the identified routes in various permutations to generate multiple transportation proposal(s) 1204. The transportation proposal 1204 may be processed to identify preferred or superior transportation proposals 1204 for presentation to the user device 1240. In certain implementations, the routes 1220, 1222, 1224, 1226 may be identified in parallel to reduce the time required to generate transportation proposals 1204.

The vehicle database 1250 stores information regarding vehicles 1254, 1256, 1258. In particular, the vehicle database 1250 stores vehicles 1254, 1256, 1258 in association with a modality 1252 identifying the type of transportation provided by the vehicles 1254, 1256, 1258. In particular, the modality 1252 may include one or more of transportation by automobile, transportation by train, transportation by bus, transportation by personal mobility vehicle (e.g., bike and/or scooter), and transportation by walking. The vehicle database 1250 may also store locations 1260, 1264 and availabilities 1262, 1266 for vehicles 1254, 1256. The locations 1260, 1264 may identify current locations for the corresponding vehicles 1254, 1256. For example, where the modality 1252 is transportation by automobile, the locations 1260, 1264 may indicate a current location of the vehicles 1254, 1256 (e.g., the automobiles). In another example, where the modality 1252 is transportation by bikes (e.g., docked and/or dockless bikes), the locations 1260, 1264 may indicate a current docked location of the vehicles 1254, 1256 (e.g., the bikes). In particular, for docked bikes the locations 1260, 1264 may indicate the locations of stations with docks containing bikes that are available for rental. Further, for dockless bikes, the location 1260, 1264 may indicate the locations of bikes that are available for use (e.g., locations at which previous users of the dockless bikes left the bikes). The locations 1260, 1264 may also identify locations from which a user may access the vehicles 1254, 1256. For example, where the modality 1252 is transportation by train, the locations 1260, 1264 may identify one or more train stations from which a user can board the trains. As another example, where the modality 1252 is transportation by bus, the locations 1260, 1264 may identify one or more bus stops from which a user can board the buses. As a still further example, where the modality 1252 is transportation by automobile and the automobile is operated autonomously, users may be required to be picked up and/or dropped off at predetermined locations. In such instances, the locations 1260, 1264 may identify the eligible pick-up and/or drop-off locations.

The availabilities 1262, 1266 may indicate whether a vehicle 1254, 1256 is currently available for use. For example, where the modality 1252 is transportation by automobile, the availabilities 1262, 1266 may indicate whether the vehicles 1254, 1256 are available for passengers (e.g., whether the vehicle is currently providing transportation services and/or whether the vehicle has additional, vacant seats for additional passengers). As another example, where the modality 1252 is transportation by scooter, the availabilities 1262, 1266 may indicate whether the corresponding vehicles 1254, 1256 are currently in use.

The server 1202 may use the locations 1260, 1264 stored in association with the vehicles 1254, 1256 identify the locations 1228, 1230, 1232, 1234, 1236 from which the routes 1220, 1222, 1224, 1226 are generated. The locations 1260, 1264 may be identified as being associated with the modality 1252 and may be selected according to one or more location rules associated with the modality 1252. When selecting the locations 1260, 1264, the server 1202 may utilize the availabilities 1262, 1266 to filter one or more of the locations 1260, 1264. For example, the server 1202 may only select locations 1260, 1264 for vehicles 1254, 1256 whose availabilities 1262, 1266 indicate that the vehicles 1254, 1256 are available.

The vehicle database 1250 may also store predicted locations 1268 and predicted availabilities 1270 in association with certain vehicles 1258. The predicted locations 1268 may indicate an expected future location of the corresponding vehicle 1258. In certain implementations, the predicted location 1268 may be identified based on previous trends for the vehicle 1258, or based on trends for vehicles similar to the vehicle 1258 (e.g., vehicles of the same modality 1252 located in the same or similar location at a same or similar time as a vehicle 1258). In other implementations, the predicted location 1268 may be determined based on current information associated with the vehicle 1258. For example, if the vehicle 1258 is currently fulfilling all or part of a transportation request, the predicted location 1268 may be determined based on a future location (e.g., a destination location) associated with the transportation request. The predicted availability 1270 may indicate an expected availability of the corresponding vehicle 1258. The predicted availability 1270 may be determined based on previous trends for the vehicle 1258, previous trends for vehicles similar to the vehicle 1258, or current route information associated with the vehicle 1258, similar to the predicted location 1268.

The server 1202 may utilize predicted locations 1268 and predicted availability 1270 when identifying certain locations 1228, 1230, 1232, 1234, 1236. For example, locations 1260, 1264 indicating the current location of vehicles 1254, 1256 may be used for earlier transportation segments 1206 of the transportation proposal 1204. However, such current location information may be less reliable in generating later transportation segments 1218. For example, the transportation proposal 1204 may include: 1) a transportation segment 1206 corresponding to transportation by automobile from the first location 1244 to a train station; 2) a transportation segment 1216 corresponding to transportation by train to a second train station; and 3) a transportation segment 1218 corresponding to transportation by scooter to the second location 1246. In such instances, current locations for scooters located near the second train station may not be reliably used to generate the transportation segments 1218 because these locations may change (e.g., as the scooters are used by other users). Accordingly, it may be necessary to use predicted locations 1268 indicating expected future locations of the scooters to generate the transportation segments 1218 and to identify corresponding locations and routes for the transportation segments 1218. The predicted availability 1270 may be used to filter predicted locations 1268 similar to the availabilities 1262, 1266. The server 1202 may remove from consideration vehicles 1258 whose predicted availabilities 1270 indicate that the vehicle 1258 is likely to be in use.

In certain implementations, the server 1202 may select and/or filter locations 1260, 1264 and/or predicted locations 1268 from the vehicle database 1250 based on additional criteria. Locations may be selected based on current environmental factors near the locations (e.g., weather conditions). For example, locations 1260, 1264 and/or predicted locations 1268 may be removed from consideration if the locations 1260, 1264 and/or predicted locations 1268 are experiencing or are predicted to experience adverse weather conditions (e.g., high levels of rain, snow). Locations 1260, 1264 and/or predicted locations 1268 may also be selected based on vehicle usage levels at or near the locations 1260, 1264 and/or predicted locations 1268. For example, if high levels of users are accessing or predicted to access vehicles at a particular location, the location may be removed from consideration. The server 1202 may also select locations 1260, 1264 and/or predicted locations 1268 based on user preferences. For example, a user may typically access vehicles 1254, 1256, 1258 of the modality 1252 from particular locations (e.g., the user may utilize a preferred transit stop or a preferred automobile pick-up/drop-off location). The locations 1260, 1264 and/or predicted locations 1268 may therefore be selected to include the user's preferred locations. As another example, a user may dislike accessing or may infrequently access vehicles from certain locations (e.g., locations that are far from a user's current location, locations that are physically difficult to access, and/or unsafe transit stops and/or automobile pick-up/drop-off locations). The locations 1260, 1264 and/or predicted locations 1268 may therefore be selected to exclude disliked or infrequently accessed locations.

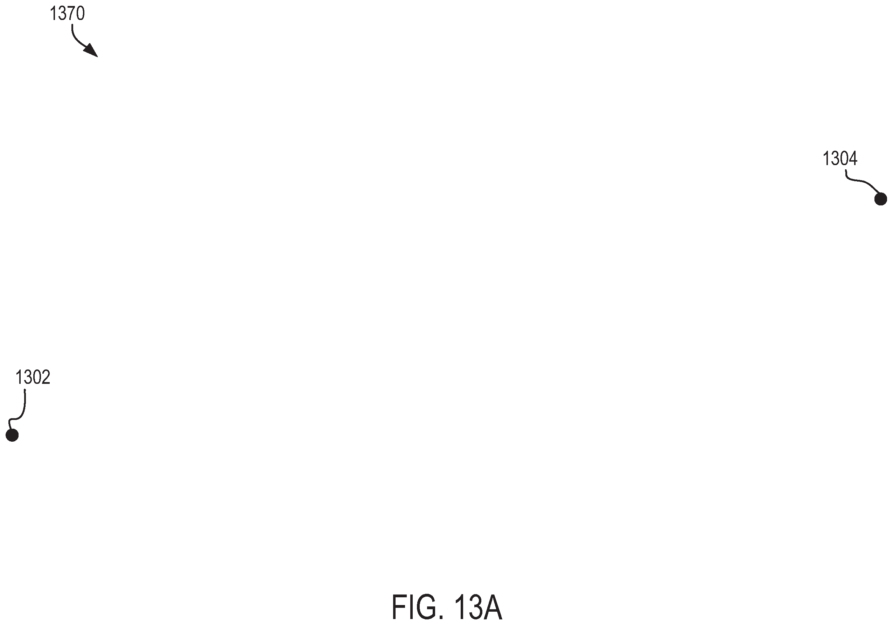

FIGS. 13A-13I illustrate a transportation proposal generation procedure that employs recursive techniques to identify transportation segments of the transportation proposal. The transportation proposal generation procedure includes multiple steps 1370, 1372, 1374, 1376, 1378, 1380, 1382, 1384, 1386, which may be performed by the server 1202 to generate one or more transportation proposals 1204.

Referring initially to FIG. 13A, at step 1370, locations 1302, 1304 may be identified. The locations 1302, 1304 may correspond to an origin location and a destination location for a transportation request. For example, the locations 1302, 1304 may correspond to the first location 1244 and the second location 1246 of a transportation request received from a user device 1240.

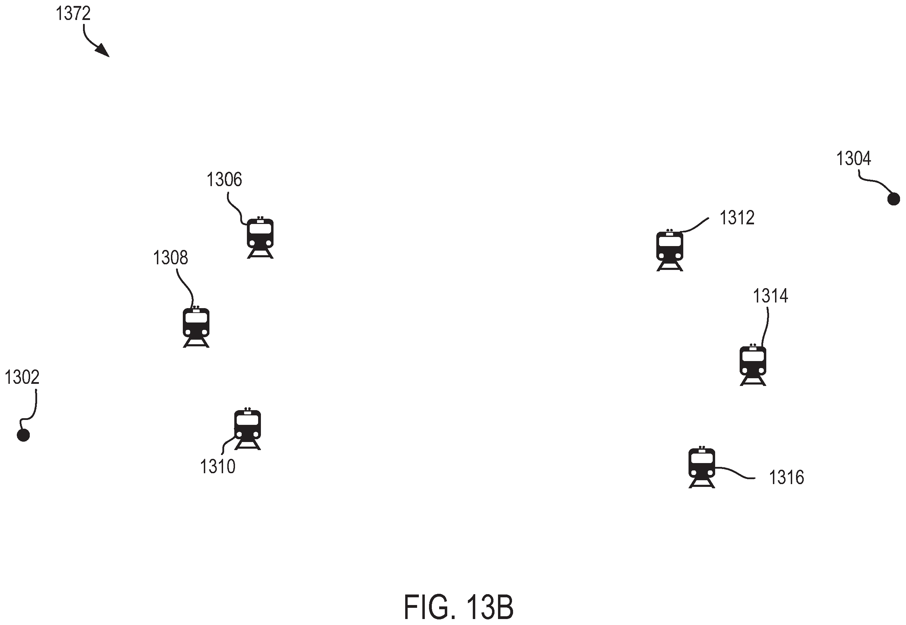

Turning to FIG. 13B, at step 1372, a primary modality is selected. As depicted, the primary modality is transportation by train. Referring to FIG. 12, the primary modality may be selected to constitute the longest transportation segment 1206, 1216, 1218 of a transportation proposal 1204 (e.g., to constitute the largest proportion of a total distance traveled, to constitute the largest proportion of a total travel time, to constitute the largest proportion of a total cost to the user). Also, the primary modality may be selected from among two or more primary modalities. For example, the primary modality may be selected from a list of primary modalities including transportation by train, transportation by automobile, and transportation by bus. Additionally or alternatively, the list may include transportation by a personal mobility vehicle. In certain implementations, the primary modality may be selected (e.g., selected from among the two or more primary modalities) based on one or more criteria. In certain implementations, the primary modality may be selected based on a distance between the locations 1302, 1304. For example, certain modalities (e.g., transportation by automobile, transportation by train, transportation by bus) may be better suited for travel over longer distances (e.g., distances exceeding one or two miles) and may therefore be preferentially selected when the locations 1302, 1304 are a larger distance apart. In further implementations, the primary modality may be selected based on a current time. For example, certain modalities (e.g., transportation by train, transportation by scooter, transportation by bus, transportation by bike) may be less susceptible to congested traffic conditions and may therefore be preferentially selected as the primary modality at times when traffic conditions are congested (e.g., when travel times by automobile are longer than transportation times by other modalities). In still further implementations, the primary modality may be selected based on a user preference associated with a received transportation request. For example, a user preference associated with a transportation request may indicate that a corresponding user prefers transit modalities (e.g., transportation by bus, transportation by train) over non-transit modalities (e.g., transportation by automobile, transportation by bike, transportation by scooter). The primary modality may therefore be preferentially selected to include transit modalities.

Referring again to FIG. 13B, locations 1306, 1308, 1310, 1312, 1314, 1316 associated with the primary modality may also be identified. The locations 1306, 1308, 1310, 1312, 1314, 1316 may be selected according to one or more location rules associated with the primary modality. For example, for transportation by train, the location rules may specify that the locations should be identified based on train stations located near location 1302 and location 1304. In particular, locations 1306, 1308, 1310, 1312, 1314, 1316 may be identified that are located nearest the locations 1302, 1304 and/or located within a predetermined threshold distance of the locations 1302, 1304.

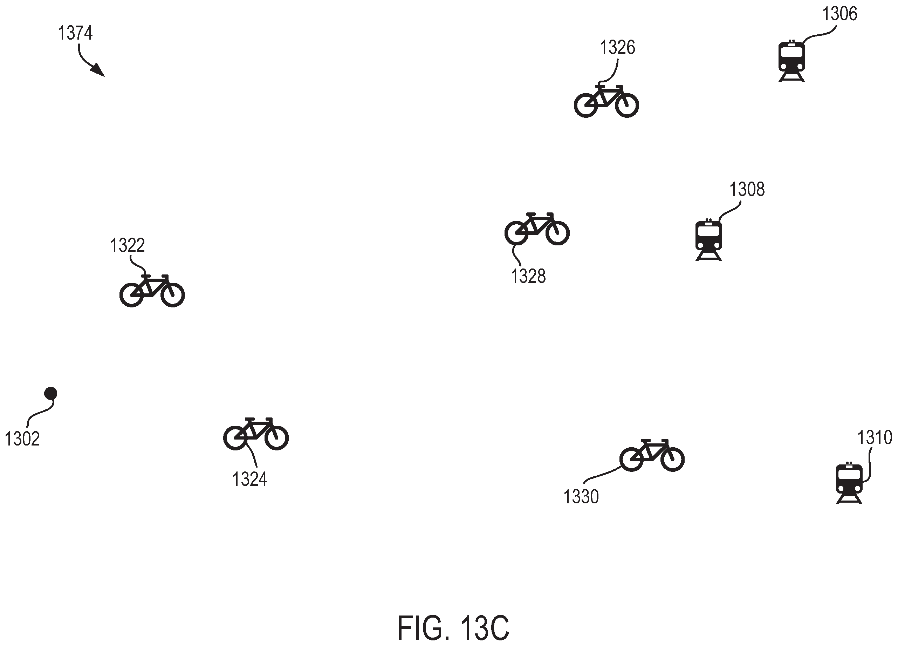

Turning now to FIG. 13C, at step 1374, the server 1202 may select a second modality. The second modality may be selected to provide transportation at least partly between the location 1302 and the locations 1306, 1308, 1310 associated with the first modality. As depicted, the second modality is transportation by docked bikes located at stations in fixed locations. As with the primary modality, the second modality may be selected from among two or more modalities. For example, the second modality may be selected to be one or more of transportation by docked bikes, transportation by dockless bikes, transportation by scooter, transportation by automobile, transportation by bus, transportation by train (e.g., a different train than the primary modality), and transportation by walking. Similar to the primary modality, the second modality may be selected according to criteria including at least one of the distance between the location 1302 and the locations 1306, 1308, 1310 associated with the primary modality, a time at which the second modality will be utilized, and user preferences associated with the request for transportation.

The server 1202 may also identify locations 1322, 1324, 1326, 1328, 1330 corresponding to the second modality. Similar to the locations 1306, 1308, 1310, 1312, 1314, 1316 associated with the primary modality, the locations 1322, 1324, 1326, 1328, 1330 associated with the second modality may be identified according to location rules associated with the second modality. For example, for transportation by docked bikes, the location rules may indicate that locations 1322, 1324, 1326, 1328, 1330 of docks should be identified that are located nearest the location 1302 and the locations 1306, 1308, 1310 associated with the first modality.

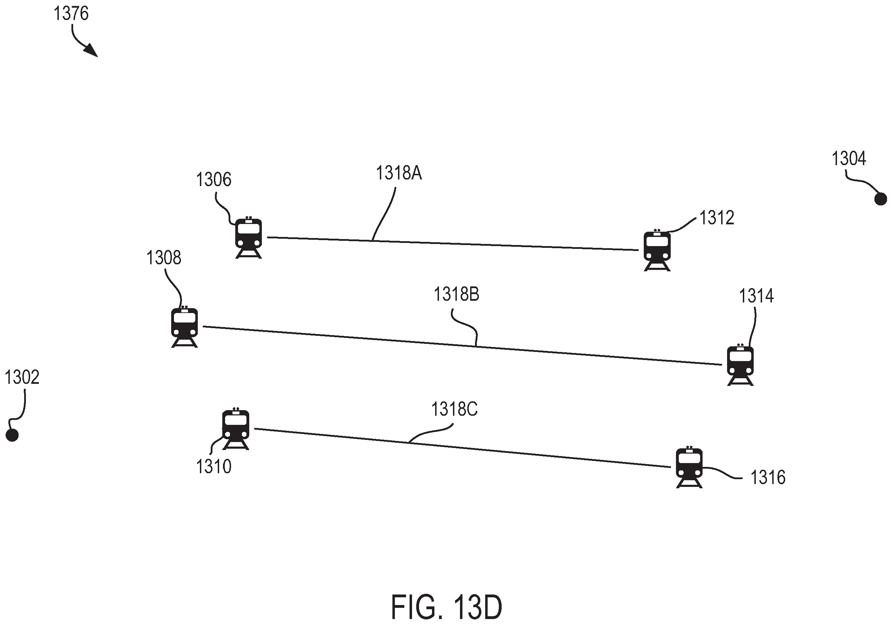

Turning now to FIG. 13D, at step 1376, the server 1202 may identify routes 1318A-C between the locations 1306, 1308, 1310, 1312, 1314, 1316. In one specific example, the routes 1318A-C may be identified according to route rules associated with the primary modality. The route rules may specify one or more criteria for identifying routes that comply with capabilities and or limitations of the primary modality (e.g., of vehicles associated with the modality). For example, for transportation by train, the route rules may specify identifying routes 1318A-C based on scheduled train departures from the locations 1306, 1308, 1310 near the location 1302 that arrive at the locations 1312, 1314, 1316 near the locations 1304. As another example, the route rules may specify one or more of a maximum distance requirement for the distance covered by the primary modality, a minimum distance requirement for the distance covered by the primary modality, a maximum time requirement for a total travel time using the primary modality, a minimum time requirement for a total travel time using the primary modality, a time-of-day requirement for when the primary modality will be utilized, and a maximum price requirement for utilizing the primary modality.

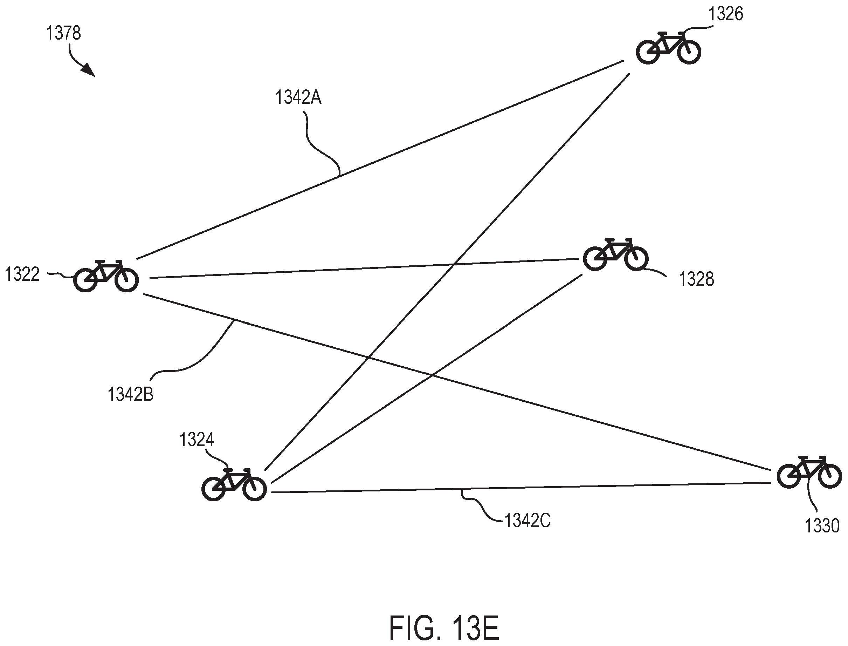

As illustrated in FIG. 13E, at step 1378, the server 1202 may identify routes 1342A-C between the locations 1322, 1324, 1326, 1328, 1330 associated with the second modality. In particular, the routes 1342A-C may be identified according to one or more route rules associated with the second modality for transportation between the locations 1322, 1324, 1326, 1328, 1330. For example, the routes 1342A-C may be generated based on biking directions between the locations 1322, 1324, 1326, 1328, 1330. In addition, the routes 1342A-C may be identified according to constraints indicated in the route rules associated with the second modality. For example, the route rules may indicate that the routes 1342A-C should not exceed a certain distance and/or should not exceed a time constraint (e.g., to limit overexertion by a user riding a bike). Additional route rule examples are discussed above in connection with route rules associated with the primary modality. One or more route rules similar to those discussed above may be used to generate routes associated with any of the modalities. For simplicity, only a subset of the routes identified are identified with reference numbers, but it should be understood that any reference to the routes 1342A-C refer to all such routes between the locations 1322, 1324, 1326, 1328, 1330.

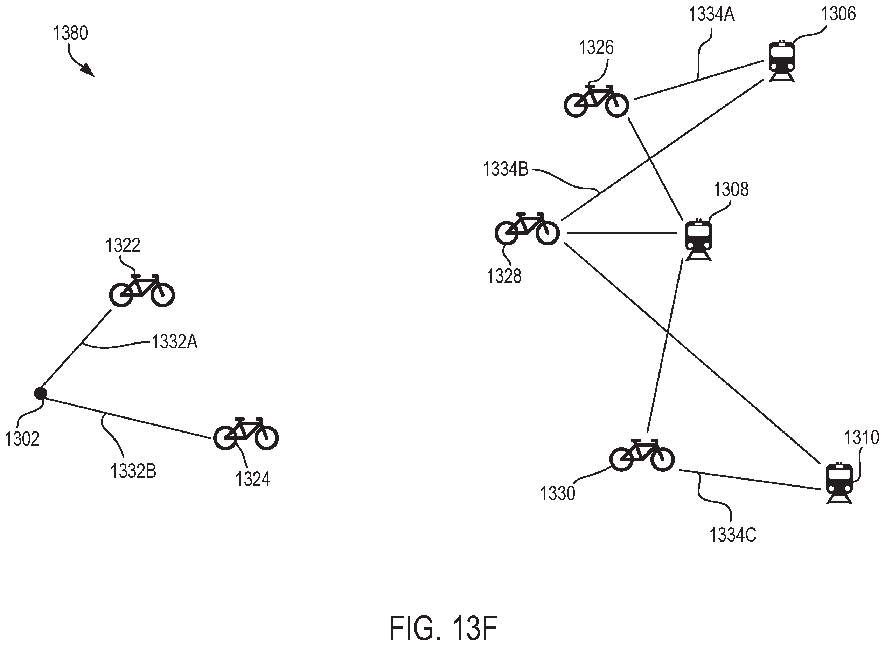

Turning now to FIG. 13F, at step 1380, the server 1202 may identify routes 1322A-B between the location 1302 and the locations 1322, 1324 associated with the second modality that is located nearest the location 1302. The server 1202 may also identify routes 1334A-C between the locations 1306, 1308, 1310 associated with the first modality and the locations 1326, 1328, 1330 associated with the second modality. In certain implementations, the routes 1332A-B and the routes 1334A-C may be generated for a modality different from the second modality. For example, the routes 1332A-B and the routes 1334A-C (only a subset of which are identified by reference numbers) may be generated as walking routes between the locations 1302, 1306, 1308, 1310 and the locations 1322, 1324, 1326, 1328, 1330 associated with the second modality (e.g., to walk to and from locations of the bikes).

Operations similar to those discussed in connection with steps 1374, 1376, 1378, 1380 may be performed to identify routes for transportation along an ending portion of the transportation route. For example, similar operations may be performed to identify routes from the locations 1312, 1314, 1316 associated with the primary modality to the location 1304.

Referring generally to FIGS. 13E-13F, once the routes 1332A-B, 1334A-C, 1342A-C are identified, the server 1202 may combine the routes 1332A-B, 1334A-C, 1342A-C to identify routes from the location 1302 to the locations 1306, 1308, 1310 associated with the primary modality. For example, as described above, the server 1202 may identify routes 1332A-B, 1334A- C, 1342A-C with overlapping locations that combine to provide transportation from the location 1302 to locations 1306, 1308, 1310. These combined routes may be further combined with the routes 1318A-C utilizing the primary modality, which may still further be combined with routes between locations 1304, 1312, 1314, 1316 to identify multiple routes between the locations 1302, 1304. These multiple routes may then be included in different transportation proposals. For example, the server 1202 may identify a transportation proposal that includes the routes 1332A, 1342A, 1334A, 1318A. As another example, the server 1202 may identify a transportation proposal based on the routes 1332B, 1342C, 1334C, 1318C. In particular, in certain implementations the server 1202 may identify separate transportation proposals for all or a subset of the combinations of routes between the locations 1302, 1304.

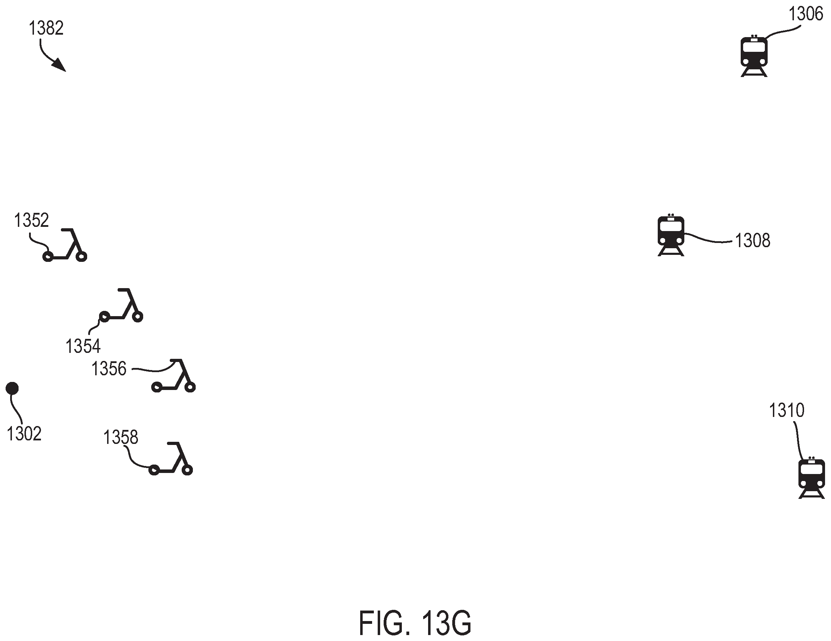

Operations similar to those discussed in connection with steps 1374, 1376, 1378, 1380 may be performed to identify routes between location 1302 and the locations 1306, 1308, 1310 that utilize different modalities. For example, and referring initially to FIG. 13G, at step 1382, the server 1202 may identify locations 1352, 1354, 1356, 1358 associated with a third modality different from the second modality. As depicted, the third modality is transportation by scooter. The location 1352, 1354, 1356, 1358 may be identified according to location rules associated with the third modality. As explained above, the route rules may differ for each type of modality. For example, users may be allowed to ride scooters directly to a given location. Accordingly, the location rules associated with the third modality may specify that locations 1352, 1354, 1356, 1358 associated with the vehicles near the location 1302 need to be identified, but that locations of vehicles associated with the third modality near the destination locations 1306, 1308, 1310 need not be identified, unlike at step 1374, where locations 1326, 1328, 1330 near the locations were identified near the locations 1306, 1308, 1310.

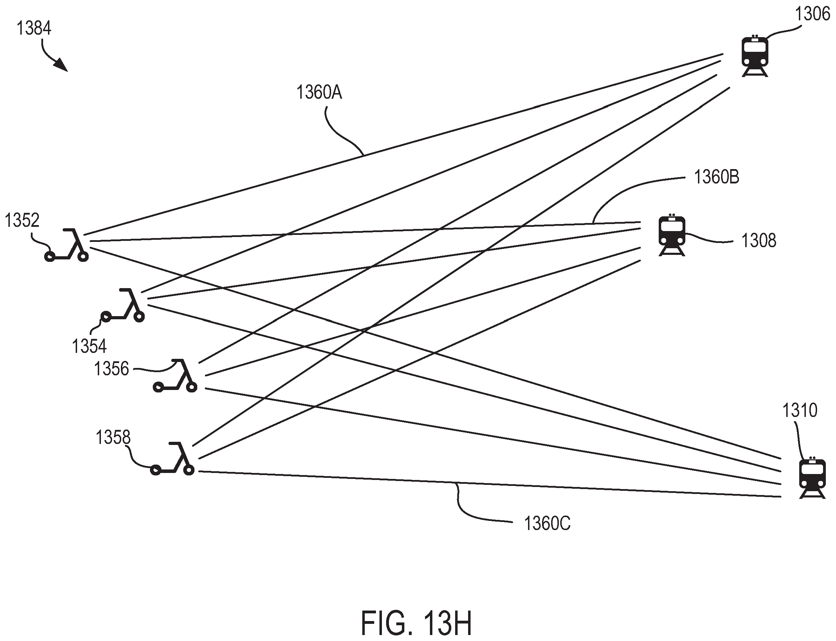

Turning to FIG. 13H, the server 1202 may identify routes 1360A-C between the locations 1352, 1354, 1356, 1358 associated with the third modality and the locations 1306, 1308, 1310 associated with the primary modality (only a subset of the routes are identified using reference numerals). Similar to the routes 1342A-C illustrated in FIG. 13E, the routes 1360A-C of FIG. 13H may be identified according to route rules associated with the third modality. For example, in addition to the route rules discussed above, the route rules associated with the third modality may consider battery charge levels of the scooters located at locations 1352, 1354, 1356, 1358. The batteries for each scooter may have different levels of charge, changing the maximum travel range for the vehicles, and the routes 1360A-C may be generated to account for these differences in travel range. For example, although a route is depicted between locations 1352, 1310, the scooter at location 1352 may not have a sufficiently-charged battery to travel the distance between the locations 1352, 1310. Accordingly, the server 1202 may not identify this route.

Referring to FIG. 131, at step 1370, the server 1202 may generate routes 1372A-D between the locations 1302 and the locations 1352, 1354, 1356, 1358. Similar to the routes 1332A-B (of FIG. 13F), the server 1202 may generate the routes 1372A-D as walking routes between the location 1302 and the locations 1352, 1354, 1356, 1358, depending on the walking distance required. The server 1202 may then combine the routes 1372A-D with the routes 1360A-C of FIG. 13H to generate routes between the locations 1302 and locations 1306, 1308, 1310 associated with the primary modality (e.g., using similar techniques to those discussed above in connection with the second modality).

Referring generally to FIGS. 13A-I, steps similar to steps 1370, 1372, 1374, 1376, 1378, 1380, 1382, 1384, 1386 may be performed to identify routes that utilize further modalities. For example, the server 1202 may maintain a list of available modalities further including, e.g., transportation by automobile, transportation by dockless bikes, transportation by walking, and transportation by bus. The server 1202 may repeat steps similar to the steps 1370, 1372, 1374, 1376, 1378, 1380, 1382, 1384, 1386 to identify routes according to one or more of such modalities. For example, the server 1202 may identify locations associated with these modalities according to location rules associated with these modalities and may identify routes between the identified locations according to route rules associated with these modalities. Similarly, steps similar to the steps 1370, 1372, 1374, 1376, 1378, 1380, 1382, 1384, 1386 may be repeated for different types of primary modalities. For example, one or more of the above-discussed modalities may be identified as a primary modality in certain implementations at step 1370, and the subsequent steps may be repeated for other modalities.

All or part of the steps 1370, 1372, 1374, 1376, 1378, 1380, 1382, 1384, 1386 may be performed at least partially in parallel. For example, the server 1202 may be configured to recursively generate routes using the steps 1370, 1372, 1374, 1376, 1378, 1380, 1382, 1384, 1386. For example, after identifying the locations 1306, 1308, 1310, 1312, 1314, 1316 at step 1372, the server 1202 may proceed with identifying routes associated with the second and third modalities (e.g., may perform one or more of the steps 1374, 1378, 1380, 1382, 1384, 1386) in parallel with identifying the routes 1318A-C at step 1376. Relatedly, after identifying the locations 1322, 1324, 1326, 1328, 1330 associated with the second modality at step 1374, the server 1202 may identify the routes 1332A-B, 1334A-C, 1342A-C between these locations 1322, 1324, 1326, 1328, 1330 in parallel (e.g., may perform steps 1378, 1380 in parallel). Similarly, after identifying the locations 1352, 1354, 1356, 1358 associated with the third modality at step 1382, the server 1202 may proceed with identifying the routes 1360A-C, 1372A-D between these locations in parallel (e.g., may perform steps 1384, 1386 in parallel). Further, the server 1202 may process the second and third modalities in parallel. In particular, steps 1374, 1378, 1380 may be performed in parallel with steps 1382, 1384, 1386. The server 1202 may also generate routes between the locations 1312, 1314, 1316 and the location 1304 in parallel with generating routes between the locations 1302 and the locations 1306, 1308, 1310. These routes may similarly be generated using recursive techniques that enable consideration and route generation for multiple modalities in parallel. By recursively generating these routes, processing time required to generate transportation routes that utilize multiple modalities may be reduced because the computational complexities of these routes can be addressed in parallel, reducing computational latency and improving responsiveness to received transportation requests, such as transportation requests 1242 received from user devices 1240. Additionally, such a recursive framework allows for new modalities to be added to consideration without having to alter the overall proposal generation framework. For example, a new modality may be added to consideration by adding an indication of the new modality and one or both of location rules and route rules associated with the new modality. Subsequent proposal generation operations may then take the new modality in consideration without having to further alter the steps performed. Further, because the recursive framework allows for multiple operations to be performed in parallel, new modalities may be added without adversely extending overall proposal generation times.

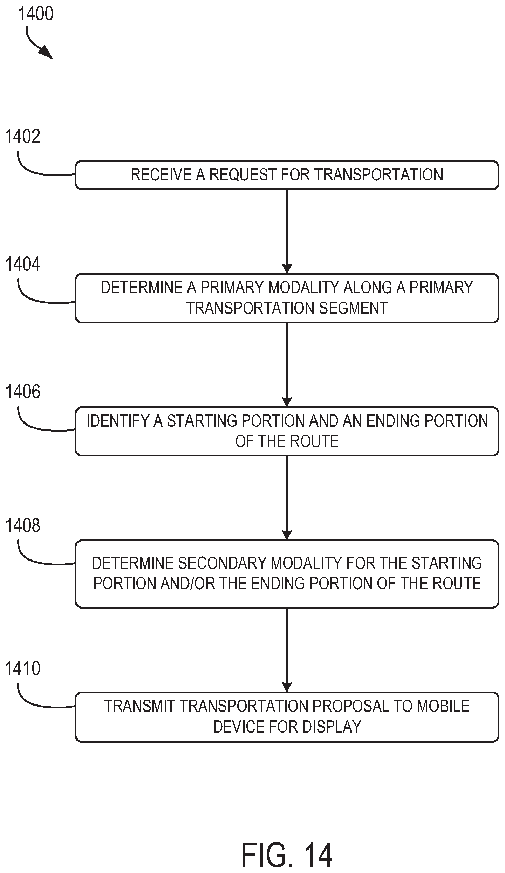

FIG. 14 illustrates a method 1400 according to an exemplary embodiment of the present disclosure. The method 1400 may be performed to generate transportation proposals 1204 that include multiple transportation segments 1206, 1216, 1218 having different modalities 1208 (as illustrated in FIG. 12). The method 1400 may be implemented on a computer system such as the system 1200. For example, the method 1400 may be implemented by the server 1202, the user device 1240, and/or the vehicle database 1250. The method 1400 may also be implemented by a set of instructions stored on a computer readable medium that, when executed by a processor, cause the computer system to perform the method. For example, all or part of the method 1400 may be implemented by a processor and memory of the server 1202, the user device 1240, and/or the vehicle database 1250. Although the examples below are discussed with reference to the flowchart illustrated in FIG. 14, many other methods of performing the acts associated with FIG. 14 may be used. For example, the order of some of the blocks may be changed, certain blocks may be combined with other blocks, one or more of the blocks may be repeated, and some of the blocks described may be optional.

The method 1400 may begin with receiving a request for transportation (block 1402). For example, and referring to FIG. 12, the server 1202 may receive a transportation request 1242 from a user device 1240 requesting transportation from a first location 1244 to a second location 1246. In response to the transportation request, the server 1202 may generate a transportation proposal 1204 to provide transportation between the first and second locations 1244, 1246. The transportation proposal 1204 may include a route for transportation between the first and second locations 1244, 1246 that includes multiple transportation segments.

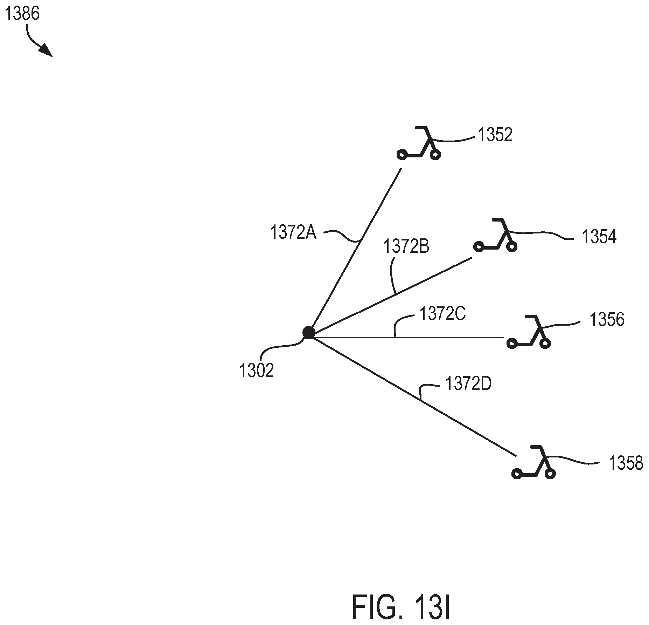

To generate the transportation proposal, a primary modality may be selected for transportation along a primary transportation segment (block 1404). For example, the server 1202 may select a primary modality from two or more modalities that could be used for transportation along the primary transportation segment. In some examples, in connection with selecting the primary modality, the server 1202 may identify locations associated with the primary modality. For example, the server 1202 may identify locations 1260, 1264 and/or predicted locations 1268 associated with vehicles 1254, 1256, 1258 of the primary modality. The locations may be selected according to location rules associated with the primary modality that specify strategies, criteria or other requirements for selecting locations from which the primary modality may be used for transportation (e.g., that comply with the capabilities of vehicles associated with the primary modality). For example, and referring to FIG. 13, depending on the modality, the location rules may identify locations 1306, 1308, 1310 near the first location (e.g., the location 1302) and/or locations 1312, 1314, 1316 near the second location (e.g., the location 1304). The server 1202 may identify routes between the locations 1306, 1308, 1310, 1312, 1314, 1316 associated with the primary modality and may select at least one of the routes as the primary transportation segment having a primary starting location and a primary ending location.

Returning to FIG. 14, a starting portion and an ending portion of the route may be identified (block 1406). For example, and referring to FIG. 12, the server 1202 may identify a starting portion of the route that occurs before the primary transportation segment and/or an ending portion of the route that occurs after the primary transportation segment. For example, the starting portion may be identified as the portion of the route from the first location 1244 to the starting location of the primary segment and the ending portion may be identified as the portion of the route from the ending location of the primary segment to the second location 1246.

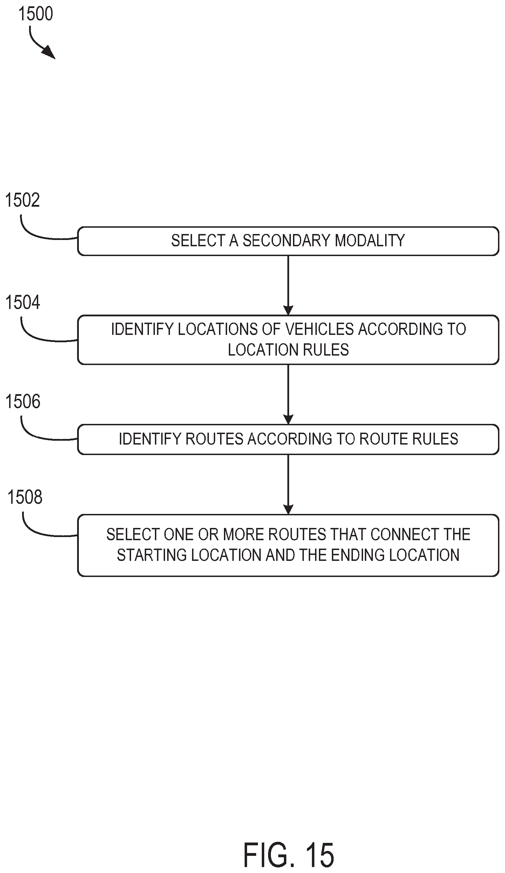

Referring again to FIG. 14, a secondary modality may be determined for the starting portion and/or the ending portion of the route (block 1408). For example, one or both of the starting portion of the route and the ending portion of the route may be divided into two or more transportation segments. Each of the transportation segments may have a correspond modality. As a specific example, the starting portion of the route divided into one transportation segment utilizing a second modality (e.g., transportation by walking) from the first location 1244 to a location 1260, 1264 of a vehicle 1254, 1256 associated with a third modality (e.g., transportation by scooter). The starting portion may also include another transportation segment utilizing the vehicle 1254, 1256 from the location 1260, 1264 to the starting location of the primary transportation segment. Dividing the starting portion and/or the ending portion of the route is discussed further below in connection with FIG. 15 and the method 1500. The primary transportation segment and the additionally-generated transportation segments may then be assigned to the transportation proposal.

The transportation proposal may be transmitted to a mobile device for display (block 1410). For example, and referring to FIG. 12, the server 1202 may transmit the transportation proposal 1204 to the user device 1240 from which the transportation request 1242 was received. Upon receiving the transportation proposal 1204, the user device 1240 may display the transportation proposal 1204 (e.g., on a display of the user device 1240). For example, the user device 1240 may display the transportation proposal 1204 such that the user device 1240 displays one or more of the modalities of the transportation proposal 1204 (e.g., the primary modality and the secondary modality). The user device 1240 may also display the route generated for the transportation proposal 1204.

Blocks 1404-1408 may be repeated for each route associated with the primary modality. For example, where the primary transportation segment is selected at block 1404 by identifying routes according to the primary modality, each of the routes identified may be separately identified as primary transportation segments for different transportation proposals. In such instances, blocks 1404-1408 may be repeated for each of the routes. Similarly, blocks 1406-1408 may be repeated for one or more modalities. For example, block 1408 may be repeated for different types of secondary modalities, as discussed above in connection with the steps 1374, 1378, 1380, 1382, 1384, 1386. Furthermore, where these steps are repeated for different types of modalities, all or part of the blocks 1404, 1406, 1408 may be repeated in parallel.

FIG. 15 illustrates a method 1500 according to an exemplary embodiment of the present disclosure. The method 1500 may be performed to divide the starting portion and/or the ending portion into transportation segments and to identify modalities for the transportation segments. For example, the method 1500 may be performed to implement block 1408 of the method 1400. The method 1500 may be implemented on a computer system such as the system 1200. For example, the method 1500 may be implemented by the server 1202, the user device 1240, and/or the vehicle database 1250. The method 1500 may also be implemented by a set of instructions stored on a computer readable medium that, when executed by a processor, cause the computer system to perform the method 1500. For example, all or part of the method 1500 may be implemented by a processor and memory of the server 1202, the user device 1240, and/or the vehicle database 1250. Although the examples below are discussed with reference to the flowchart illustrated in FIG. 15, many other methods of performing the acts associated with FIG. 15 may be used. For example, the order of some of the blocks may be changed, certain blocks may be combined with other blocks, one or more of the blocks may be repeated, and some of the blocks described may be optional.

The method 1500 may begin with selecting a secondary modality (block 1502). For example, the secondary modality may be selected from two or more available modalities (e.g., transportation by bike, transportation by scooter, transportation by automobile). In certain implementations, the secondary modality may be selected based on the primary modality. For example, each primary modality may have one or more secondary modalities from which the secondary modality may be selected. For example, where the primary modality is transportation by automobile, the secondary modality may be selected from one or more of transportation by bike, scooter, and/or walking. As another example, where the primary modality is transportation by train, the secondary modality may be selected from one or more of transportation by automobile, bus, bike, scooter, and/or walking. As a still further example, where the primary modality is transportation by bike (e.g., for shorter trips), the secondary modality may be selected from one or more of transportation by scooter and/or walking.

Based on the selected second modality, the server may identify locations of vehicles associated with the secondary modality according to location rules (block 1504). For example, the server 1202 may identify location rules associated with the secondary modality. The server 1202 may then identify locations 1260, 1264 and/or predicted locations 1268 associated with vehicles 1254, 1256, 1258 of the secondary modality in the vehicle database 1250.

The server 1202 may identify routes between a starting location of the transportation segment, an ending location of the transportation segment, and the locations of the vehicles (block 1506). The routes may be identified according to route rules associated with the secondary modality. For example, the route rules may specify a time or distance that the routes cannot exceed and/or other requirements (e.g., charge level considerations for scooters, preferred streets or paths for use with vehicles of the second modality). Identifying routes may include identifying routes that include the starting location of the portion being divided, the ending location of the portion being divided, and/or locations associated with the secondary modality, such as the routes 1332A-B, 1334A-C, 1360A-C, 1372A-D. In certain implementations, identifying the routes may also include identifying routes between two or more locations associated with the secondary modality, such as the routes 1342A-C of FIG. 13E. The specific types of routes to be generated based on the route rules and/or current availabilities of 1262, 1266 and predicted availabilities 1270 of vehicles 1254, 1256, 1258 of the secondary modality.

In certain implementation, identifying these routes may include identifying routes 1332A-B, 1334A-C, 1372A-D that correspond to a third modality (e.g., walking) that differs from the secondary modality. The third modality may be identified based on the secondary modality. For example, secondary modalities may have one or more associated tertiary modalities. For example, where the secondary modality is transportation by bike or scooter, the tertiary modalities may include transportation by walking. In another example, where the secondary modality is transportation by bus, the tertiary modalities may include transportation by bike, scooter, and/or walking. In certain implementations, such routes including the third modality may be identified recursively. For example, the third modality may be identified by repeating blocks 1502, 1504, 1506 to identify routes before and/or routes associated with the secondary modality. In particular, the blocks 1502, 1504, 1506 may be repeated until no further associated modalities remain. For example, the blocks 1502, 1504, 1506 may be repeated until routes that rely on walking modalities are generated (e.g., until routes similar to the routes 1332A-B, 1334A-B, 1372A-D)

The server 1202 may then select one or more of the routes that connect the starting location and the ending location (block 1508). For example, and with reference to FIG. 12, the server 1202 may combine the identified routes to select routes connecting the starting and ending locations of the portion. In particular, as explained above, the routes may be combined to identify all combinations of routes that connect the starting and ending locations. In such implementations, each of the combinations may be used to generate separate transportation proposals 1204. For example, the method 1500 may be repeated to divide both the starting portion and the ending portion and to identify combinations of routes for each of the starting portion and the ending portion. The combinations may then be combined with one another and with the first transportation segment to generate multiple transportation proposals 1204.

In certain implementations, the method 1500 may be repeated for multiple secondary modalities. For example, where the secondary modality is selected from among one or more secondary modalities at block 1502, the method 1500 may be repeated for each of the secondary modalities. In particular, the method 1500 may be repeated in parallel (e.g., recursively) for each of the secondary modalities. Such recursive executions may reduce the overall computing time required to identify routes for the starting portion and/or the ending portion. Multi-Modal Transportation Route Deviation Detection and Correction

Referring again to FIGs. 1A-1B, by generating transportation routes with multiple modalities, the transportation matching system may combine the benefits of each type of modality. For example, bikes, scooters, and/or walking may be optimal for traveling short or medium distances (e.g., first-mile and last-mile legs of multi-modal transportation proposals), while automobiles and trains may be better for longer distances. Similarly, automobiles may be more flexible in scheduling and routing, but may be more expensive, while trains and buses may be less flexible but also less expensive. By combining any one of these modalities into a single transportation proposal, transportation routes such as the transportation route 140 may capitalize on the relative benefits of each type of modality. For example, during rush hour or periods of high road congestion, the transportation route 140 may be able to allow more users to quickly and conveniently access faster and less expensive transportation via trains 152 (in comparison to automobiles). In another example, transportation by automobile may be faster and easier if disparate passengers meet at a common pick-up location, or if new passengers travel to pick-up locations closer to an existing route for an operator. In such instances, transportation proposals can be generated that identify transportation routes that guide users to use personal mobility vehicles for transportation to such pick-up locations.

Therefore, there exists a need to generate transportation routes that utilize different modalities. Additionally, once generated, transportation routes that utilize different modalities may have to account for changed circumstances related to one or more of the modalities. For example, a change in one modality (e.g., delay, change in availability) of a transportation route may make it less likely that other modalities can be successfully utilized (e.g., a user may miss a subsequent train, or the availability of personal mobility vehicles may be insufficient) later in the transportation route. Therefore, systems are required to detect and account for changes to transportation routes with different modalities and to do so in real time, which can be complex and challenging. One way to solve this problem is to track transportation routes that are in progress to detect changed conditions along the transportation routes and/or along segments of the transportation routes. Later segments of the transportation route whose successful completion are compromised may be identified and new segments of the transportation route that utilize new modalities, or that follow a different route, may be generated. These segments may then replace segments that are compromised by the changed condition.

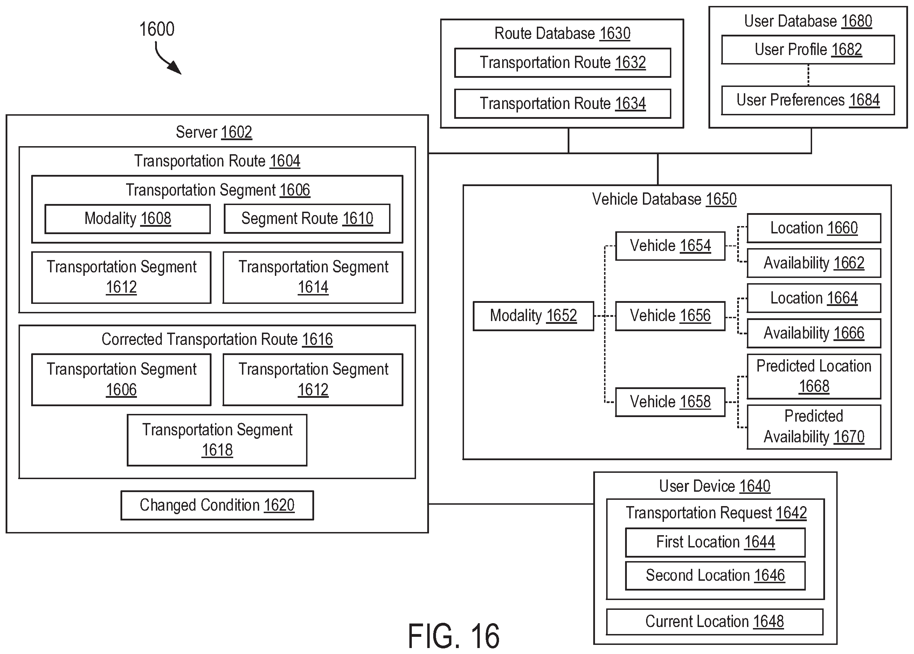

FIG. 16 illustrates a system 1600 according to an exemplary embodiment of the present disclosure. The system 1600 includes a server 1602, a user device 1640, a vehicle database 1650, a route database 1630, and a user database 1680. The server 1602 may be configured to generate and monitor transportation routes 1604 in response to transportation requests. For example, the server 1602 may receive transportation requests 1642 from user devices 1640 requesting transportation from a first location 1644 to a second location 1646 (e.g., in connection with implementing a dynamic transportation network and/or a transportation matching system). The user devices 1640 may include a computing device such as one or more of a smartphone, laptop, tablet computer, and/or wearable computing device. In response to receiving the transportation request 1642, the server 1602 may generate the transportation route 1604. The transportation route 1604 may include one or more transportation segments 1606, 1616, 1618. The transportation segment 1606 includes a modality 1608 identifying a type of transportation for the transportation segment 1606. The transportation segment 1606 also includes a segment route 1610 indicating an expected route of a user while following the transportation segment 1606 (e.g., a route from a starting location of the transportation segment 1606 to an ending location of the transportation segment 1606). For example, where the modality 1608 is transportation by scooter, the segment route 1610 may indicate an expected route the user will take (i.e., scooter) according to the transportation segment 1606. Although not depicted, transportation segments 1612, 1614 may also include associated modalities and segment routes. The transportation segments 1606, 1612, 1614 may be serviced by two or more different modalities 1608. For example, the transportation segment 1606 may correspond to transportation by personal mobility vehicle (e.g., bike and/or scooter), the transportation segment 1616 may correspond to transportation by train, and the transportation segment 1618 may correspond to transportation by walking. Other modalities may also include transportation by automobile and/or transportation by bus. Transportation by automobile may include transportation provided by an autonomously-operated automobile, semi-autonomously-operated automobile and/or an automobile operated by an operator such as a operator associated with a TNC. In implementations where the automobile is autonomously or semi-autonomously operated, the automobile may be limited in locations at which it can pick up and/or drop off users (e.g., may be restricted to specific pick-up/drop-off locations and/or zones). Additionally, transportation by automobile may include different types of transportation provided by the automobile. For example, transportation by automobile may include transportation by an independent automobile that fulfills a single request (e.g., a single request identifying an individual and/or a group of people associated with a single request). As another example, transportation by automobile may include transportation by a shared automobile that fulfills multiple request (e.g., the automobile may pick up and/or drop off users while transporting other users).

In some instances, the server 1602 may monitor transportation routes 1604 that are in progress for changed condition(s) 1620 indicating changes in transportation routes, modality availability, marketplace condition changes, and/or the like. For example, after a user associated with a user device 1640 accepts and begins a transportation route 1604, the server 1602 may monitor performance of the transportation route 1604. The changed condition 1620 may indicate that vehicles associated with the modality 1608 of one of the transportation segments 1606, 1612, 1614 are not available or are unlikely to be available to fulfill subsequent transportation segments. For example, transportation segment 1606 may correspond to transportation by walking and transportation segment 1612 may correspond to transportation by scooter. While a user is walking along the segment route 1610 to access a scooter for use with transportation segment 1612, a changed condition 1620 may cause the scooter to become unavailable or less likely to be available. For example, the server 1602 may determine that another user has accessed the scooter. As another example, the server 1602 may determine that another, different user is also walking towards the scooter and the different user may arrive at the scooter before the user associated with the user device 1640. For example, the server 1602 may identify two transportation routes that include transportation segments directing different users to walk to the same scooter. In such an instance, the server 1602 may compare the estimated times of arrival for the users and may determine a changed condition 1620 for the transportation route associated with the user expected to arrive later to the scooter (e.g., after the scooter has already been accessed). In implementations where there are multiple vehicles of the same modality in a given location or area, the server 1602 may compare an expected future demand for the vehicles to an expected future availability of the vehicles. In certain instances, the server 1602 may identify multiple transportation routes corresponding to different users that each have at least one overlapping transportation segment (e.g., a transportation segment with the same modality and beginning or ending at a similar location to one or more transportation segments of other transportation routes. For example, multiple users may be on a train according to a current transportation segment (e.g., transportation segment 1612), intending to disembark the train at a transit stop and board a scooter according to a subsequent transportation segment (e.g., transportation segment 1614). The server 1602 may compare the expected future demand indicated by the overlapping transportation segments to determine that more users are intending to access a scooter at the transit stop than there are scooters likely to be available at the transit stop according to the expected future availability of the scooters (e.g., because more scooters were used by preceding users). Accordingly, the changed condition 1620 may be indicative of insufficient scooters being available to fulfill the subsequent transactions.

In response identifying changed conditions, the server 1602 may generate a corrected transportation route 1616 that replaces any transportation segments that are no longer likely to be successfully completed by a user, due to the changed condition 1620. For example, the corrected transportation route 1616 may be generated to replace portions of the transportation route 1604 that are compromised by the changed condition 1620. In particular, the server 1602 may replace a transportation segment 1614 that is compromised by the changed condition 1620 with a transportation segment 1618 that is not compromised by the changed condition 1620. In some implementations, transportation segments 1618 that are newly-included in the corrected transportation route 1616 may be generated to utilize a different modality than the transportation segment 1614 that is compromised by the changed condition 1620. For example, where the transportation segments 1614 is transportation by scooter and the changed condition is a lack of availability of scooters, the transportation segment 1618 may be generated to designate transportation by bike or transportation by automobile. For example, the server 1602 may generate new transportation segments providing transportation by bike for users with closer destinations and may generate new transportation segments providing transportation by automobile for users with further destinations.

In additional or alternative implementations, the transportation segment 1618 may be generated to utilize a different route. For example, the changed condition 1620 may indicate that a user has deviated from a segment route 1610 of a transportation segment 1606 that is currently in progress, e.g., by receiving a current location 1648 from the user device 1640 associated with the user and comparing the current location 1648 to the segment route 1610. In particular, the segment route 1610 may expect the user to walk to a first transit stop to board a train. In such instances, the current location 1648 may instead be closer to a second transit stop. In response, the transportation segment 1618 may be generated to instead indicate that the user board a train at the second transit stop (e.g., on the same train line or on a different train line) and ride the train to a same or different location. The newly-generated transportation segment 1618 may then replace the transportation segment 1612 indicating that the user ride the train from the second transit stop. The server 1602 may also generate a new transportation segment to replace the transportation segment 1606 with a transportation segment that directs the user to walk to the second transit stop.

In certain implementations, the changed condition 1620 may compromise the successful completion of more than one transportation segment 1606, 1612, 1614 of a transportation route 1604. In such instances, the corrected transportation route 1616 may be generated to include one or more transportation segments 1618 replacing any transportation segments 1606, 1612, 1614 that are compromised. Also, in certain instances, a single transportation segment 1618 may be generated to replace more than one transportation segment 1606, 1612, 1614 that is compromised. For example, after disembarking a train, the transportation route may include transportation segments 1612, 1614 corresponding to transportation by bike to a bike dock location and transportation by walking to a user's final destination. If the changed condition 1620 indicates that bikes are no longer available for the user, a single transportation segment 1618 may be generated corresponding to transportation by automobile to the user's final destination.

The server 1602 may utilize the vehicle database 1650 to perform one or more of generating the transportation route 1604, identifying the changed condition 1620, and/or generating the corrected transportation route 1616. For example, the vehicle database 1650 may be used to identify a changed condition 1620 when vehicles move or otherwise become unavailable along the transportation route 1604. As another example, the vehicle database 1650 may be used to identify vehicles that are available and located near the transportation route 1604 for potential use in fulfilling a new transportation segment 1618 of the corrected transportation route 1616.

The vehicle database 1650 stores information regarding vehicles 1654, 1656, 1658. The vehicle database 1650 stores vehicles 1654, 1656, 1658 in association with a modality 1652 identifying the type of transportation provided by the vehicles 1654, 1656, 1658. In particular, the modality 1652 may include one or more of transportation by automobile, transportation by train, transportation by bus, transportation by personal mobility vehicle (e.g., bike and/or scooter), and transportation by walking. Modality 1608 may include similar types of transportation. The vehicle database 1650 may also store locations 1660, 1664 and availabilities 1662, 1666 for vehicles 1654, 1656. The locations 1660, 1664 may identify current locations for the corresponding vehicles 1654, 1656. For example, where the modality 1652 is transportation by automobile, the locations 1660, 1664 may indicate a current location of the vehicles 1654, 1656 (e.g., the automobiles). In another example, where the modality 1652 is transportation by docked bikes (e.g., bikes available for short-term rental between docks in fixed locations), the locations 1660, 1664 may indicate a current docked location of the vehicles 1654, 1656 (e.g., the bikes). In a further example, where the modality 1652 is transportation by dockless bikes (e.g., bikes that are not required to be accessed from and/or returned to docks), the locations 1660, 1664 may indicate a current location of the vehicles 1654, 1656 (e.g., the bikes), such as where the bikes are located after use by a preceding user. The locations 1660, 1664 may also identify locations from which a user may access the vehicles 1654, 1656. For example, where the modality 1652 is transportation by train, the locations 1660, 1664 may identify one or more train stations from which a user can board the vehicles 1654, 1656. As another example, where the modality 1652 is transportation by bus, the locations 1660, 1664 may identify one or more bus stops from which a user can board the vehicles 1654, 1656. The availabilities 1662, 1666 may indicate whether a vehicle 1654, 1656 is currently available for use. For example, where the modality 1652 is transportation by automobile, the availabilities 1662, 1666 may indicate whether the vehicles 1654, 1656 are available for passengers (e.g., whether the vehicle is currently providing transportation services and/or whether the vehicle has additional, vacant seats for additional passengers). As another example, where the modality 1652 is transportation by scooter, the availabilities 1662, 1666 may indicate whether the corresponding vehicles 1654, 1656 are currently in use.

The server 1602 may use the locations 1660, 1664 stored in association with the vehicles 1654, 1656 to identify the changed condition 1620. For example, the server 1602 may analyze the locations 1660, 1664 associated with the modality 1652 of a transportation segment 1606, 1612, 1614 to determine whether sufficient vehicles are located near a starting location of the transportation segment 1606, 1612, 1614 to service the transportation segment 1606, 1612, 1614. As a specific example, the server 1602 may analyze the location 1660, 1664 associated with the modality 1652 indicating the mode of transportation is by scooter. The server 1602 may then determine that there are no scooters available to fulfill a transportation segment 1606, 1612, 1614 of the transportation route 1604. The server 1602 may therefore determine that scooters are unavailable or unlikely to be able to fulfill the transportation segment 1606, 1612, 1614.

The server 1602 may also utilize the vehicle database 1650 to generate the corrected transportation route 1616. For example, the server 1602 may analyze locations 1660, 1664 to identify modalities 1652 with associated vehicles 1654, 1656 located near the transportation route 1604 and/or capable of fulfilling transportation segments 1618 that are newly-generated for the corrected transportation route 1616. Continuing the previous example, after determining that transportation by scooter is unable to fulfill a transportation segment 1606, 1612, 1614 of the transportation route 1604, the server 1602 may analyze locations 1660, 1664 of vehicles 1654, 1656 associated with a different modality 1652 (e.g., transportation by automobile, transportation by bus) to determine whether there are sufficient vehicles 1654, 1656 associated with the different modality 1652 to fulfill the transportation segment 1618 generated for the corrected transportation route 1616.

The vehicle database 1650 may also store predicted locations 1668 and predicted availabilities 1670 in association with certain vehicles 1658. The predicted locations 1668 may indicate an expected future location of the corresponding vehicle 1658. In certain implementations, the predicted location 1668 may be identified based on previous trends for the vehicle 1658, or for vehicles similar to the vehicle 1658 (e.g., vehicles of the same modality 1652 located in the same or similar location at a same or similar time as a vehicle 1658). In other implementations, the predicted location 1668 may be determined based on current information associated with the vehicle 1658. For example, if the vehicle 1658 is currently fulfilling all or part of the transportation request, the predicted location 1668 may be determined based on a future location (e.g., a destination location) associated with the transportation request, such as a future location indicated by a transportation route (e.g., a transportation segment of the transportation route) associated with the transportation request. The predicted availability 1670 may indicate an expected availability of the corresponding vehicle 1658. The predicted availability 1670 may be determined based on previous trends for the vehicle 1658, previous trends for vehicles similar to the vehicle 1658, or current route information associated with the vehicle 1658, similar to the predicted location 1668.

The server 1602 may utilize predicted locations 1668 and predicted availability 1670 when identifying the changed condition 1620 and/or when generating the corrected transportation route 1616. In particular, the server 1602 may utilize similar techniques to those discussed above in connection with the locations 1660, 1664. For example, rather than analyzing locations 1660, 1664 to identify the changed condition 1620, the server 1602 may additionally or alternatively analyze predicted locations 1668. As another example, rather than generating new transportation segments 1618 based on locations 1660, 1664, the server 1602 may utilize predicted locations 1668. For example, locations 1660, 1664 indicating the current location of vehicles 1654, 1656 may be useful for proactively identifying the changed condition 1620 or generating transportation segments 1618 to replace transportation segments that are currently in progress or will occur in the near future. However, such current location information may be less reliable in identifying changed conditions 1620 or generating new transportation segments 1618 for replacing transportation segments that occur later. In such examples, based on the predicted location 1668 and/or predicted availability 1670 of a vehicle 1658, the server 1602 may predict a likelihood that the vehicle 1658 will be available to fulfill a future transportation segment 1612, 1614 of the transportation route 1604. If the predicted likelihood is too low (e.g., is below a predetermined threshold), the server 1602 may identify a changed condition 1620 for the transportation route 1604.

In certain implementations, the availabilities 1662, 1666 and predicted availabilities may be used to filter the locations 1660, 1664 and predicted locations 1668. For example, when detecting the changed condition 1620 and/or generating corrected transportation routes 1616, the server 1602 may disregard locations 1660, 1664 of vehicles 1654, 1656 whose availabilities 1662, 1666 indicate that the vehicle 1654, 1656 is in use and/or may disregard predicted locations 1668 of vehicles 1658 whose predicted availabilities 1670 indicate that the vehicle 1658 is likely to be in use.

The route database 1630 stores transportation routes 1632, 1634. The transportation routes 1632, 1634 may correspond to transportation routes that are currently in progress and/or transportation routes that were previously completed. For example, the transportation routes 1632, 1634 may include multi-modal transportation routes that are in progress by users other than a user associated with the user device 1640. In certain implementations, the server 1602 may utilize the route database 1630 to identify more than one transportation route 1604, 1632, 1634 compromised by the changed condition 1620 and/or to generate corrected transportation routes 1616 for more than one transportation route 1604, 1632, 1634.

The user database 1680 may store information regarding user profiles 1682 associated with one or more users (e.g., users submitting transportation requests 1642). For example, the user database 1680 may store user preferences 1684 in association with user profiles 1682. The user preferences 1684 may specify, e.g., modality preferences regarding user (e.g., a user prefers one or more of transportation by automobile, transportation by train, transportation by bus, transportation by bike, transportation by scooter, transportation by walking other types of transportation). The user preferences 1684 may also specify specific types of preferred transportation by users (e.g., transportation by shared automobile, transportation independent automobile).

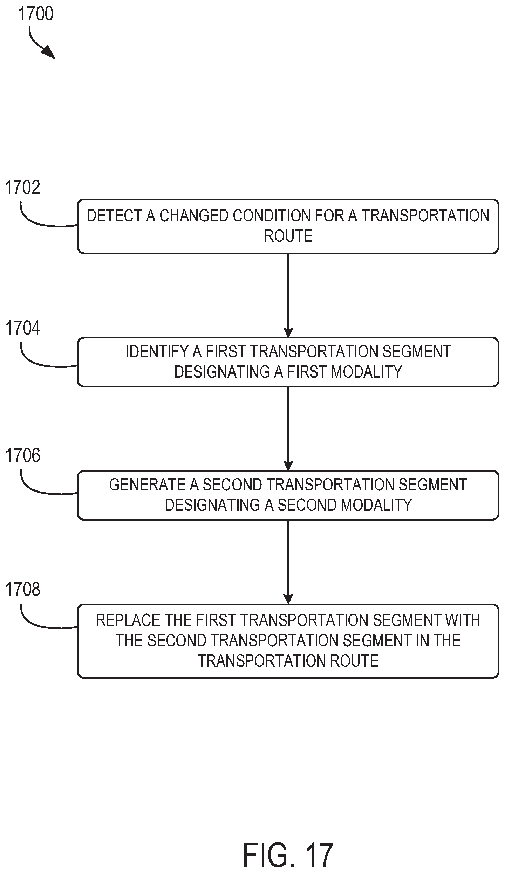

FIG. 17 illustrates a method 1700 according to an exemplary embodiment of the present disclosure. The method 1700 may be performed to detect and respond to a changed condition 1620 for transportation routes 1604 with multiple transportation segments 1606, 1612, 1614. The method 1700 may be implemented on a computer system such as the system 1600. For example, the method 1700 may be implemented by the server 1602, the user device 1640, the vehicle database 1650, the route database 1630, and/or the user database 1680. The method 1700 may also be implemented by a set of instructions stored on a computer readable medium that, when executed by a processor, cause the computer system to perform the method 1700. For example, all or part of the method 1700 may be implemented by a processor and memory of the server 1602, the user device 1640, the vehicle database 1650, the route database 1630, and/or the user database 1680. Although the examples below are discussed with reference to the flowchart illustrated in FIG. 17, many other methods of performing the acts associated with FIG. 17 may be used. For example, the order of some of the blocks may be changed, certain blocks may be combined with other blocks, one or more of the blocks may be repeated, and some of the blocks described may be optional.

The method 1700 may begin with detecting a changed condition for a transportation route (block 1702). For example, and referring to FIG. 16, the server 1602 may detect a changed condition 1620 for a transportation route 1604 that is currently in progress. The changed condition 1620 may reduce the likelihood that a transportation segments 1606, 1612, 1614 will be successfully completed. For example, the changed condition 1620 may reduce the likelihood that vehicles associated with a modality 1608 of one or more of the transportation segments 1606, 1612, 1614 will be available to service the transportation segments 1606, 1612, 1614. In certain implementations, as described above, the changed condition 1620 may be identified based on current conditions, including current locations 1660, 1664 and/or availabilities 1662, 1666 of vehicles 1654, 1656. In additional or alternative implementations, as also explained above, the changed condition 1620 may be proactively identified based on future conditions, including predicted locations 1668 and/or predicted availabilities 1670 of vehicles 1658.

In certain instances, detecting the changed condition 1620 may include detecting that a current location 1648 of the user device 1640 associated with a transportation route 1604 differs from an expected location of the user device 1640. For example, the server 1602 may compare the current location 1648 of the user device 1640 to a segment route 1610 of the transportation segment 1606 and may detect a changed condition if the current location 1648 differs by more than a predetermined threshold distance from the segment route 1610 (e.g., the user has deviated from the segment route 1610). As another example, the server 1602 may compare the current location 1648 to an expected location along a segment route 1610 based on a current time (e.g., how long a user has been using a certain modality). Even if the user is still following the segment route 1610, a changed condition 1620 may accordingly be detected if the user is ahead of the expected location or behind the expected location along the segment route 1610. As a still further example, in addition to current location 1648, the server 1602 may receive or determine a speed of the user device 1640 (e.g., a current speed of the user device, an average speed of the user device) and may compare the speed to an expected speed of the user device 1640 based on the modality 1608 of the current transportation segment 1606. For example, if the user is moving at an average speed of 3 miles per hour, but the modality 1608 indicates that user should be riding a bike, which may typically have a faster average speed of, e.g., 8-12 miles per hour. Based on the difference in average speed, the server 1602 may determine a changed condition 1620 indicating that the user is likely walking instead of riding a bike and/or that transportation by bike is slower than expected.

In other instances, detecting the changed condition may include detecting a change in availability of vehicles associated with a modality 1608 of one or more of the transportation segments 1606, 1612, 1614. For example, the server 1602 may continuously analyze (e.g., at regular or predetermined times and/or intervals) locations 1660, 1664, predicted locations 1668, availabilities 1662, 1666, and/or predicted availability 1670 of vehicles associated with the modalities 1652 of transportation segments 1606, 1612, 1614 of the transportation route 1604. The server 1602 may then determine a number of vehicles of each modality available to fulfill transportation segments 1606, 1612, 1614 with the same modality. For example, the server 1602 may determine a number of vehicles 1654, 1656 with a location 1660, 1664 near a starting location of the transportation segment(s) associated with the same modality. As another example, the server 1602 may determine a number of vehicles 1654, 1656 with a predicted location 1668 near a starting location of the transportation segment(s) associated with the same modality. The server 1602 may detect a changed condition 1620 if there are insufficient vehicles available and/or located near a starting location of an associated transportation segment to fulfill the transportation segment. For example, the server 1602 may also analyze transportation routes 1632, 1634 in the route database 1630 to determine whether transportation routes 1632, 1634 other than the transportation route 1604 include transportation segments associated with the same modality and similar starting location(s). If such transportation routes 1632, 1634 exist, the server 1602 may compare a number of vehicles of the modality that are available near the starting location of the identified transportation segment with a number of transportation routes 1632, 1634 including transportation segments associated with the same modality and similar starting location(s). If there are insufficient vehicles available to fulfill all of the transportation routes 1604, 1632, 1634, the server 1602 may determine a changed condition 1620. In additional or alternative implementations, the server 1602 may compare the number of vehicles for a modality identified by a transportation segment that are available near a starting location of the transportation segment with a current demand (e.g., based on current marketplace conditions including current locations and/or availabilities) or an expected demand (e.g., demand expected based on previous transportation behavior of users and/or based on expected future marketplace conditions including predicted locations and/or availabilities) for vehicles near the starting location. If insufficient vehicles of the modality are available near the starting location to fulfill the transportation segment and the expected demand, the server 1602 may detect a changed condition 1620.

In still further instances, detecting the changed condition 1620 may include detecting a change to an estimated time of completion of a transportation segment 1606, 1612, 1614 of the transportation route 1604. For example, as described above, the server 1602 may compare the current location 1648 of a user device 1640 associated with the transportation route 1604 to an expected location along the segment route 1610 of a current transportation segment 1606 (e.g., a transportation segment that is currently in progress). Based on the current location 1648, the server 1602 may calculate an expected time of completion for the current transportation segment 1606. If the expected time of completion of a transportation segment 1606 changes, the likelihood of successfully completing subsequent transportation segments 1612, 1614 may be reduced. For example, if the user is riding a scooter according to a transportation segment 1606 to a train station to board a train according to a transportation segment 1612 and the estimated time of completion changes to later than initially expected, the user may arrive after the train departs and may therefore miss the train. As another example, if the user is walking to a bike dock according to a transportation segment 1606 to access a bike according to a transportation segment 1612 and the estimated time of completion for the transportation segment 1606 changes to later than initially expected, there may no longer be bikes available when the user arrives at the bike dock. Therefore, the server 1602 may identify a changed condition 1620 based on a change to the estimated time of completion of a transportation segment.

The server 1602 may similarly identify a changed condition 1620 based on an estimated time of departure associated with a vehicle of certain modalities. For example, a time of departure for a train from a transit station may be delayed. The delayed time of departure may compromise the successful completion of a later transportation segments (e.g., boarding another train or boarding a bus). As another example, a time of departure for a bus from a transit station may be earlier than expected. A transportation route with a later transportation segment associated with the bus may be compromised, e.g., because users in transportation to the transit stop may not arrive in time to board the bus. As a further example, a user may arrive at a transit station earlier than expected and may board an earlier bus or train than expected. The user's earlier time of departure from the transit station may change the vehicles available or expected to be available when the user disembarks the earlier bus or train, requiring an update to the user's transportation route.

Returning again to FIG. 17, a first transportation segment may be identified that designates a first modality (block 1704). The first transportation segment may be identified as a transportation segment whose likelihood of successful completion is reduced by the changed condition. For example, the changed condition may decrease the likelihood that vehicles associated with the first modality will be available to service the first transportation segment. Referring to FIG. 16, the server 1602 may identify the first transportation segment from among the transportation segments 1606, 1612, 1614 of the transportation route 1604. In certain implementations, the first transportation segment may be identified as a transportation segment of the transportation route 1604 with a starting location near the changed condition 1620. For example, the server 1602 may monitor for a changed condition 1620 (e.g., changes to vehicle availability, changes to estimated times of arrival and/or departure for vehicles) on an aggregate level. For example, the server 1602 may track multiple transportation routes for multiple users that may be associated with multiple vehicles and/or multiple modalities in a given area. When one or more changed conditions 1620 are identified, the server 1602 may identify one or more transportation segments that are compromised by the changed condition 1620 (i.e., the transportation segments may not be successfully completed due to the change conditions).

In some instances, the transportation segments whose successful completion is compromised may be identified differently depending on the changed condition 1620. For example, the changed condition 1620 may indicate that fewer vehicles are located in an area than necessary to meet current or expected demand for vehicles in the area. In such instances, the transportation segments compromised by the changed condition 1620 may be identified as transportation segments designating the same modality with a starting location near the area with fewer vehicles. As another example, where the changed condition 1620 is a delay to the estimated time of arrival of a vehicle at a location, the transportation segments may be identified as transportation segments that occur after completion of transportation segments associated with vehicles that have a delayed estimated time of arrival. In a still further example, where the changed condition 1620 is an earlier time of departure for a vehicle from a location, the transportation segments may be identified as transportation segments associated with vehicles that have an earlier time of departure and associated with users that are not expected to arrive in time to board the vehicle before departure.

In additional or alternative implementations, the server 1602 may analyze the changed condition 1620 for individual transportation routes 1604. For example, the server 1602 may compare the current location 1648 of a user device associated with a transportation route 1604 to determine changes in expected times of completion of a transportation segment 1606, 1612, 1614 of the transportation route and/or to determine whether the current location 1648 deviates from an expected segment route 1610. The server 1602 may then identify the first transportation segment from among the transportation segments 1606, 1612, 1614 of the transportation route that is compromised by the changed condition 1620. For example, the current location 1648 may differ from the segment route 1610 of a transportation segment 1606 if the user has deviated from an expected segment route. In such instances, the transportation segment 1606 in progress at the time of the user's deviation may be identified as the first transportation segment compromised by the changed condition 1620 because the likelihood of successful completion of the transportation segment 1606 may be reduced as a result of the user's deviation (e.g., because the user may be unlikely to resume transportation along the segment route 1610, or because it may take longer to do so). Subsequent transportation segments 1612, 1614 may additionally or alternatively identified as the first transportation segment. For example, if a user is biking to a first transit stop according to the transportation segment 1606, but deviates from the segment route 1610 and instead proceeds towards a second transit stop, successful completion of a subsequent transportation segment 1612, 1616 with a starting location at the first transit stop is unlikely. The subsequent transportation segment 1612, 1616 may therefore be identified as a first transportation segment whose successful completion is compromised. As another example, if the estimated time of completion of a transportation segment 1606 that is currently in progress changes, transportation segments 1612, 1614 that occur after may be compromised, e.g., because the user may arrive after vehicles associated with the transportation segments 1612, 1614 may have departed by the time the user arrives and/or may no longer be available. Such subsequent transportation segments 1612, 1614 may accordingly be identified as the first transportation segment.

Returning to FIG. 17, a second transportation segment may then be generated designating a second modality (block 1706). For example, and referring to FIG. 16, the server 1602 may generate a transportation segment 1618 to replace the first transportation segment in the transportation route 1604. In certain implementations, the second transportation segment may be generated to designate a second modality that differs from the first modality of the first transportation segment. For example, where the first transportation segment designates transportation by train but is compromised because the estimated time of completion of a preceding transportation segment is after the train's estimated time of departure, the second transportation segment may be generated to designate transportation by automobile. In additional or alternative implementations, the second transportation segment may also be generated to have a different starting location and/or a different ending location than the first transportation segment. Continuing the previous example, the first transportation segment may begin at a transit station for the user to board a train and end at a second transit station for the user to disembark the train. Where the second modality is transportation by automobile, the second transportation segment may instead begin at a current location 1648 associated with the transportation route, which may save a user time as the user no longer needs to walk to the first transit station since the user are no longer going to board the train.

In further implementations, the second transportation segment may be generated such that the second modality indicates the same type of transportation as the first modality. For example, where the first transportation segment designates transportation by train but is compromised because the estimated time of completion of a preceding transportation segment is after the train's estimated time of departure, the second transportation segment may be generated to designate transportation by a train that departs at a later time. Relatedly, the second transportation may, in certain implementations, be generated to have the same starting location and ending location as the first transportation segment. Continuing the previous example, the second transportation segment may be generated to direct a user to board a train at the same transit stop and disembark the train at the same transit stop as the first transportation segment, but at later times to account for the later estimated time of completion of the earlier transportation segment.

In certain implementations, the second transportation segment may be generated to account for user preferences 1684 associated with a user profile 1682 that is associated with the transportation route 1604. For example, the user preferences 1684 may specify that the user prefers transportation by automobile and dislikes transportation by bus. The second transportation segment may therefore be generated to include transportation by automobile and to not include transportation by bus where applicable. As another example, the user preferences 1684 may specify that the user prefers transportation by shared automobile and dislikes transportation by automobile that is not shared. The second transportations segment may therefore be generated to include transportation by shared automobile where available.

Returning to FIG. 17, the first transportation segment may be replaced with the second transportation segment in the transportation route (block 1708). For example, and referring to FIG. 16, the second transportation segment 1618 may replace the first transportation segment 1614 to generate a corrected transportation route 1616. The corrected transportation route 1616 may then be presented for display at the user device 1640 for use by a user in navigating to their final destination. In certain implementations, the server 1602 may generate multiple transportation segments at block 1706. For example, the server 1602 may generate transportation segments that utilize different types of modalities. In such instances, the server 1602 may select one of the multiple transportation segments to replace the first transportation segment at block 1708. The server 1602 may select the transportation segment based on a reconciliation cost that compares the cost of completing a transportation route with the multiple transportation segments (e.g., completing a corrected transportation route including one or more of the multiple transportation segments) with the cost of completing the originally generated transportation route. For example, the server 1602 may select a transportation segment from among the multiple transportation segments that results in a corrected transportation route 1616 with a total cost that is closest to the initially-generated transportation route 1604. In similar implementations, the server 1602 may additionally or alternatively compare arrival times (e.g., may select the transportation segment that results in a corrected transportation route 1616 with the closest arrival time) and/or travel times (e.g., may select the transportation segment that results in a corrected transportation route 1616 with the closest total travel time). In still further implementations, the server 1602 may transmit multiple corrected transportation routes 1616 for selection by the user. During such an operation, the user device 1640 may present a query requesting whether a user would prefer corrected transportation routes that are similar to the initially-generated route or would prefer corrected transportation routes that include different modalities and/or routes from the initially-generated transportation route and may select one or more corrected transportation routes that comply with a result of the query.

By performing the method 1700, a server 1602 may be able to continually update transportation routes 1604 in response to changed conditions. Such changed conditions may be inherent to generating and executing on transportation routes with multiple modalities. Accordingly, by enabling the server 1602 to detect and respond to changed conditions along transportation routes 1604, the method 1700 improves the ability of the server 1602 to account for the changed conditions, thereby improving the robustness and usability of transportation routes 1604 generated by the server 1602, while also improving a user's ability to follow and comply with transportation routes 1604 and/or corrected transportation routes 1616.

In certain implementations, the method 1700 may be performed to process multiple transportation routes 1604 at the same time. For example, as explained regarding blocks 1702 and 1704, the server 1602 may detect changed conditions on an aggregate basis and may identify transportation segments from multiple transportation routes whose likelihood of successful completion is reduced by the same changed condition 1620. The server 1602 may further generate transportation segments to replace such transportation segments in the aggregate. For example, the server 1602 may generate the second transportation segment to replace a first subset of the transportation routes whose likelihood of successful completion is reduced by the changed condition 1620 and may further generate a third transportation segment to replace a second subset of the transportation routes whose likelihood of successful completion is reduced by the changed condition 1620. The third transportation segment may be generated with techniques similar to those used to generate the second transportation segment, but may designate a third modality different from the second modality. As a specific example, the server 1602 may identify that there are 60 users on a train associated with transportation routes 1604, 1632, 1634 that indicate the users will disembark the train at a transit stop and will begin riding scooters to their final destination. However, the server 1602 may also determine (e.g., based on the vehicle database 1650) that there are only 10 scooters available for use at the transit stop instead of the expected 60 scooters, compromising the completion of subsequent transportation segments for 50 of the users on the train. The server 1602 may therefore generate a second transportation segment for 40 of the users designating transportation by automobile to their final destination and may generate a third transportation segment for 10 of the users designating transportation by bike to their final destination. In this way, the server 1602 may be able to incorporate greater contextual information and can allocate transportation resources efficiently between multiple users whose transportation routes are compromised by changed conditions. Furthermore, the server 1602 may also be able to better balance overall utilization of different modalities across a transportation system. For example, where a first modality has high demand and a second modality has low demand, the server 1602 may balance the high demand by proposing more transportation segments that utilize the second modality to reduce demand for the first modality. To further foster user adoption of such recommendations, the server 1602 may recommend alternative modalities according to user preferences (e.g., may recommend the second modality to users who have previously utilized the second modality).

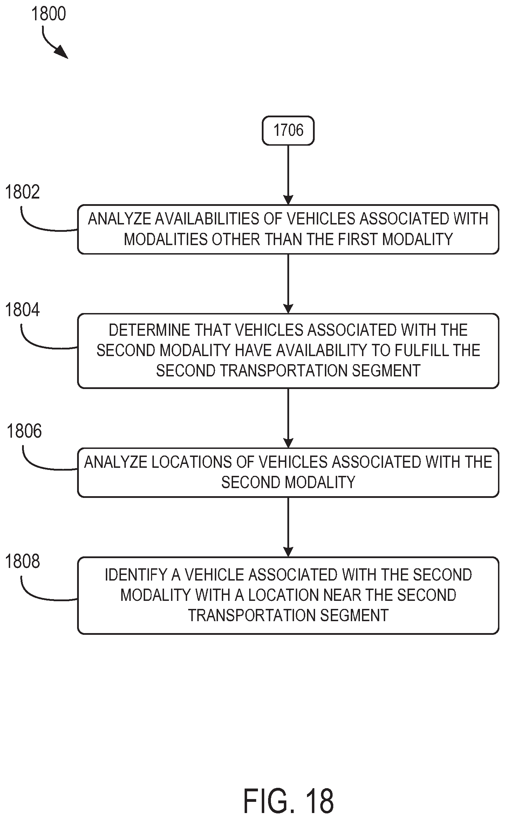

FIG. 18 illustrates a method 1800 according to an exemplary embodiment of the present disclosure. The method 1800 may be performed to generate new transportation segments 1618 for corrected transportation routes 1616. For example, the method 1800 may be performed to implement block 1708 of the method 1800. The method 1800 may be implemented on a computer system such as the system 1600. For example, the method 1800 may be implemented by the server 1602, the user device 1640, the vehicle database 1650, the route database 1630, and/or the user database 1680. The method 1800 may also be implemented by a set of instructions stored on a computer readable medium that, when executed by a processor, cause the computer system to perform the method. For example, all or part of the method 1800 may be implemented by a processor and memory of the server 1602, the user device 1640, the vehicle database 1650, the route database 1630, and/or the user database 1680. Although the examples below are discussed with reference to the flowchart illustrated in FIG. 18, many other methods of performing the acts associated with FIG. 18 may be used. For example, the order of some of the blocks may be changed, certain blocks may be combined with other blocks, one or more of the blocks may be repeated, and some of the blocks described may be optional.

The method 1800 may begin with analyzing availabilities of vehicles associated with modalities other than the first modality (block 1802). For example, and referring to FIGS. 16 and 17, the server 1602 may analyze availabilities 1662, 1666 and predicted availabilities 1670 of vehicles 1654, 1656, 1658 associated with modalities 1652 that are different than the first modality identified in block 1704 of the method 1700. Returning to FIG. 18, it may then be determined that vehicles associated with a second modality have sufficient availability to fulfill the second transportation request (block 1804). For example, and referring to FIG. 16, the availabilities 1662, 1666 and/or predicted availabilities 1670 may be compared to expected demand for vehicles 1654, 1656, 1658 associated with the second modality. The server 1602 may determine that vehicles associated with the second modality have sufficient availability if the availabilities 1662, 1666, 1670 indicate that the number of available vehicles associated with the second modality exceeds the expected demand by a predetermined threshold. Accordingly, it may be determined that vehicles associated with the second modality can be used to provide transportation in lieu of the first modality compromised by the changed condition.

Returning to FIG. 18, locations of vehicles associated with the second modality may then be analyzed (block 1806). For example, locations of vehicles that are available or expected to be available to fulfill the second transportation segment may be analyzed. In particular, and referring to FIG. 16, the server 1602 may compare locations of available vehicles to a starting location of the first transportation segment and/or to a current location 1648 of a user device 1640 associated with the transportation route 1604. Vehicles located near such locations (e.g., within a predetermined distance and/or predetermined travel time of such locations) may be identified as being able to fulfill the second transportation request. Returning to FIG. 18, a vehicle associated with the second modality may be identified with a location near the second transportation segment (block 1808). For example, the vehicle may have a location near the starting location of the second transportation segment. The vehicle that is identified may therefore be available and located to fulfill the second transportation segment. Accordingly, the vehicle that is identified may be assigned to fulfill the second transportation segment. In alternative implementations, a vehicle may be identified with a location near the current location 1648 of a user device 1640 associated with the transportation route 1604.

In certain implementations, blocks 1802 and 1806 may be combined and/or performed in parallel. For example, when analyzing the availabilities of vehicles associated with other modalities, the server 1602 may limit the analysis to only analyze vehicles located near the second transportation segment and/or the current location 1648. In additional or alternative implementations, one or more of the blocks 1802, 1804, 1806, 1808 may be omitted. For example, rather than analyzing availabilities of vehicles at blocks 1802, 1804, these blocks may be omitted. In such implementations, the method 1800 may begin with analyzing locations of vehicles associated with the second modality at block 1806. Exemplary Computing System

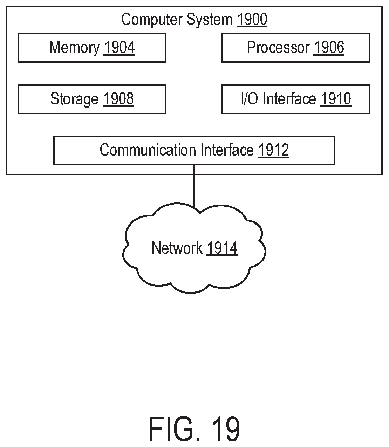

FIG. 19 illustrates an example computer system 1900 that may be utilized to implement one or more of the devices and/or components of FIG. 1A, FIG. 2, FIG. 9, FIG. 12, and/or FIG. 16, such as the transportation matching system, the server 202, the user device 250, the user database 260, the vehicle database 266, the server 902, the user device 950, the server 1202, the user device 240, the vehicle database 1250, the server 1602, the user device 1640 and/or the vehicle database 1650. In particular embodiments, one or more computer systems 1900 perform one or more steps of one or more methods described or illustrated herein. In particular embodiments, one or more computer systems 1900 provide the functionalities described or illustrated herein. In particular embodiments, software running on one or more computer systems 1900 performs one or more steps of one or more methods described or illustrated herein or provides the functionalities described or illustrated herein. Particular embodiments include one or more portions of one or more computer systems 1900. Herein, a reference to a computer system may encompass a computing device, and vice versa, where appropriate. Moreover, a reference to a computer system may encompass one or more computer systems, where appropriate.

This disclosure contemplates any suitable number of computer systems 1900. This disclosure contemplates the computer system 1900 taking any suitable physical form. As example and not by way of limitation, the computer system 1900 may be an embedded computer system, a system-on-chip (SOC), a single-board computer system (SBC) (such as, for example, a computer-on-module (COM) or system-on-module (SOM)), a desktop computer system, a laptop or notebook computer system, an interactive kiosk, a mainframe, a mesh of computer systems, a mobile telephone, a personal digital assistant (PDA), a server, a tablet computer system, an augmented/virtual reality device, or a combination of two or more of these. Where appropriate, the computer system 1900 may include one or more computer systems 1900; be unitary or distributed; span multiple locations; span multiple machines; span multiple data centers; or reside in a cloud, which may include one or more cloud components in one or more networks. Where appropriate, one or more computer systems 1900 may perform without substantial spatial or temporal limitation one or more steps of one or more methods described or illustrated herein. As an example and not by way of limitation, one or more computer systems 1900 may perform in real time or in batch mode one or more steps of one or more methods described or illustrated herein. One or more computer systems 1900 may perform at different times or at different locations one or more steps of one or more methods described or illustrated herein, where appropriate.

In particular embodiments, computer system 1900 includes a processor 1906, memory 1904, storage 1908, an input/output (I/O) interface 1910, and a communication interface 1912. Although this disclosure describes and illustrates a particular computer system having a particular number of particular components in a particular arrangement, this disclosure contemplates any suitable computer system having any suitable number of any suitable components in any suitable arrangement.

In particular embodiments, the processor 1906 includes hardware for executing instructions, such as those making up a computer program. As an example and not by way of limitation, to execute instructions, the processor 1906 may retrieve (or fetch) the instructions from an internal register, an internal cache, memory 1904, or storage 1908; decode and execute the instructions; and then write one or more results to an internal register, internal cache, memory 1904, or storage 1908. In particular embodiments, the processor 1906 may include one or more internal caches for data, instructions, or addresses. This disclosure contemplates the processor 1906 including any suitable number of any suitable internal caches, where appropriate. As an example and not by way of limitation, the processor 1906 may include one or more instruction caches, one or more data caches, and one or more translation lookaside buffers (TLBs). Instructions in the instruction caches may be copies of instructions in memory 1904 or storage 1908, and the instruction caches may speed up retrieval of those instructions by the processor 1906. Data in the data caches may be copies of data in memory 1904 or storage 1908 that are to be operated on by computer instructions; the results of previous instructions executed by the processor 1906 that are accessible to subsequent instructions or for writing to memory 1904 or storage 1908; or any other suitable data. The data caches may speed up read or write operations by the processor 1906. The TLBs may speed up virtual-address translation for the processor 1906. In particular embodiments, processor 1906 may include one or more internal registers for data, instructions, or addresses. This disclosure contemplates the processor 1906 including any suitable number of any suitable internal registers, where appropriate. Where appropriate, the processor 1906 may include one or more arithmetic logic units (ALUs), be a multi-core processor, or include one or more processors 1906. Although this disclosure describes and illustrates a particular processor, this disclosure contemplates any suitable processor.

In particular embodiments, the memory 1904 includes main memory for storing instructions for the processor 1906 to execute or data for processor 1906 to operate on. As an example, and not by way of limitation, computer system 1900 may load instructions from storage 1908 or another source (such as another computer system 1900) to the memory 1904. The processor 1906 may then load the instructions from the memory 1904 to an internal register or internal cache. To execute the instructions, the processor 1906 may retrieve the instructions from the internal register or internal cache and decode them. During or after execution of the instructions, the processor 1906 may write one or more results (which may be intermediate or final results) to the internal register or internal cache. The processor 1906 may then write one or more of those results to the memory 1904. In particular embodiments, the processor 1906 executes only instructions in one or more internal registers or internal caches or in memory 1904 (as opposed to storage 1908 or elsewhere) and operates only on data in one or more internal registers or internal caches or in memory 1904 (as opposed to storage 1908 or elsewhere). One or more memory buses (which may each include an address bus and a data bus) may couple the processor 1906 to the memory 1904. The bus may include one or more memory buses, as described in further detail below. In particular embodiments, one or more memory management units (MMUs) reside between the processor 1906 and memory 1904 and facilitate accesses to the memory 1904 requested by the processor 1906. In particular embodiments, the memory 1904 includes random access memory (RAM). This RAM may be volatile memory, where appropriate. Where appropriate, this RAM may be dynamic RAM (DRAM) or static RAM (SRAM). Moreover, where appropriate, this RAM may be single-ported or multi-ported RAM. This disclosure contemplates any suitable RAM. Memory 1904 may include one or more memories 1904, where appropriate. Although this disclosure describes and illustrates particular memory implementations, this disclosure contemplates any suitable memory implementation.

In particular embodiments, the storage 1908 includes mass storage for data or instructions. As an example and not by way of limitation, the storage 1908 may include a hard disk drive (HDD), a floppy disk drive, flash memory, an optical disc, a magneto-optical disc, magnetic tape, or a Universal Serial Bus (USB) drive or a combination of two or more of these. The storage 1908 may include removable or non-removable (or fixed) media, where appropriate. The storage 1908 may be internal or external to computer system 1900, where appropriate. In particular embodiments, the storage 1908 is non-volatile, solid-state memory. In particular embodiments, the storage 1908 includes read-only memory (ROM). Where appropriate, this ROM may be mask-programmed ROM, programmable ROM (PROM), erasable PROM (EPROM), electrically erasable PROM (EEPROM), electrically alterable ROM (EAROM), or flash memory or a combination of two or more of these. This disclosure contemplates mass storage 1908 taking any suitable physical form. The storage 1908 may include one or more storage control units facilitating communication between processor 1906 and storage 1908, where appropriate. Where appropriate, the storage 1908 may include one or more storages 1908. Although this disclosure describes and illustrates particular storage, this disclosure contemplates any suitable storage.

In particular embodiments, the I/O Interface 1910 includes hardware, software, or both, providing one or more interfaces for communication between computer system 1900 and one or more I/O devices. The computer system 1900 may include one or more of these I/O devices, where appropriate. One or more of these I/O devices may enable communication between a person and computer system 1900. As an example and not by way of limitation, an I/O device may include a keyboard, keypad, microphone, monitor, screen, display panel, mouse, printer, scanner, speaker, still camera, stylus, tablet, touch screen, trackball, video camera, another suitable I/O device or a combination of two or more of these. An I/O device may include one or more sensors. Where appropriate, the I/O Interface 1910 may include one or more device or software drivers enabling processor 1906 to drive one or more of these I/O devices. The I/O interface 1910 may include one or more I/O interfaces 1910, where appropriate. Although this disclosure describes and illustrates a particular I/O interface, this disclosure contemplates any suitable I/O interface or combination of I/O interfaces.

In particular embodiments, communication interface 1912 includes hardware, software, or both providing one or more interfaces for communication (such as, for example, packet-based communication) between computer system 1900 and one or more other computer systems 1900 or one or more networks 1914. As an example and not by way of limitation, communication interface 1912 may include a network interface controller (NIC) or network adapter for communicating with an Ethernet or any other wire-based network or a wireless NIC (WNIC) or wireless adapter for communicating with a wireless network, such as a Wi-Fi network. This disclosure contemplates any suitable network 1914 and any suitable communication interface 1912 for it. As an example and not by way of limitation, the network 1914 may include one or more of an ad hoc network, a personal area network (PAN), a local area network (LAN), a wide area network (WAN), a metropolitan area network (MAN), or one or more portions of the Internet or a combination of two or more of these. One or more portions of one or more of these networks may be wired or wireless. As an example, computer system 1900 may communicate with a wireless PAN (WPAN) (such as, for example, a Bluetooth^{®} WPAN), a WI-FI network, a WI-MAX network, a cellular telephone network (such as, for example, a Global System for Mobile Communications (GSM) network), or any other suitable wireless network or a combination of two or more of these. Computer system 1900 may include any suitable communication interface 1912 for any of these networks, where appropriate. Communication interface 1912 may include one or more communication interfaces 1912, where appropriate. Although this disclosure describes and illustrates a particular communication interface implementations, this disclosure contemplates any suitable communication interface implementation.

The computer system 1902 may also include a bus. The bus may include hardware, software, or both and may communicatively couple the components of the computer system 1900 to each other. As an example and not by way of limitation, the bus may include an Accelerated Graphics Port (AGP) or any other graphics bus, an Enhanced Industry Standard Architecture (EISA) bus, a front-side bus (FSB), a HYPER-TRANSPORT (HT) interconnect, an Industry Standard Architecture (ISA) bus, an IN-FINIBAND interconnect, a low-pin-count (LPC) bus, a memory bus, a Micro Channel Architecture (MCA) bus, a Peripheral Component Interconnect (PCI) bus, a PCI-Express (PCIe) bus, a serial advanced technology attachment (SATA) bus, a Video Electronics Standards Association local (VLB) bus, or another suitable bus or a combination of two or more of these. The bus may include one or more buses, where appropriate. Although this disclosure describes and illustrates a particular bus, this disclosure contemplates any suitable bus or interconnect.

Herein, a computer-readable non-transitory storage medium or media may include one or more semiconductor-based or other types of integrated circuits (ICs) (e.g., field-programmable gate arrays (FPGAs) or application-specific ICs (ASICs)), hard disk drives (HDDs), hybrid hard drives (HHDs), optical discs, optical disc drives (ODDs), magneto-optical discs, magneto-optical drives, floppy diskettes, floppy disk drives (FDDs), magnetic tapes, solid-state drives (SSDs), RAM-drives, SECURE DIGITAL cards or drives, any other suitable computer-readable non-transitory storage media, or any suitable combination of two or more of these, where appropriate. A computer-readable non-transitory storage medium may be volatile, non-volatile, or a combination of volatile and non-volatile, where appropriate.

According to a first embodiment, a system comprises: a processor; and a memory storing instructions which, when executed by the processor, cause the processor to: determine a first route between a starting location of a request for transportation and an ending location of the request for transportation, the first route including a rideable modality and a transit modality; display, on a computing device, indicators of the first route and at least one additional route; and provide, by the computing device, directions along the first route upon determining that an indicator of the first route has been selected.

According to a second embodiment referring to the first embodiment, the memory of the system stores further instructions which, when executed by the processor, cause the processor to detect that a first dock associated with rideable modality has insufficient available spaces to deposit rideable vehicles.

According to a third embodiment referring to the second embodiment, the memory of the system stores further instructions which, when executed by the processor, cause the processor to present an alert on the computing device indicating that the first dock has insufficient available spaces to deposit rideable vehicles.

According to a fourth embodiment referring to the second embodiment, the memory of the system stores further instructions which, when executed by the processor, cause the processor to: generate a second route that replaces at least one of a first segment associated with the rideable modality and a second segment associated with the transit modality; and display, on the computing device, an indicator of the second route.

According to a fifth embodiment referring to the fourth embodiment, the second route replaces the first segment with a third segment that ends at a second dock different from the first dock.

According to a sixth embodiment referring to the fourth embodiment, the second segment begins at a first transit station and wherein the second route replaces the second segment with a fourth segment that begins at a second transit station different from the first transit station.

According to a seventh embodiment referring to the first embodiment, the rideable modality is associated with a rideable vehicle selected from the group consisting of (i) a docked bicycle, (ii) a dockless bicycle, (iii) a docked scooter, and (iv) a dockless scooter.

According to an eight embodiment referring to the seventh embodiment, the first route is associated with a first rideable vehicle, and wherein the memory stores further instructions which, when executed by the processor, cause the processor to: receive, from the computing device, a request to update the rideable modality to utilize a second rideable vehicle; and generate a second route that utilizes the second rideable vehicle.

According to a ninth embodiment referring to the first embodiment, the indicator of the first route includes visual indicators of the rideable modality and the transit modality including at least a depiction of a rideable vehicle corresponding to the rideable modality and a depiction of a transit vehicle corresponding to the transit modality.

According to a tenth embodiment referring to the first embodiment, the indicators of the first route and the at least one additional route are displayed according to a ranking of corresponding disutility measures, the disutility measures being calculated at least in part to measure a total backtracking distance of the first route and the at least one additional route.

According to an eleventh embodiment referring to the first embodiment, the transit modality is associated with a transit vehicle selected from the group consisting of (i) a train, (ii) a bus, and (iii) a ferry.

According to a twelvth embodiment, a method comprises; determining a first route between a starting location of a request for transportation and an ending location of the request for transportation, the first route including a rideable modality and a transit modality; displaying, on a computing device, indicators of the first route and at least one additional route; and providing, by the computing device, directions along the first route upon determining that an indicator of the first route has been selected.

According to a thirteenth embodiment referring to the twelfth embodiment, the method further comprises detecting that a first dock associated with rideable modality has insufficient available spaces to deposit rideable vehicles; and presenting an alert on the computing device indicating that the first dock has insufficient available spaces to deposit rideable vehicles.

According to a fourteenth embodiment referring to the thirteenth embodiment, the method further comprises generating a second route that replaces at least one of a first segment associated with the rideable modality and a second segment associated with the transit modality; and displaying, on the computing device, an indicator of the second route.

According to a fifteenth embodiment referring to the twelfth embodiment, the rideable modality is associated with a rideable vehicle selected from the group consisting of (i) a docked bicycle, (ii) a dockless bicycle, (iii) a docked scooter, and (iv) a dockless scooter, wherein the first route is associated with a first rideable vehicle, and wherein the method further comprises: receiving, from the computing device, a request to update the rideable modality to utilize a second rideable vehicle; and generating a second route that utilizes the second rideable vehicle.

Herein, "or" is inclusive and not exclusive, unless expressly indicated otherwise or indicated otherwise by context. Therefore, herein, "A or B" means "A, B, or both," unless expressly indicated otherwise or indicated otherwise by context. Moreover, "and" is both joint and several, unless expressly indicated otherwise or indicated otherwise by context. Therefore, herein, "A and B" means "A and B, jointly or severally," unless expressly indicated otherwise or indicated otherwise by context.

The scope of this disclosure encompasses all changes, substitutions, variations, alterations, and modifications to the example embodiments described or illustrated herein that a person having ordinary skill in the art would comprehend. The scope of this disclosure is not limited to the example embodiments described or illustrated herein. Moreover, although this disclosure describes and illustrates respective embodiments herein as including particular components, elements, feature, functions, operations, or steps, any of these embodiments may include any combination or permutation of any of the components, elements, features, functions, operations, or steps described or illustrated anywhere herein that a person having ordinary skill in the art would comprehend. Furthermore, reference in the appended claims to an apparatus or system or a component of an apparatus or system being adapted to, arranged to, capable of, configured to, enabled to, operable to, or operative to perform a particular function encompasses that apparatus, system, component, whether or not it or that particular function is activated, turned on, or unlocked, as long as that apparatus, system, or component is so adapted, arranged, capable, configured, enabled, operable, or operative. Additionally, although this disclosure describes or illustrates particular embodiments as providing particular advantages, particular embodiments may provide none, some, or all of these advantages.

## Claims

1. A system comprising: a processor (1906); and a memory (1904) storing instructions which, when executed by the processor (1906), cause the processor (1906) to:
determine a first route comprising at least a first segment (1614) that includes at least a first starting location of a request for transportation and a first ending location of the request for transportation and wherein a first modality is assigned as a modality of the first segment (1614) and wherein a first vehicle is associated with the first modality;
detect a changed condition (1620) for the first route that is associated with a computing device, wherein the changed condition (1620) includes at least a determination that a current location and/or a speed of the computing device differs from an expected location and/or speed for the computing device;
identify if the first segment (1614) is compromised by the changed condition (1620);
generate a second segment (1618) designating a second modality to replace the first segment (1614) in the first route, wherein the second segment (1618) has a different starting location and/or a different ending location than the first segment (1614) and wherein a second vehicle is associated with the second modality.

2. The system of claim 1, wherein the memory (1904) stores further instructions which, when executed by the processor (1906), cause the processor (1906) to detect that a first dock associated with rideable modality has insufficient available spaces to deposit rideable vehicles.

3. The system of claim 2, wherein the memory (1904) stores further instructions which, when executed by the processor (1906), cause the processor (1906) to present an alert on the computing device indicating that the first dock has insufficient available spaces to deposit rideable vehicles.

4. The system of claim 2, wherein the memory (1904) stores further instructions which, when executed by the processor (1906), cause the processor (1906) to:
generate a second route that replaces at least one of a first segment (1614) associated with the rideable modality and a second segment (1618) associated with the transit modality; and
display, on the computing device, an indicator of the second route.

5. The system of claim 4, wherein the second route replaces the first segment (1614) with a third segment that ends at a second dock different from the first dock.

6. The system of claim 4, wherein the second segment (1618) begins at a first transit station and wherein the second route replaces the second segment (1618) with a fourth segment that begins at a second transit station different from the first transit station.

7. The system of claim 1, wherein the rideable modality is associated with a rideable vehicle selected from the group consisting of
(i) a docked bicycle,
(ii) a dockless bicycle,
(iii) a docked scooter, and
(iv) a dockless scooter.

8. The system of claim 7, wherein the first route is associated with a first rideable vehicle, and wherein the memory (1904) stores further instructions which, when executed by the processor (1906), cause the processor (1906) to:
receive, from the computing device, a request to update the rideable modality to utilize a second rideable vehicle; and
generate a second route that utilizes the second rideable vehicle.

9. The system of claim 1, wherein the indicator of the first route includes visual indicators of the rideable modality and the transit modality including at least a depiction of a rideable vehicle corresponding to the rideable modality and a depiction of a transit vehicle corresponding to the transit modality.

10. The system of claim 1, wherein the indicators of the first route and the at least one additional route are displayed according to a ranking of corresponding disutility measures, the disutility measures being calculated at least in part to measure a total backtracking distance of the first route and the at least one additional route.

11. The system of claim 1, wherein the transit modality is associated with a transit vehicle selected from the group consisting of
(i) a train,
(ii) a bus, and
(iii) a ferry.

12. A method comprising:
determining a first route comprising at least a first segment (1614) that includes at least a first starting location of a request for transportation and a first ending location of the request for transportation and wherein a first modality is assigned as a modality of the first segment (1614) and wherein a first vehicle is associated with the first modality;
detecting a changed condition (1620) for the first route that is associated with a computing device, wherein the changed condition (1620) includes at least a determination that a current location and/or a speed of the computing device differs from an expected location and/or speed for the computing device;
identifying if the first segment (1614) is compromised by the changed condition (1620);
generating a second segment (1618) designating a second modality to replace the first segment (1614) in the first route, wherein the second segment (1618) has a different starting location and/or a different ending location than the first segment (1614) and wherein a second vehicle is associated with the second modality;
generating an updated route, wherein the updated route replaces the first segment (1614) with the second segment (1618).

13. The method of claim 12, further comprising:
detecting that a first dock associated with rideable modality has insufficient available spaces to deposit rideable vehicles; and
presenting an alert on the computing device indicating that the first dock has insufficient available spaces to deposit rideable vehicles.

14. The method of claim 13, further comprising:
generating a second route that replaces at least one of a first segment (1614) associated with the rideable modality and a second segment (1618) associated with the transit modality; and
displaying, on the computing device, an indicator of the second route.

15. The method of claim 12, wherein the rideable modality is associated with a rideable vehicle selected from the group consisting of
(i) a docked bicycle,
(ii) a dockless bicycle,
(iii) a docked scooter, and
(iv) a dockless scooter,
wherein the first route is associated with a first rideable vehicle, and wherein the method further comprises:
receiving, from the computing device, a request to update the rideable modality to utilize a second rideable vehicle; and
generating a second route that utilizes the second rideable vehicle.
